# EUROPÄISCHE PATENTSCHRIFT

(11) **EP 3 898 261 B1**
(45) Veröffentlichungstag und Bekanntmachung des Hinweises auf die Patenterteilung: **31.01.2024**
(21) Anmeldenummer: 19832632.4
(22) Anmeldetag: 18.12.2019
(51) Int. Cl.: B60B 11/10, B60B 15/26, B60B 19/00

(54) **NOTLAUFRAD**
EMERGENCY WHEEL
ROUE POUR ROULAGE À PLAT

(30) Priorität: 20.12.2018 DE 102018010081
(43) Veröffentlichungstag der Anmeldung: 27.10.2021
(73) Patentinhaber: KT Projektentwicklungs-GmbH, 74076 Heilbronn (DE)
(72) Erfinder: TSIBERIDIS, Konstantinos, 74199 Untergruppenbach (DE)
(74) Vertreter: Beyer, Andreas
(86) Internationale Anmeldenummer: PCT/EP2019/085891
(87) Internationale Veröffentlichungsnummer: WO 2020/127447

(56) Entgegenhaltungen:
- EP-A1- 0 606 946
- EP-A1- 2 048 003
- EP-B1- 2 048 003
- WO-A1-2019/072775
- WO-A1-2019/141817
- WO-A2-2018/167040
- DE-A1-102017 103 101
- DE-A1-102017 105 302
- US-A- 1 593 129
- US-A- 2 212 076
- US-A- 2 494 850
- US-A- 2 912 035
- US-A- 3 112 784

## Beschreibung

Die vorliegende Erfindung betrifft einen Aufsatz für ein Fahrzeugrad zur Ermöglichung eines Fahrbetriebs bei eingeschränkter Reifenfunktion nach dem Oberbegriff des Anspruchs 1, im Folgenden wird ein derartiger Aufsatz auch als Aufsatz der eingangs beschriebenen Art bezeichnet.

Das Dokument US 1 593 129 A offenbart einen rutschfesten und traktionsfähigen Schuh und Mittel, um den Schuh im Normalzustand in einer Ruheposition relativ zu einem Fahrzeugrad zu halten, sowie Mittel zum reibschlüssigen Ineingriffbringen des Schuhs mit einem solchen Rad und zusätzliche Arretiermittel zum formschlüssigen Ineingriffbringen des Schuhs mit dem Rad.

Das Dokument US 2 212 076 A offenbart eine Anordnung aus einem gummibereiften Kraftfahrzeugrad mit einem an einem Flansch des Kraftfahrzeugrades mittels Schrauben befestigten Zahnkranz, einer vom Zahnkranz koaxial zum Kraftfahrzeugrad abragenden Hilfswelle, einer Zusatzradnabe an der Hilfswelle, Mittel zum An- und Abkoppeln der Zusatzradnabe von der Hilfswelle, von der Zusatzradnabe abstehende Speichen, Kanalstangen, die an den Speichen schwenkbar und drehbar befestigt sind, sowie an den Kanalstangen montierte Antirutschketten.

Das Dokument US 3 112 784 A beschreibt eine Antirutschvorrichtung für ein mit einem Luftreifen ausgestattetes Fahrzeugrad. Die Antirutschvorrichtung umfasst ein Stützmittel, Mittel zum Verbinden des Stützmittels mit dem Fahrzeugrad, eine Vielzahl von Stützzungen, Führungsmittel für jede der Zungen sowie einen bodenberührenden bogenförmigen Schuh, der am Ende jeder Zunge angebracht ist.

Aus dem Dokument US 2 494 850 A ist eine Antirutschvorrichtung bekannt, die mehrere einzelne Antirutsch-Einheiten enthält, von denen jede unabhängig und lösbar an der Außenseite eines Kraftfahrzeugrads angebracht ist, das mit einem herkömmlichen Luftreifen ausgestattet ist.

Das Dokument WO 2018/167040 A2 beschreibt einen Aufsatz für ein Fahrzeugrad zur Ermöglichung eines Fahrbetriebs bei plattem Reifen mit einem Grundkörper, der einer Montageabschnitt und einen Laufflächenabschnitt umfasst, wobei der Montageabschnitt im Montagezustand in umfänglicher Richtung geschlossen ausgebildet ist.

Mit einem Fahrzeugrad ist vorliegend ein Fahrzeugrad eines Kraftfahrzeugs gemeint. Unter einem Fahrbetrieb bei eingeschränkter Reifenfunktion ist dabei vorliegend ein Fahrbetrieb gemeint, bei dem der Reifen nicht mit seinen bei üblichen Straßenverhältnissen und üblichem Reifenzustand gegebenen Eigenschaften betreibbar ist. Damit kann beispielsweise eine Fahrt mit plattem Reifen gemeint sein oder auch der Betrieb des Fahrzeugs bei Eis- oder Schneeglätte.

Bevorzugtes Einsatzgebiet der vorliegenden Erfindung ist die Ermöglichung einer Fahrt mit plattem Reifen.

Bei am Fahrzeugrad angebrachtem Aufsatz ist mit axialer Richtung vorliegend die Richtung der Drehachse des Fahrzeugrades gemeint. Mit der radialen Richtung ist die orthogonale Richtung zu dieser Drehachse des Fahrzeugrades gemeint. Der Reifen des Fahrzeugrades ist also von der Felge des Fahrzeugrades aus gesehen radial außenliegend angeordnet. Radial innenliegend ist beispielsweise ein Lochkreis der Felge mit einer Mittenöffnung des Fahrzeugrades, wobei vorliegend mit dem Lochkreis des Fahrzeugrades die Anordnung der Löcher in der Felge, die zur Aufnahme von Radschrauben bzw. Stehbolzen vorgesehen sind, samt Mittenöffnung gemeint ist.

Mit Umfangsrichtung ist die Richtung entlang des Umfangs des Fahrzeugrades, also entlang seiner Reifenlauffläche, gemeint.

### Erfindungsgemäßer Aspekt 1 - verschleißarme Lauffläche (Schlupfausgleich)

Aufgabe eines ersten erfindungsgemäßen Aspekts ist es, einen Aufsatz für ein Fahrzeugrad bereitzustellen, der verschleißarm eingesetzt werden kann und einen hohen Fahrkomfort aufweist.

Diese Aufgabe wird durch einen Aufsatz gemäß Anspruch 1 gelöst. Der erfindungsgemäße Aufsatz ist also ein Aufsatz für ein Fahrzeugrad, das eine Felge und einen auf der Felge angeordneten Reifen umfasst. Der Aufsatz ist dabei ausgebildet, um in einem Betriebszustand einen Fahrbetrieb bei eingeschränkter Reifenfunktion zu ermöglichen. Mit dem Betriebszustand ist dabei ein Zustand gemeint, bei dem der Aufsatz am Fahrzeugrad befestigt ist und einen Fahrbetrieb ermöglicht, indem er die Funktion des evtl. platten Reifens unterstützt bzw. übernimmt.

Der Aufsatz weist einen Stationärabschnitt auf. Dieser Stationärabschnitt ist im Betriebszustand, also wenn der Aufsatz fest am Fahrzeugrad befestigt ist und zur Unterstützung des Fahrbetriebs des Fahrzeugs dient, gegenüber der Felge unbeweglich befestigt. Mit anderen Worten, der Stationärabschnitt ist derart ausgebildet, dass er am Fahrzeugrad derart befestigbar ist, dass er im Betriebszustand gegenüber der Felge unbeweglich befestigt ist. Der Stationärabschnitt bewegt sich also weder in umfänglicher Richtung noch in axialer oder radialer Richtung gegenüber der Felge, sondern ist fest und in einer fixen Relativposition zu dieser angeordnet.

Der Aufsatz weist weiter einen Laufflächenabschnitt mit einer Lauffläche auf. Die Lauffläche ist zur Kontaktierung der Fahrbahn angeordnet und ausgebildet. Die Lauffläche bildet also den Abschnitt des Aufsatzes, der die Fahrbahn im Fahrbetrieb kontaktiert. Der Stationärabschnitt kann einen Teil des Laufflächenabschnitts bilden.

Der Aufsatz weist weiterhin wenigstens zwei Spannmittel auf. Es können jedoch auch drei, vier oder mehr Spannmittel vorgesehen sein (insbesondere in Umfangsrichtung, insbesondere gleichmäßig, verteilt an dem Aufsatz angeordnet). Die Spannmittel sind ausgebildet, um einen Abschnitt der Felge zu hintergreifen. Durch dieses Hintergreifen wird die Befestigung des Aufsatzes am Fahrzeugrad realisiert. Zusätzliche Mittel zur Befestigung sind denkbar. Die Spannmittel (bzw. der Aufsatz) sind jedoch insbesondere derart ausgebildet, dass durch ihren Hintergriff mit der Felge die Befestigung des Aufsatzes erfolgt. Insbesondere kann der Hintergriff zur Befestigung ausreichen. Insbesondere können die Spannmittel den alleinigen (einzigen) Befestigungsmechanismus des Aufsatzes bilden. Insbesondere kann es vorgesehen sein, dass die Spannmittel das Felgenhorn der Felge hintergreifen. Damit ist eine form- und kraftschlüssige Befestigung des Aufsatzes an der Felge gewährleistet. Die Spannmittel können in einem Schnitt durch eine in radialer Richtung und axialer Richtung erstreckten Schnittebene (orthogonal zur Umfangsrichtung) einen in axialer Richtung abragenden und nach radial innen verlaufenden hakenartig ausgebildeten Hintergriffabschnitt zum formschlüssigen Hintergreifen des Felgenhorns umfasst. Der Hintergriffabschnitt kann derart ausgebildet sein, dass das Spannmittel, wenn es insbesondere translatorisch radial einwärts in den Hintergriff mit dem Felgenhorn bewegt wird, sich in axialer Richtung zum Felgenhorn hin drängt.

Der Aufsatz kann, wie auch weiter unten noch beschrieben, eine Anlagefläche bzw. einen Anlageabschnitt umfassen, die ausgebildet und angeordnet ist, um das Felgenhorn von axial außen zu kontaktieren und eine genau definierte Position des Aufsatzes gegenüber dem Felgenhorn im Betriebszustand sicherzustellen.

Die Anlageabschnitte können jeweils ein Teil (einstückig mit dem Spannmittel ausgebildet) des jeweiligen Spannmittels sein. Sie können auch separat von den Spannmitteln am Aufsatz angebracht sein. Wenn die Anlageabschnitte an den jeweiligen Spannmittel selbst ausgebildet sind, kann der Hintergriffabschnitt in den Anlageabschnitt übergehen, wobei im Bereich des Übergangs zwischen dem Hintergriffabschnitt und dem Anlageabschnitt eine in axialer Richtung verlaufende Einbuchtung (axial zurückversetzter Abschnitt) auf Seiten und oberhalb des Anlageabschnitts vorgesehen sein kann.

Erfindungsgemäß ist vorgesehen, dass die Lauffläche wenigstens ein Laufflächensegment umfasst, das im Betriebszustand gegenüber dem Stationärabschnitt in Umfangsrichtung beweglich angeordnet ist. Mit dem Laufflächensegment kann dabei die Gesamtheit der Lauffläche, also ein ringförmiges Element (Laufflächenkörper) gemeint sein, das gegenüber dem Stationärabschnitt sich in Umfangsrichtung bewegen kann. Es kann mit dem Laufflächensegment jedoch auch ein im weitesten Sinne kreisbogenartiger Teil (Ausschnitt) der Lauffläche bzw. des die Lauffläche bildenden Körpers gemeint sein, der (im Betriebszustand) in Umfangsrichtung beweglich gegenüber dem Stationärabschnitt ausgebildet ist. Vorzugsweise sind mehrere derartige bewegliche Laufflächensegmente um den Umfang herum verteilt angeordnet. Denkbar ist, dass die Laufflächensegmente ihre Beweglichkeit in Umfangsrichtung durch eine Neigung erhalten, dass sie sich also in Umfangsrichtung neigen können. Mit anderen Worten bei dieser Variante sind die Laufflächensegmente in Umfangsrichtung neigbar und die Bewegung der Laufflächensegmente erfolgt durch diese Neigung, wobei ein radial innenliegender Abschnitt der Laufflächensegmente gegenüber dem Stationärabschnitt unbeweglich ist. In einer weiteren Ausführungsform bewegen sich die Segmente jedoch translatorisch in Umfangsrichtung bzw. sind translatorisch beweglich in Umfangsrichtung. Bei dieser Variante ist also nicht lediglich ein oberer Abschnitt des Laufflächensegments gegenüber dem Stationärabschnitt beweglich und ein unterer Abschnitt mit diesem unbeweglich verbunden, sondern das gesamte bewegliche Laufflächensegment kann in Umfangsrichtung gegenüber dem Stationärabschnitt verschoben werden. Mit anderen Worten der einen Teil der Lauffläche bildende Bereich des Laufflächensegments bewegt sich bei einer Bewegung des Laufflächensegments gegenüber dem Stationärabschnitt genauso (bzw. mit der gleichen Winkelgeschwindigkeit) wie ein radial einwärts von der Lauffläche angeordneter Bereich des Laufflächensegments.

Der Laufflächenkörper kann mittels einer Spielpassung in einer Aufnahme des Stationärabschnitts in Umfangsrichtung beweglich gelagert sein. Der Laufflächenkörper kann mittels eines formschlüssigen Hintergriffs (des Laufflächenkörper oder eines fest mit diesem verbundenen Elements) mit dem Stationärabschnitt in radialer Richtung formschlüssig gehalten sein.

Es kann vorgesehen sein, dass der Stationärabschnitt einen Ringabschnitt umfasst, also einen im Betriebszustand in Umfangsrichtung geschlossenen Abschnitt (Dieser Ringabschnitt kann mehrteilig ausgebildet sein und lediglich im Betriebszustand in seine umfänglich geschlossene Konfiguration überführt werden). Der Aufsatz kann mehrere, in Umfangsrichtung verteilt auf dem Ringabschnitt angeordnete Laufflächensegmente umfassen, die jeweils gegenüber dem Stationärabschnitt in Umfangsrichtung translatorisch bewegbar angeordnet sind. Vorzugsweise sind die Laufflächensegmente unabhängig voneinander translatorisch gegenüber dem Stationärabschnitt beweglich. Statt den einzelnen beweglichen Laufflächensegmenten kann es vorgesehen sein, dass der Laufflächenabschnitt derart ausgebildet ist, dass die gesamte Lauffläche gegenüber dem Ringabschnitt des Stationärabschnitts um die Achse einer Richtung rotierbar angeordnet und ausgebildet ist. Der Laufflächenabschnitt kann sich in dieser Ausführungsform also jedenfalls bis zu einem bestimmten Winkel gegenüber dem Ringabschnitt des Stationärabschnitts rotiert werden. Es kann auch vorgesehen sein, dass die gesamte Lauffläche ohne eine Begrenzung des Rotationswinkels gegenüber dem Ringabschnitt rotierbar ist. Sie kann also stets weiter rotiert werden. Es kann auch vorgesehen sein, dass die Lauffläche sich lediglich in einer Richtung gegenüber dem Ringabschnitt rotieren lässt.

Die einzelnen beweglichen Laufflächensegmente können in Umfangsrichtung federnd gelagert an dem Stationärabschnitt (insbesondere Ringabschnitt) angeordnet sein. Die federnde Lagerung kann über elastische Elemente ausgebildet sein. Diese elastischen Elemente können zwischen den einzelnen Laufflächensegmenten angeordnet sein und/oder die federnde Lagerung kann über federnde Elemente ausgebildet sein, die die Laufflächensegmente gegenüber dem Stationärabschnitt (insbesondere Ringabschnitt) beweglich verspannen.

Beispielsweise ist es möglich, dass einzelne Kunststoffelemente mittels Federn oder anderer elastischer oder federnder Elemente gegenüber entsprechenden Anlageabschnitten am Stationärabschnitt (insbesondere Ringabschnitt) federnd gelagert angeordnet sind. Es ist ebenso möglich, dass elastische Elemente, beispielsweise aus elastischem Kunststoff, zwischen einzelnen Laufflächensegmenten angeordnet sind und hierdurch eine federnde Lagerung realisiert ist.

Wie bereits weiter oben ausgeführt ist es möglich, dass der Stationärabschnitt mehrteilig aufgebaut ist. Es ist insbesondere denkbar, dass der Ringabschnitt des Laufflächenabschnitts, insbesondere gesamte Laufflächenabschnitt, in Umfangsrichtung gesehen, wenigstens zwei Segmente aufweist. Die beiden Segmente können voneinander lösbar und/oder gegeneinander verschwenkbar oder verschiebbar sein. Mit anderen Worten, der Aufsatz kann eine umfänglich teilbare Lauffläche aufweisen. Hierdurch kann der Laufflächenabschnitt zum einen vorteilhaft im Fahrzeug gelagert werden, zum anderen kann sich hierdurch die Montage des Laufflächenabschnitts bzw. des gesamten Aufsatzes vereinfachen.

Es kann vorgesehen sein, dass der die Lauffläche tragende Laufflächenkörper nicht direkt mit dem Ringabschnitt des Stationärabschnitts gekoppelt ist. Zur Lagerung des Laufflächenkörpers kann der Aufsatz ein Gleitelement aufweisen, welches zum einen mit dem Laufflächenkörper unbeweglich verbunden ist und zum anderen gegenüber dem Ringabschnitt in Umfangsrichtung beweglich ist, jedoch in radialer Richtung formschlüssig (bspw. in einer Doppelnut) gehalten sein kann.

Wie oben bereits erwähnt, so ist es möglich, dass der Stationärabschnitt Teil des Laufflächenabschnitts ist. Der Laufflächenabschnitt kann also den gegenüber der Felge unbeweglichen Stationärabschnitt und das gegenüber dem Stationärabschnitt bewegliche Segment der Lauffläche umfassen. Die Lauffläche kann beispielsweise mittels eines Kunststoffelements gebildet sein. Denkbar ist auch, dass die Lauffläche bzw. der die Lauffläche aufweisende Laufflächenkörper einzelne Kunststoffsegmente oder ein insgesamt ringförmiges Kunststoffsegment aufweist, die oder das in einer metallischen Aufnahme gehalten ist oder jeweils gehalten sind und die Aufnahme über eine Lagerung eine Verschiebung gegenüber dem Stationärabschnitt ermöglicht. Der Laufflächenkörper kann bspw. gegenüber dem Stationärabschnitt über eine Kugellager-, Gleitlager- oder andere Lagereinrichtung beweglich gelagert angeordnet sein.

Um das Anbringen des Aufsatzes einfach zu gestalten, kann der Aufsatz einen Montageabschnitt umfassen. Der Aufsatz kann dabei derart ausgebildet sein, dass beim Befestigen des Aufsatzes am Fahrzeugrad bzw. der Felge des Fahrzeugrades zunächst der Montageabschnitt in der von dem Betriebszustand vorgesehenen Position befestigt wird. Daran anschließend kann der Laufflächenabschnitt, der die Lauffläche umfasst, befestigt werden. Der Aufsatz kann derart ausgebildet sein, dass der Montageabschnitt im Betriebszustand (bzw. in der für den Betriebszustand vorgesehenen Befestigungskonfiguration) radial innen liegend von der Lauffläche angeordnet ist. Mit dem Befestigen des Laufflächenabschnitts an dem Montageabschnitt ist gemeint, dass dieser in der für den Betrieb vorgesehenen Position an diesem befestigt wird. Er kann bereits bei der Befestigung des Montageabschnitts mit diesem verbunden sein. Denkbar ist auch, dass der Laufflächenabschnitt oder Teile des Laufflächenabschnitts von dem Montageabschnitt lösbar ausgebildet sind. Der Aufsatz kann derart ausgebildet sein, dass der Montageabschnitt in der für den Betrieb vorgesehenen Konfiguration mit dem Laufflächenabschnitt verbunden bleibt. Ist der Montageabschnitt abnehmbar so wird er im Zusammenhang der vorliegenden Anmeldung auch als (abnehmbare) Verspanneinheit bezeichnet.

Die Spannmittel können an dem Montageabschnitt angeordnet sein.

Bei der Variante des Aufsatzes mit Montageabschnitt kann der Stationärabschnitt im Betriebszustand gegenüber dem Montageabschnitt unbeweglich sein.

Denkbar ist auch, dass die Spannmittel bzw. wenigstens einige der Spannmittel an dem Laufflächenabschnitt angeordnet sind. Der Aufsatz kann hierdurch bspw. ohne Montageabschnitt ausgebildet sein. Bspw. kann das der Fall sein, wenn der Laufflächenabschnitt in Umfangsrichtung durchgängig aufgebaut ist und die Lauffläche ein herausnehmbares umfängliches Segment (abnehmbaren Teil) umfasst.

### Erfindungsgemäßer Aspekt 2 - abnehmbare Verspanneinheit

Ein zweiter erfindungsgemäßer Aspekt betrifft eine Verspanneinheit. Die Montage eines Gattungsbildenden Aufsatzes (Oberbegriff Anspruch 1), insbesondere eines der bisher und nachfolgend beschriebenen Aufsätze (Aspekt 1 und 3 sowie ff.), kann mittels einer Verspanneinheit erfolgen.

Die Spannmittel können beispielsweise an dem Laufflächenabschnitt oder dem Stationärabschnitt angeordnet sein (dieser kann Teil des Laufflächenabschnitts sein). Der Aufsatz kann eine Verspanneinheit umfassen, die ausgebildet ist, um die Spannmittel (die an dem Stationärabschnitt angeordnet sein können) in Hintergriff mit dem Abschnitt bzw. dem Felgenhorn der Felge zu bringen. Der Aufsatz kann entsprechend derart ausgebildet sein, dass die Verspanneinheit in der für den Betrieb vorgesehenen Konfiguration (Betriebszustand) von dem Laufflächenabschnitt bzw. Stationärabschnitt lösbar sein bzw. im Betriebszustand von dem Stationärabschnitt bzw. Laufflächenabschnitt abgelöst ist (und entsprechend nicht mehr am Fahrzeugrad angebracht ist).

Die Verspanneinheit dient also lediglich zur Montage des Stationärabschnitts/Laufflächenabschnitt und wird anschließend entfernt. Beim Entfernen der Verspanneinheit ist jedoch vorgesehen, dass die Spannmittel in ihrer Hintergriffstellung mit dem Felgenhorn bzw. der Felge verbleiben. Die Verspanneinheit ist also von dem Stationärabschnitt/Laufflächenabschnitt lösbar, ohne die Spannmittel aus ihrer Hintergriffstellung zu lösen. Entsprechend ist die Verspanneinheit auch im Betriebszustand von dem Aufsatz entfernbar, ohne die Spannmittel aus ihrer Hintergriffstellung zu lösen. Damit kann der Aufsatz beispielsweise sehr leichtgewichtig ausgeführt werden. Es kann vorgesehen sein, dass lediglich der Laufflächenabschnitt (ggf. Stationärabschnitt umfassend) vorgesehen sein muss und die Spannmittel über die Verspanneinheit in Hintergriffstellung gebracht werden können, um eine zuverlässige Befestigung zu erreichen. Nach abgeschlossener Montage kann die Verspanneinheit abgenommen werden und lediglich der Laufflächenabschnitt mit Lauffläche und ggf. Stationärabschnitt verbleiben am Fahrzeugrad. Hierzu kann der Laufflächenabschnitt (ggf. Stationärabschnitt) weitestgehend kreisringförmig ausgebildet sein und insbesondere derart ausgebildet sein, dass im Betriebszustand der innere Bereich der Felge vom Laufflächenabschnitt/Stationärabschnitt nicht überdeckt wird, sondern dieser sich lediglich im Randbereich bzw. im Bereich des Felgenhorns befindet. Insbesondere können die inneren 50% des Durchmessers der Felge vom Laufflächenabschnitt/Stationärabschnitt unbedeckt verbleiben. Der Aufsatz kann derart ausgebildet sein, dass die inneren 50%, insbesondere 60%, des Durchmessers der Felge im Betriebszustand aus axialer Richtung gesehen von dem Aufsatz unbedeckt sind.

Die Verspanneinheit kann insbesondere derart ausgebildet sein, dass sie mehrere Kraftübertragungsmittel jeweils zur Kopplung mit einem der Spannmittel umfasst. Vorzugsweise sind die Kraftübertragungsmittel ausgebildet, um bei Betätigung der Verspanneinheit die Spannmittel in Hintergriff mit dem Felgenhorn zu bewegen. Bspw. (insbesondere translatorisch) radial einwärts zu bewegen.

Die Kraftübertragungsmittel können einen biegeschlaffen, bspw. einen seilartigen, Abschnitt umfassen.

Alternativ oder zusätzlich können die Kraftübertragungsmittel in radialer Richtung verkürzbar sein. Die Kraftübertragungsmittel können dabei biegesteif ausgebildet sein.

Die Kraftübertragungsmittel können derart mit den Spannmitteln koppelbar sein, dass diese durch eine Verkürzung der radialen Erstreckung der Kraftübertragungsmittel in die Hintergriffstellung mit der Felge überführbar sind.

Die Kraftübertragungsmittel können über einen formschlüssigen Hintergriff lösbar mit den Spannmitteln gekoppelt, vorzugsweise lösbar formschlüssig mit den Spannmitteln verhakt sein.

Die Kraftübertragungsmittel können einen Hakenabschnitt umfassen, der angeordnet und ausgebildet ist, um einen entsprechenden Einhakabschnitt an den Spannmitteln von radial außen her hakend zu hintergreifen.

Die Verspanneinheit kann insbesondere ausgebildet sein, um mehrere Spannmittel zeitgleich zu Bewegen. Die Verspanneinheit kann insbesondere eine zentrale Betätigungseinrichtung (bspw. Werkzeugansatzstelle) umfassen mit der die Bewegung der Spannmittel ausgelöst wird bzw. bewirkt wird.

Die Verspanneinheit kann ein Getriebe zur Umwandlung einer, insbesondere um die axiale Richtung, rotierenden Antriebsbewegung eines Betätigungselements, vorzugsweise eines manuellen Werkzeugs, oder eines Motors, in eine Bewegung oder Verkürzung der Kraftübertragungsmittel aufweisen. Das Getriebe kann insbesondere ein Antriebskegelrad und ein Abtriebskegelrad umfassen. Insbesondere kann vorgesehen sein, dass je Kraftübertragungsmittel ein Abtriebskegelrad vorgesehen ist. Den Kraftübertragungsmitteln kann also je ein Abtriebskegelrad zugeordnet sein, wobei die Kraftübertragungsmittel über ein Kopplungsmittel mit dem Abtriebskegelrad gekoppelt sind. Ein entsprechendes Kopplungsmittel kann beispielsweise eine Gewindestange sein, die in ein Gewinde an dem jeweiligen Kraftübertragungsmittel eingreift.

### Erfindungsgemäßer Aspekt 3 - Wärmeleitelemente

Ein dritter erfindungsgemäßer Aspekt betrifft die Aufgabe, einen Aufsatz mit verbesserter Verschleißbeständigkeit des Laufbelags bereitzustellen. Diese Aufgabe wird durch das Vorsehen von Wärmeleitelementen gelöst, die insbesondere als (bspw. streifenförmige) Wärmeleitbleche ausgebildet sein können. Die Wärmeleitbleche können insbesondere aus Kupfer, Aluminium oder Magnesium hergestellt sein oder einen oder mehrere dieser Werkstoffe umfassen.

Die Wärmeleitelemente sind vorteilhafterweise in den die Lauffläche tragendenden Laufflächenkörper eingebettet. Denkbar ist beispielsweise, dass der Laufflächenkörper aus Kunststoff gefertigt ist und die Wärmeleitelemente in den Laufflächenkörper eingeformt bzw. beispielsweise eingegossen sind. Der Laufflächenkörper kann also durch ein Kunststoffgießverfahren, beispielsweise Spritzgießen, an die Wärmeleitelemente angeformt sein.

Die Wärmeleitelemente sind allgemein vorzugsweise stoffschlüssig mit dem Laufflächenkörper verbunden. Die Wärmeleitelemente können sich aus dem Laufflächenkörper heraus erstrecken. Es kann vorgesehen sein, dass sich die Wärmeleitelemente von dem Laufflächenkörper oder den jeweiligen Laufflächensegmenten aus nach radial einwärts erstrecken und sich insbesondere über einen evtl. vorgesehenen Stationärabschnitt hinaus weiter nach radial einwärts erstrecken.

Die Wärmeleitelemente können einstückig mit einem metallischen Grundkörper des Laufflächenabschnitts ausgebildet sein und sich in den Laufflächenkörper hinein erstrecken. Mit anderen Worten, der Laufflächenkörper kann bspw derart an einen Teil des metallischen Grundkörpers des Laufflächenabschnitts angeformt (bspw. angegossen) sein, dass der umformte (bspw. umgossene) Teil durch Material des Laufflächenkörper umschlossen ist.

Die Wärmeleitelemente haben eine höhere Wärmeleitfähigkeit als das Material der Laufflächenkörpers, insbesondere eine höhere Wärmeleitfähigkeit als das Material des Laufflächenabschnitts bzw. Stationärabschnitts (ggf. Ringabschnitt).

Es kann allgemein vorgesehen sein, dass der Laufflächenabschnitt (ggf. Stationärabschnitt bzw. Ringabschnitt) zwei Elemente umfasst, die in axialer Richtung gegeneinander verspannt sind. Sind Wärmeleitelemente vorgesehen, so können diese zwischen den beiden Elementen angeordnet sein. Insbesondere können die Wärmeleitelemente zwischen den beiden Elementen des Laufflächenabschnitts (ggf. Stationärabschnitt bzw. Ringabschnitt) verspannt sein. Die beiden Elemente des Laufflächenabschnitts können beispielsweise durch den Ringabschnitt gebildet sein, der in axialer Richtung zweiteilig ausgeführt sein kann. Insbesondere können die Wärmeleitelemente radial einwärts über die ringförmigen Elemente hinausragen.

Alternativ oder zusätzlich zu den hier beschriebenen Wärmeleitelementen kann es vorgesehen sein, dass der Laufflächenkörper ein Kunststoffmaterial umfasst, in welches wärmeleitungsverbessernde, insbesondere metallische, Partikel eingearbeitet sind. Die wärmeleitungsverbessernden Partikel können beispielsweise in das Kunststoffmaterial beim Giess- oder Spritzprozess eingemischt sein. Vorzugsweise sind die wärmeleitungsverbessernden Partikel länglich erstreckt, beispielsweise faserförmig, sind. Denkbar ist beispielsweise, dass die wärmeleitungsverbessernden Partikel in Form von Carbonfasern vorgesehen sind.

Allgemein ist die vorliegende Beschreibung dahingehend zu verstehen, dass die weiteren Merkmale der verschiedenen erfindungsgemäßen Aspekte als untereinander bzw. miteinander kombiniert beschrieben zu verstehen sind. Damit ist gemeint, dass beispielsweise die eben beschriebenen Wärmeleitelemente mit den beweglichen Segmenten der Lauffläche und/oder mit der abnehmbaren Verspanneinheit kombinierbar sind und sowohl als selbständig als auch mit diesen in Kombination als beschrieben zu sehen sind.

### Erfindungsgemäßer Aspekt 4 - Verspannvorrichtung zur Bewegung der Spannmittel als auch des Laufflächenabschnitts

Aufgabe eines vierten erfindungsgemäßen Aspekts ist es, einen Aufsatz für ein Fahrzeugrad bereitzustellen, der sich möglichst einfach montieren lässt. Diese Aufgabe wird bei einem Aufsatz der eingangs beschriebenen Art dadurch gelöst, dass der Aufsatz eine Verspannvorrichtung umfasst, die ausgebildet ist, um zum einen die Spannmittel in die Hintergriffstellung mit der Felge zu bringen und zum anderen eine Bewegung des Laufflächenabschnitts in axialer Richtung zur Felge hin zu bewirken.

Die Verspannvorrichtung kann derart ausgebildet, dass die Bewegung des Laufflächenabschnitts zeitversetzt zur Überführung der Spannmittel in die Hintergriffstellung erfolgt. Insbesondere kann vorgesehen sein, dass zunächst die Überführung der Spannmittel in die Hintergriffstellung beginnt und der Beginn der Bewegung des Laufflächenabschnitts später erfolgt.

Die Verspannvorrichtung kann auch derart ausgebildet sein, dass die Bewegung des Laufflächenabschnitts zeitgleich mit der Überführung der Spannmittel in die Hintergriffstellung beginnt.

Die Verspannvorrichtung kann beispielsweise derart ausgeführt sein, dass zunächst die Spannmittel in die Hintergriffstellung bewegt werden, dies kann beispielsweise über eine nach radial innen gerichtete Bewegung der Spannmittel erfolgen. Daran anschließend bewegt die Verspannvorrichtung den Laufflächenabschnitt in axialer Richtung zur Felge hin in die für den Betriebszustand vorgesehene Position.

Gemäß dem vorliegenden erfindungsgemäßen Aspekt umfasst der Aufsatz also eine Einrichtung, die Verspannvorrichtung, die sowohl die Spannmittel in die Hintergriffstellung mit der Felge bewegt, als auch den Laufflächenabschnitt in die vorgesehene Position an der Felge überführt. Die Verspannvorrichtung weist zur Betätigung, die beide Bewegungen auslöst, eine Betätigungseinrichtung (Werkzeugansatzstelle, bspw. zur Einleitung einer Kraft bzw. eines Drehmoments, oder eine Schalteinrichtung, über die bspw. ein Motor der Verspannvorrichtung betätigbar ist.) auf.

Der Laufflächenabschnitt kann von der Verspannvorrichtung abnehmbar ausgebildet sein. Zweckmäßigerweise wird der Laufflächenabschnitt über die Verspannvorrichtung in axialer Richtung zur Felge hinbewegt, um ihn in die für den Betriebszustand vorgesehene Position zu überführen.

Die Verspannvorrichtung kann eine Werkzeugansatzstelle umfassen. Über diese Werkzeugansatzstelle kann eine Kraft zur Bewirkung der Überführung der Spannmittel in die Hintergriffstellung und zur Bewirkung der Bewegung des Laufflächenabschnitts in die Verspannvorrichtung einleitbar sein. Die Verspannvorrichtung kann auch alternativ oder zusätzlich einen Antrieb umfassen, der die Kraft zur Bewirkung der Überführung der Spannmittel in die Hintergriffstellung der Bewegung des Laufflächenabschnitts bereitstellt. Dieser Antrieb kann beispielsweise elektromechanischer Art sein. Beispielsweise kann der Aufsatz hierfür eine eigene Energiequelle, wie beispielsweise einen Akkumulator oder eine Batterie, umfassen. Denkbar ist auch, dass die Energie auf nicht elektrische Art und Weise gespeichert ist, beispielsweise in Form eines unter Druck stehenden Mediums, welches durch Entspannung die Energie für die entsprechende Bewegung bereitstellt.

Es kann vorgesehen sein, dass die Spannmittel beim Überführen in die Hintergriffstellung (insbesondere rein translatorisch gegenüber der Verspannvorrichtung) radial einwärts bewegt werden (dabei können die Spannmittel den gesamten Aufsatz in axialer Richtung zur Felge hin "ziehen").

Die Verspannvorrichtung kann ein Getriebe zur Umwandlung einer, insbesondere um die axiale Richtung, rotierenden Antriebsbewegung eines Betätigungselements, vorzugsweise eines manuellen Werkzeugs, oder eines Motors, in die Bewegung der Spannmittel bzw. die Bewegung des Laufflächenabschnitts aufweisen. Das Getriebe kann insbesondere ein Antriebskegelrad und ein Abtriebskegelrad umfassen. Insbesondere kann vorgesehen sein, dass je Spannmittel ein Abtriebskegelrad vorgesehen ist. Den Spannmitteln kann also je ein Abtriebskegelrad zugeordnet sein, wobei die Spannmittel je über ein Kopplungsmittel mit dem Abtriebskegelrad gekoppelt sind.

Ein entsprechendes Kopplungsmittel kann beispielsweise eine Gewindestange sein, die in ein Gewinde an dem jeweiligen Spannmittel eingreift. Antriebs- und Abtriebskegelrad bilden also gemeinsam mit den Kopplungsmitteln ein Getriebe und die Kopplung der Spannmittel mit dem Getriebe erfolgt über die Gewindestange, welche wiederum mittels eines Gewindes das Spannmittel nach radial innen ziehen kann. Es kann ein zentrales Antriebskegelrad vorgesehen sein, und mehrere Abtriebskegelräder, vorzugsweise je Spannmittel ein Abtriebskegelrad. Die Bewegung des Antriebskegelrads kann mittels des Getriebes in eine entsprechende Bewegung, die das Spannmittel bewegt, umgewandelt werden. Das Kopplungsmittel ist dabei Teil des Getriebes. Das Getriebe wandelt die Rotationsbewegung des Antriebskegelrads in eine anders gerichtete Rotationsbewegung um und durch die Verbindung des Kopplungsmittels mit dem Spannmittel (beispielsweise Gewindestange, die die Rotationsbewegung über einen Eingriff in das Gewinde am Spannmittel in eine translatorische Bewegung umwandelt) in die entsprechende translatorische Bewegung des Spannmittels.

Die Verspannvorrichtung, insbesondere das Getriebe, kann eine Anzugskraftbegrenzungseinrichtung aufweisen, welche die Kraft, mit der die Spannmittel bewegt werden, begrenzt.

Beispielsweise kann eine derartige Anzugskraftbegrenzungseinrichtung durch eine Drehmomentbegrenzungseinrichtung, die in das oben genannte Kopplungsmitteln (bspw. Gewindestange) integriert ist, ausgebildet sein.

Mit anderen Worten, zentral kann an dem Aufsatz ein Antriebskegelrad angeordnet sein. Dieses Antriebskegelrad kann beispielsweise über einen elektrischen Antrieb oder über ein Werkzeug um die axiale Richtung rotierbar ausgebildet sein. An dem Antriebskegelrad können mehrere Abtriebskegelräder angreifen. Insbesondere kann es vorteilhaft sein, wenn je Spannmittel ein Abtriebskegelrad vorgesehen ist. Von dem Abtriebskegelrad kann sich ein Kopplungsmittel, das insbesondere eine Gewindestange sein kann, zu den jeweiligen Spannmitteln erstrecken. Die Kombination aus Antriebs- und Abtriebskegelrad wandelt die rotatorische Bewegung des Antriebskegelrads in eine Rotationsbewegung des Abtriebskegelrads in anderer Richtung (bspw. um die radiale Richtung) um. Entsprechend kann die Rotationsbewegung des Abtriebskegelrads auf das Kopplungsmittel, insbesondere die Gewindestange, übertragen werden. Die Gewindestange kann beispielsweise über ein Gewinde in die Spannmittel eingreifen und damit die Rotationsbewegung der Kopplungsmittel in die (jedenfalls auch) translatorische Bewegung der Spannmittel wandeln.

Das Kopplungsmittel bzw. die Gewindestange kann eine Drehmomentbegrenzung umfassen, so dass nur bis zu einem gewissen Widerstand das Drehmoment durch das Kopplungsmittel bzw. die Gewindestange übertragen wird (Anzugskraftbegrenzungseinrichtung) .

Das Getriebe kann die Antriebsbewegung auch in eine Bewegung des Laufflächenabschnitts wandeln. Bspw. kann der Laufflächenabschnitt zunächst in axialer Richtung beabstandet zu der Verspannvorrichtung angeordnet sein.

Zur Bewirkung der Bewegung des Laufflächenabschnitts kann vorgesehen sein, dass der Aufsatz ein weiteres Kopplungsmittel umfasst, das mit dem Kopplungsmittel zur Bewegung des Spannmittels bzw. den Kopplungsmitteln zur Bewegung der Spannmittel bspw. gekoppelt ist. Bspw. können beide Kopplungsmittel über eine Verzahnung (bspw. Zahnradabschnitte) verbunden sein. Es kann vorgesehen sein, dass das weitere Kopplungsmittel mit einem Gewindeabschnitt verbunden ist, der über eine Bewegung des weiteren Kopplungsmittels in Rotation versetzt wird und in ein Gegengewinde am Laufflächenabschnitt eingreift. Durch die Bewegung des Gewindeabschnitts bzw. dessen Eingriff in das Gegengewinde kann der Laufflächenabschnitt bspw. in axialer Richtung bewegbar sein.

Die Verspannvorrichtung, insbesondere das Getriebe, kann eine Andruckkraftbegrenzungseinrichtung aufweisen, welche die Kraft begrenzt, mit welcher der Laufflächenabschnitt in axialer Richtung zur Felge hin bewegt wird. Beispielsweise kann eine derartige Andruckkraftbegrenzungseinrichtung durch eine Drehmomentbegrenzungseinrichtung, die in das oben genannte weitere Kopplungsmitteln (bspw. Gewindestange) integriert ist, ausgebildet sein.

Es ist also denkbar, das drehmomentgesteuert ein Umschalten von der Kopplung mit dem Spannmittel auf eine Kopplung mit dem Laufflächenabschnitt erfolgt, die eine Bewegung des Laufflächenabschnitts hin zur Felge, also in axialer Richtung, bewirkt (Erreicht also die Anzugskraft der Spannmittel einen bestimmten Wert, so kann mittels einer Umschalteinrichtung der Verspannvorrichtung ein Umschalten auf die Bewegung des Laufflächenabschnitts erfolgen, bspw. bis eine bestimmte Andruckkraft des Laufflächenabschnitts erreicht ist).

Über eine Drehmomentbegrenzung kann auch jeweils vorgesehen sein, dass die Bewegung der Spannmittel und/oder des Laufflächenabschnitts nur bis zu einem bestimmten Widerstand erfolgt.

### Erfindungsgemäßer Aspekt 5 - Ausfahrhilfe

Aufgabe eines fünften erfindungsgemäßen Aspekts ist es, einen Aufsatz für ein Fahrzeugrad bereitzustellen, der einen besonders sicheren Betrieb gewährleistet, insbesondere auch bei Betrieb des Aufsatzes in Gebieten, in denen Schienen in der Straße verlegt sind oder andere rillenartige Vertiefungen in der Fahrbahn gegeben sind.

Diese Aufgabe wird bei einem Aufsatz der eingangs beschriebenen Art dadurch gelöst, dass der Aufsatz eine Ausfahrhilfe umfasst, die dem Ausfahren aus einer Rille, insbesondere einem Gleis, dient. Die Ausfahrhilfe umfasst einen in axialer Richtung auskragenden Bereich der Lauffläche. Mit anderen Worten die Lauffläche weist beim Blick in radialer Richtung einen axialen Rand auf, der nicht geradlinig verläuft, sondern in axialer Richtung vorstehende Bereiche umfasst. Es kann vorgesehen sein, dass die Lauffläche eine in axialer Richtung auskragende Wellenstruktur umfasst (die Lauffläche weist beim Blick in radialer Richtung einen axialen Rand auf, der wellenförmig ausgebildet ist). Vorzugsweise sind jedenfalls mehrere auskragende Bereiche umfänglich um die Lauffläche verteilt angeordnet.

Wird das Fahrzeug mit dem am Fahrzeugrad angeordneten Aufsatz bspw. in eine Straßenbahnschiene gelenkt, so dass sich der Aufsatz in der rillenartigen Vertiefung der Schiene befindet, so kann es unter Umständen die Lenkbarkeit des Fahrzeugs beeinflussen, das der "kreisringscheibenartige" Aufsatz sich in der "Rille" befindet. Um ein Ausfahren aus der Rille zu vereinfachen kontaktieren bei einer Lenkbewegung die auskragenden Bereiche der Lauffläche (die Ausfahrhilfe) die Ränder der Rille von oben, wodurch der Aufsatz quasi "aus der Rille gehoben" werden kann. Das Fahrzeug mit angebrachtem Aufsatz ist in einfacher Art und Weise lenkbar selbst wenn der Aufsatz sich in einer rillenartigen Vertiefung in der Fahrbahn befindet.

Die auskragenden Bereiche können durch das Material der Lauffläche bzw. des Laufflächenkörpers, beispielsweise Kunststoff, gebildet sein. Denkbar ist jedoch auch, dass ein metallischer Auflageabschnitt sich unter das Material der Lauffläche/des Laufflächenkörpers (den auskragenden Kunststoff) erstreckt, um eine erhöhte Stabilität zu gewährleisten.

Eine Ausfahrhilfe kann bei sämtlichen in dieser Anmeldung beschriebenen erfindungsgemäßen Aspekten und Ausführungsformen vorgesehen sein.

### Erfindungsgemäßer Aspekt 6 - Dämpfungseinrichtung

Aufgabe eines sechsten erfindungsgemäßen Aspekts ist es, einen Aufsatz zu einem Fahrzeugrad bereitzustellen, der verschleißarm ist und einen hohen Fahrkomfort aufweist. Diese Aufgabe wird bei einem Aufsatz der eingangs beschriebenen Art dadurch gelöst, dass der Laufflächenabschnitt eine Dämpfungseinrichtung zur Dämpfung der Lauffläche in radialer Richtung umfasst. Diese Dämpfungseinrichtung kann beispielsweise einen Laufbelag/Laufflächenkörper mit in radialer Richtung variierender Steifigkeit umfassen.

Beispielsweise kann der Laufbelag/Laufflächenkörper eine Oberfläche (die die Lauffläche bildet) aufweisen, die härter ist als eine darunter liegende Schicht. Denkbar ist auch, dass die Dämpfungseinrichtung unterhalb (radial innenliegend) des Laufflächenkörpers angeordnet und separat von diesem ausgebildet ist. Bspw. kann die Dämpfungseinrichtung einen separat von dem Laufflächenkörper ausgebildeten Dämpfungskörper umfassen, bspw. der eine nachgiebige weiche Materialschicht (Bspw. ein Vollmaterial, das bei Belastung verformbar ist) umfasst. Denkbar ist auch, dass der Dämpfungskörper (oder ein radial innenliegender Abschnitt des Laufflächenkörpers) Ausnehmungen aufweist (die Ausnehmungen können die Komprimierbarkeit in radialer Richtung erhöhen). Der Dämpfungskörper kann insbesondere einen wabenartig ausgebildeten Abschnitt umfassen oder insgesamt eine wabenartige Struktur aufweisen. Der Dämpfungskörper kann aus Kunststoff gefertigt sein.

Die Dämpfungseinrichtung kann derart ausgebildet sein, dass die Dämpfung durch elastische Verformung eines vom Laufflächenkörper separaten Elements (bspw. Federelement) erfolgt.

Die Dämpfungseinrichtung kann insbesondere ein Federelement umfassen. Insbesondere kann vorgesehen sein, dass die Dämpfungseinrichtung mehrere in Umfangsrichtung verteilt angeordnete Federelemente umfasst.

Die Federelemente können jeweils als, insbesondere metallische, mechanische Federn ausgebildet sein. Die Federelemente können beispielsweise als metallische Wabenstruktur ausgebildet sein. Die Federelemente können auch als Wellen-Federelemente ausgebildet sein, die bspw. beim Blick in axialer Richtung eine Wellenstruktur aufweisen können (ein radial außenliegender Bereich wechselt mit einem radial innenliegenden Bereich ab und die radial äußeren Bereiche stützen den Laufflächenkörper nach radial außen hin. Die radial innenliegenden Bereiche können an einem metallischen Grundkörper des Laufflächenabschnitts anliegen). Denkbar ist auch, dass die einzelnen Federelemente als blattfederartige Federn ausgebildet sind. Die blattfederartigen Federn können bspw. durch mehrere U-förmige Federn ausgebildet sein, die einen mittleren Abschnitt zur Kontaktierung eines radial innen liegenden Bereichs des Aufsatzes (bspw. metallischen Grundkörper des Laufflächenabschnitts) umfassen und jeweils äußere Abschnitte, die zur Abstützung des Laufflächenkörpers in radialer Richtung vorgesehen sind. Kombinationen verschiedener Federelemente sind möglich. Die Federelemente können auch als in Umfangsrichtung erstreckt angeordnete Spiralfedern ausgebildet sein.

Die Dämpfungseinrichtung kann also ausgebildet und angeordnet sein, um eine Federwirkung durch reversibel elastische Verformung eines, insbesondere metallischen Federelements, bereitzustellen.

Ein in radialer Richtung nachgiebig gelagerter Laufbelag wirkt sich nicht nur vorteilhaft auf den Fahrkomfort aus, sondern hierdurch wird auch gewährleistet, dass der Verschleiß der Lauffläche bzw. des Laufbelags gering bleibt. Die Dämpfungseinrichtung kann derart ausgebildet sein, dass die Dämpfung basierend rein auf einer elastischen Materialverformung durch die Dämpfungseinrichtung bereitgestellt wird.

Es kann vorgesehen sein, dass der Laufflächenkörper auf einem metallischen Trägerkörper angeordnet ist. Der Trägerkörper kann ausgebildet sein, um sich während dem Abrollvorgang zu verformen. Hierzu kann insbesondere vorgesehen sein, dass der Trägerkörper dünnwandig ausgebildet ist, um sich mit einer Verformung des Laufflächenkörpers mit zu verformen. Alternativ kann auch vorgesehen sein, dass der Trägerkörper biegesteif ausgebildet und sich beim Verformungsvorgang des Laufflächenkörpers nicht verformt. Insbesondere kann bei beiden Arten des Trägerkörpers vorgesehen sein, dass die eigentliche Dämpfungseinrichtung radial innen vom Trägerkörper angeordnet ist. In radialer Richtung gesehen kann also außen der Laufflächenkörper angeordnet sein und auf diesen in radialer Richtung folgend der Trägerkörper und anschließend die Dämpfungseinrichtung, beispielsweise in Form von mechanischen Federn. Im Fall eines biegesteifen Trägerkörpers verschiebt sich während dem Federvorgang quasi der gesamte Trägerkörper in radialer Richtung. Wird also der der Fahrbahn zugewandte Teil des Trägerkörpers zum Grundkörper des Laufflächenabschnitts hin bewegt, so bewegt sich auf der gegenüberliegenden Seite der Trägerkörper in radialer Richtung weg vom metallischen Grundkörper des Laufflächenabschnitts, beispielsweise dem Stationärabschnitt. Im Gegensatz dazu verformt sich der Trägerkörper bei Vorsehen eines flexiblen oder elastisch formbaren Trägerkörper quasi nur in dem Bereich, in dem der Laufflächenkörper die Fahrbahn kontaktiert.

Die Dämpfungseinrichtung kann auch dadurch gebildet sein, dass der Aufsatz mit einem Laufflächenkörper ausgebildet ist, der eine Druckkammer umfasst, die mit einem Druckmedium beaufschlagt (mit einem Medium, insbesondere ein Gas mit langen Molekülketten oder Stickstoff gefüllt und gasdicht abgeschlossen) oder beaufschlagbar ist. Die Druckkammer ist dabei derart ausgebildet und angeordnet, dass die Lauffläche durch das in der Druckkammer befindliche Druckmedium bei dem Abrollvorgang der Lauffläche über die Fahrbahn gedämpft ist. Vorzugsweise ist die Druckkammer über ein Rückschlagventil mit Druckmedium beaufschlagbar.

Die Dämpfungseinrichtung kann separat vom Laufflächenkörper ausgebildet sein. Insbesondere kann eine Druckkammer radial innenliegend vom Laufflächenkörper vorgesehen sein.

Die Druckkammer ist vorteilhafterweise mit der nachfolgend genannten Druckerzeugungseinrichtung kombinierbar und die Druckerzeugungseinrichtung stellt unter Druck stehendes Druckmedium zur Befüllung der Druckkammer zur Verfügung. Die Dämpfungseinrichtung kann also bspw. Gasdruckgefedert ausgebildet sein. Mit anderen Worten, die Dämpfungseigenschaft der Dämpfungseinrichtung kann auf der Kompression eines gasförmigen Mediums basieren.

Die Dämpfungseinrichtung kann auch eine Medienkammer umfassen, die mit einer Flüssigkeit, insbesondere einem hochviskosen Medium, gefüllt ist. Die Medienkammer kann insbesondere Teilkammern umfassen, die jeweils miteinander fluidisch verbunden sind, wobei die Verbindungsabschnitte der Teilkammern miteinander einen höheren Strömungswiderstand (Engstellen im Strömungsquerschnitt) aufweisen als die Teilkammern.

Zusätzlich oder alternativ zu der Dämpfungseinrichtung kann vorgesehen sein, dass der Aufsatz einen Laufflächenkörper umfasst, welcher wiederum einen in axialer Richtung dämpfenden Abschnitt umfasst. Damit ist gemeint, der dämpfende Abschnitt ermöglicht eine Kompression des Laufflächenkörpers in axialer Richtung. Beispielsweise kann der dämpfende Abschnitt derart ausgebildet sein, dass er in axialer Richtung nachgiebiger ist, als das ihn jeweils axial innen und außen umgebende Material des Laufflächenkörpers. Denkbar ist auch die in axialer Richtung aufeinanderfolgende Anordnung zweier Teillaufflächenkörper, die über den in axialer Richtung dämpfenden Abschnitt in axialer Richtung miteinander verbunden sind. Beispielsweise kann der dämpfende Abschnitt in Form eines nachgiebigen und zwischen diesen beiden Teillaufflächenkörpern angeordneten Materials gebildet sein. Denkbar ist auch, dass zwischen den beiden Teillaufflächenkörpern federnde Elemente angeordnet sind.

### Erfindungsgemäßer Aspekt 7 - Druckerzeugungseinrichtung

Aufgabe eines siebten erfindungsgemäßen Aspekts ist es, einen Aufsatz für ein Fahrzeugrad bereitzustellen, der im Fahrbetrieb den auf der Felge des Fahrzeugrads angeordneten Reifen unterstützend heranzieht.

Diese Aufgabe wird erfindungsgemäß dadurch gelöst, dass der Aufsatz eine Druckerzeugungseinrichtung umfasst, die ausgebildet und angeordnet ist, um durch eine Abrollbewegung des Aufsatzes ein fluides Medium unter Druck zu setzen.

Vorteilhafterweise kann durch das unter Druck gesetzte fluide Medium eine Pumpfunktion bewirkt werden, mit welcher der durch den Aufsatz unterstützte und in seinem Betrieb beeinträchtigte Reifen, mit Druckluft versorgbar ist bzw. mit unter Druck stehendem Gas versorgbar ist. Beispielsweise kann es vorgesehen sein, dass der Laufflächenkörper des Aufsatzes einen Pumpbelag kontaktiert. Dieser Pumpbelag kann Hohlräume umfassen, die bspw. jeweils mit Flatterventilen ausgestattet sein können, so dass die Hohlräume sich im entspannten Zustand des Pumpbelags ausdehnen und mit Umgebungsluft füllen. Rollt der Aufsatz dann in Umfangsrichtung ab, so übt der Laufbelag Druck auf den Pumpbelag aus und die Hohlräume werden komprimiert, so dass die in den Hohlräumen befindliche Luft durch auslassseitig öffnende Flatterventile unter Druck entweichen kann. Vorzugsweise umfasst der Aufsatz eine Sammelleitung, die mehrere Druckerzeugungsräume der Druckerzeugungseinrichtung, insbesondere die eben erwähnten Hohlräume, miteinander verbindet. Diese Sammelleitung kann in eine Verbindungsleitung münden. Die Verbindungsleitung kann wiederum mit dem Reifen verbindbar sein. Vorteilhafterweise kann vorgesehen sein, dass die Sammelleitung durch eine sich in Umfangsrichtung, vorzugsweise vollumfänglich um den Aufsatz erstreckende Nut gebildet sein kann.

Es ist auch möglich, dass die Druckerzeugungseinrichtung wenigstens einen Hohlraum umfasst, wobei dieser Hohlraum radial innen liegend von der Lauffläche angeordnet ist. Ein Wandabschnitt des Hohlraums kann durch eine Abrollbewegung des Aufsatzes derart beweglich sein, dass das Volumen sich durch die Bewegung des Wandabschnitts verringert und das im Hohlraum befindliche Medium durch die Volumenverringerung verdichtet wird. Beispielsweise kann dies durch einen Hohlraum in dem Laufflächenbelag ausgebildet sein, der durch die Bewegung gequetscht wird, wodurch sich dessen Wand bewegt. Durch das Zusammendrücken des Hohlraumvolumens wird das darin befindliche Gas unter Druck gesetzt und kann über eine geeignete Ventileinrichtung, beispielsweise die bereits oben genannten Flatterventile, entweichen und beispielsweise dem Reifen zugeführt werden.

Die oben genannte Sammelleitung kann beispielsweise als Nut in einem Teil des Aufsatzes ausgebildet sein.

Die Druckerzeugungseinrichtung kann beispielsweise auch durch eine Zylinder-Kolben-Anordnung ausgebildet sein, wobei der Kolben sich bspw. in die Lauffläche oder in Kontakt mit dem Laufflächenkörper erstrecken kann, so dass beim Abrollen der Lauffläche über die Fahrbahn der Kolben bewegt wird. Der Kolben kann auch mittelbar mit der Lauffläche in Verbindung stehen, beispielsweise über ein geeignetes Kopplungsmittel, das einen Druck auf die Lauffläche in eine Bewegung des Kolbens überführen kann.

### Erfindungsgemäßer Aspekt 8 - Montageabschnitt mit schwenkbaren Schenkeln

Aufgabe eines achten erfindungsgemäßen Aspekts ist es, einen Aufsatz bereitzustellen, der einfach herstellbar und effizient an der Felge eines Fahrzeugrads montierbar ist. Diese Aufgabe wird bei einem Aufsatz der eingangs beschriebenen Art dadurch gelöst, dass der Aufsatz einen Montageabschnitt, der die Spannmittel umfasst, aufweist, wobei der Montageabschnitt wiederum zwei relativ zueinander verschwenkbare Schenkel aufweist. Dabei können die Schenkel bspw. über ein Schwenkgelenk relativ zueinander bewegbar ausgebildet sein.

An jedem der Schenkel ist wenigstens ein Spannmittel angeordnet. Vorzugsweise ist ein drittes Spannmittel vorgesehen, und wenigstens eines der Spannmittel kann durch Verschwenken eines der Schenkel in seiner Relativposition gegenüber den beiden anderen Spannmitteln variiert werden.

Der Montageabschnitt kann mit dem Laufflächenabschnitt bzw. einem Teil des Laufflächenabschnitts verbunden sein.

Vorzugsweise weist der Aufsatz gemäß diesem erfindungsgemäßen Aspekt eine Spannmittelanordnung auf, in der eines der Spannmittel gehalten ist (insbesondere kann das Spannmittel der Spannmittelanordnung in verschiedenen auf unterschiedliche Felgendurchmesser abgestimmten radial Stellungen festlegbar sein) und zwei Schenkel, die sich gegenüber der Spannmittelanordnung schwenkbar von dieser weg erstrecken und jeweils ein weiteres Spannmittel tragen. Entsprechend können die weiteren Spannmittel durch Verschwenken der jeweiligen Schenkel in ihrer Relativposition zueinander und in ihrer Relativposition zu dem Spannmittel in der Spannmittelanordnung angepasst werden.

Der Aufsatz gemäß diesem erfindungsgemäßen Aspekt kann ein Verspannelement aufweisen, über das die beiden Schenkel gegenüber einander bewegbar sind. Vorzugsweise sind die beiden Schenkel aufeinander zu verspannbar. Hierdurch ist es möglich, die Spannmittel in einem voneinander weg bewegten Zustand der Schenkel an der Felge des Fahrzeugrads anzusetzen und schließlich die beiden bewegbaren bzw. schwenkbaren Schenkel derart gegeneinander zu verspannen, dass die Spannmittel in Hintergriff mit dem Felgenhorn gelangen.

Vorzugsweise kann das Verspannmittel hierzu ein längenveränderbares Element umfassen. Beispielsweise kann dies durch eine Doppelgewindehülse sowie zwei Gewindestangen realisiert sein. Die beiden Gewindestangen sind hierzu (bspw. schwenkbar) an den freien Enden der Schenkel angeordnet. In der Doppelgewindehülse mit gegenläufigen Gewinden können die gewindetragenden Abschnitte der beiden Gewindestangen, die sich von den Schenkeln weg erstrecken, aufgenommen sein. Durch Verdrehen der Gewindehülse schrauben sich die beiden Gewindestangen in die Gewindehülse ein und das durch die Gewindestangen und Gewindehülse gebildete längenveränderbare Element wird in seiner Erstreckung zwischen den beiden Schenkeln verkürzt, so dass diese aufeinander zu gezogen werden. Hierdurch kann die Felge bzw. das Felgenhorn zwischen den Schenkeln bzw. zwischen den an den Schenkeln angeordneten Spannmitteln verspannt werden kann.

Das Verspannmittel kann auch beispielsweise eine Hebelvorrichtung umfassen, mittels der die beiden schwenkbaren Schenkel aufeinander zu verspannbar sind. Die Hebelvorrichtung kann hierzu eine Federeinrichtung umfassen, die bei Verspannung mittels des Hebels die beiden Schenkel mit definierter Federkraft aufeinander zu zieht. Es kann vorgesehen sein, dass das Spannmittel im Bereich der freien Enden der Schenkel an diesen angelenkt ist. Vorzugsweise ist das Verspannmittel näher am freien Ende der Schenkel angeordnet als die jeweiligen Spannmittel der Schenkel. Hierdurch kann ein Hebelarm der schwenkbaren Schenkel besonders gut genutzt werden.

### Erfindungsgemäßer Aspekt 9 - Vorgespannte Spannmittel

Aufgabe eines neunten erfindungsgemäßen Aspekts ist es, einen Aufsatz für ein Fahrzeugrad bereitzustellen, der besonders leicht zu montieren ist.

Diese Aufgabe wird erfindungsgemäß dadurch gelöst, dass der Aufsatz wenigstens ein, insbesondere wenigstens zwei, insbesondere wenigstens drei, Spannmittel umfasst, die in eine radial einwärts liegende Stellung vorgespannt (bspw. mittels Druckfederelementen oder auch eines andersartigen Vorspannelements) sind. Insbesondere können die Spannmittel federvorgespannt ausgebildet sein.

Insbesondere kann eine Blattfederanordnung ein Druckfederelement bilden, das vorgesehen sein kann, um die Spannmittel in radial einwärts gerichtete Stellung vorzuspannen.

Am Aufsatz kann ein radial auswärts liegender Anschlagsabschnitt vorgesehen sein, an dem das Druckfederelement anliegt und radial innen liegend von diesem ein Anschlagsabschnitt der Spannmittel, an dem das andere Ende des Druckfederelements anliegt. Die Spannmittel sind nun radial auswärts bewegbar, entgegen der Spannung des Vorspannelements (vorliegend Druckfederelement), welches durch die Blattfedern gebildet sein kann. In diesem Zustand können die Spannmittel an dem Felgenhorn angesetzt werden. Durch die Vorspannung der Federn ziehen sich die Spannmittel nun nach radial einwärts und gleiten dabei entlang des Felgenhorns und gelangen in formschlüssigen Hintergriff mit dem Felgenhorn.

Es kann auch vorgesehen sein, dass die Spannmittel in einem radial auswärts liegenden Zustand verriegelt sind und durch Betätigung einer Freigabeeinrichtung (auch als Verriegelungseinrichtung bezeichnet) die Vorspannung freigebbar sind, so dass die Spannmittel durch die Vorspannung radial einwärts gedrängt werden.

Nach Freigabe werden die Spannmittel nach radial einwärts gedrängt. Die Spannmittel können damit in ihrem radial auswärts liegenden Zustand (verriegelt) am Felgenhorn angesetzt werden. Im angesetzten Zustand kann entsprechend die Vorspanneinrichtung frei gegeben werden und die Spannmittel drängen nach radial einwärts, wodurch die Spannmittel in die Hintergriffstellung mit dem Felgenhorn gleiten können.

Das Spannmittel kann durch die Vorspannung einen Freigang aufweisen.

Es kann vorgesehen sein, dass der Aufsatz lediglich ein federvorgespanntes Spannmittel umfasst. Vorzugsweise sind wenigstens zwei weitere stationäre Spannmittel vorgesehen, die in Umfangsrichtung beabstandet zu dem federvorgespannten Spannmittel angeordnet sind. Vorzugsweise umfasst der Aufsatz einen kreisbogenförmigen Montageabschnitt bzw. einen kreisbogenförmigen Stationärabschnitt, an dem diese Spannmittel angeordnet sind. Dieser Montageabschnitt oder Stationärabschnitt kann am Felgenhorn angesetzt werden und über die Federvorspannung des vorgespannten Spannmittels kann dieses in die Hintergriffstellung mit dem Felgenhorn gebracht werden. Anschließend kann entweder die Lauffläche bzw. ein Teil des Laufflächenabschnitts an den Spannmitteln angebracht werden oder die Lauffläche in Umfangsrichtung durch Einsetzen eines weiteren Segments der Lauffläche komplettiert werden. An dem mit den Spannmitteln ausgestatteten Teil des Aufsatzes kann bereits ein Großteil der Lauffläche angeordnet sein und nachdem die Spannmittel in Hintergriffstellung mit dem Felgenhorn bewegt wurden, kann der Aufsatz mit dem Fahrzeugrad vorwärtsbewegt werden, beispielsweise um eine halbe Umdrehung. Anschließend kann die Lauffläche durch Einsetzen eines weiteren Laufflächensegments komplettiert werden und die Montage des Aufsatzes kann abgeschlossen sein. Ein derartiger Aufsatz hat bspw. den Vorteil, dass der Mittelbereich der Felge frei bleiben kann und der Aufsatz sich lediglich im äußeren Bereich, also im Bereich des Felgenhorns der Felge, erstreckt. Dies kann vorteilhat sein, wenn der Aufsatz auch an Felgen eingesetzt werden kann, die sich im mittleren Bereich in axialer Richtung weiter auswärts erstrecken als das Felgenhorn.

### Erfindungsgemäßer Aspekt 10 - Verspannung mittels einer Verspannvorrichtung mit Kurvenbahn

Aufgabe eines zehnten erfindungsgemäßen Aspekts ist es, einen Aufsatz bereitzustellen, der ausgebildet ist, um auf Felgen, mit unterschiedlichen Konturen im Bereich der Speichen, auf einfache Weise montiert werden zu können.

Diese Aufgabe wird erfindungsgemäß dadurch gelöst, dass der Aufsatz eine Verspannvorrichtung für die Spannmittel aufweist, die eine Kurvenbahn umfasst. Insbesondere kann die Verspannvorrichtung für die Spannmittel kreisringscheibenartig ausgebildet sein und die Kurvenbahn tragen. Insbesondere kann der Aufsatz gemäß diesem erfindungsgemäßen Aspekt auf einfache Art auf Felgen montiert werden, die im mittleren Bereich weit nach axial außen (bspw. in axialer Richtung über das Felgenhorn hinaus) ragen. Die Spannmittel sind im Bereich des Felgenhorns angeordnet. Die Kurvenbahn wiederum im Bereich der Spannmittel, so dass ein mittlerer Bereich der Felge von dem Aufsatz unverdeckt bleiben kann.

Der Aufsatz kann also eine Verspannvorrichtung zur Bewegung der Spannmittel aufweisen, die eine Kurvenbahn, insbesondere mehrere Kurvenbahnabschnitte, umfasst, wobei die Spannmittel über einen jeweiligen Eingriffsabschnitt, der in die Kurvenbahn eingreift, mit der Kurvenbahn gekoppelt ist, sodass durch eine Relativbewegung der kurvenbahntragenden Teile der Verspannvorrichtung die Spannmittel bewegbar sind.

Die Spannmittel können zur Kopplung mit der Kurvenbahn vorstehende Elemente (oder allgemein Eingriffsabschnitte) aufweisen, die in die Kurvenbahn eingreifen können. Durch Verdrehen (oder je nach Anordnung der Kurvenbahn entsprechende Relativbewegung der kurvenbahntragenden Teile zu den Spannmitteln) der kurvenbahntragenden Teile der Verspannvorrichtung können die Spannmittel, bspw. in radialer Richtung, bewegt werden. Die Kurvenbahn erstreckt sich in Umfangsrichtung mit einer Änderung ihrer radialen Position, so dass die Spannmittel bei Bewegung der kurvenbahntragenden Teile der Verspannvorrichtung in Umfangsrichtung in ihrer radialen Position veränderbar sind. Vorzugsweise weist die Verspannvorrichtung hierzu je Spannmittel eine Kurvenbahn in Form eines Schlitzes auf, der ein radial innen liegendes erstes umfängliches Ende und ein radial außen liegendes zweites umfängliches Ende umfasst. Zwischen den beiden umfänglichen Enden ändert sich die radiale Position der Kurvenbahn stetig.

### Erfindungsgemäßer Aspekt 11 - schwenkbare Spannmittel

Aufgabe eines elften erfindungsgemäßen Aspekts ist es, einen Aufsatz für ein Fahrzeugrad bereitzustellen, der besonders effizient montierbar ist. Der Aufsatz weist hierzu vorzugsweise ein radial einwärts schwenkbares Spannmittel auf. Vorzugsweise weist der Aufsatz zwei weitere bei der Montage des Aufsatzes unbewegliche Spannmittel auf. Mit diesen zwei unbeweglichen Spannmitteln, die in umfänglicher Richtung zu dem schwenkbaren Spannmittel beabstandet sind, kann der Aufsatz am Fahrzeugrad angesetzt werden. Das schwenkbare Spannmittel kann in Richtung des Felgenhorns gedrückt werden, so dass seine Spitze am Felgenhorn anliegt. Anschließend kann das schwenkbare Spannmittel, beispielsweise über einen Hebel, in Hintergriffstellung mit dem Felgenhorn geschwenkt werden. Vorzugsweise sind die Spannmittel dieser Ausführungsvariante um jeweils 100° bis 140°, insbesondere 110° bis 130°, insbesondere 120°, zueinander versetzt angeordnet. Vorzugsweise weist der Aufsatz ein kreisbogensegmentförmigen Stationärabschnitt oder Montageabschnitt auf, an dem die Spannmittel angeordnet sind. Vorzugsweise weist der Aufsatz zwei Schenkel auf, die sich in Umfangsrichtung weg von dem schwenkbaren Spannmittel erstrecken, wobei an den freien Enden der Schenkel die beiden feststehenden Spannmittel angeordnet sind. Vorzugsweise weist das schwenkbare Spannmittel eine Hebelansatzstelle zur Verbindung mit einer Hebelvorrichtung auf.

### Erfindungsgemäßer Aspekt 12 - System

Aufgabe eines zwölften erfindungsgemäßen Aspekts ist es, eine Möglichkeit bereitzustellen mittels der ein Aufsatz möglichst einfach und schnell montierbar ist.

Diese Aufgabe wird durch ein System gelöst umfassend einen Aufsatz, insbesondere nach einer der in dieser Anmeldung beschriebenen Ausführungsformen, für ein Fahrzeugrad, das eine Felge und einen auf der Felge angeordneten Reifen umfasst, wobei der Aufsatz ausgebildet ist, um in einem Betriebszustand, in dem er am Fahrzeugrad befestigt ist, einen Fahrbetrieb bei eingeschränkter Reifenfunktion zu ermöglichen, wobei der Aufsatz einen Laufflächenabschnitt umfasst, der eine Lauffläche des Aufsatzes zur Kontaktierung der Fahrbahn, aufweist, und wobei der Aufsatz wenigstens zwei, insbesondere wenigstens drei, insbesondere wenigstens vier, Spannmittel umfasst, wobei die Spannmittel ausgebildet sind, um einen Abschnitt, insbesondere ein Felgenhorn, der Felge zu hintergreifen, wobei das System weiter eine Anhebevorrichtung umfasst, die ausgebildet ist, um durch ein Auffahren des Fahrzeugs auf die Anhebevorrichtung und ggf. einen Anhebevorgang das Fahrzeugrad mit eingeschränkter Reifenfunktion derart anzuheben, dass der Aufsatz mit umfänglich geschlossener Lauffläche am Fahrzeugrad befestigbar ist.

Die Anhebevorrichtung kann einen aufblasbaren Abschnitt zur Platzierung unterhalb des Fahrzeugrads mit eingeschränkter Reifenfunktion umfassen. Die Anhebevorrichtung kann weiter einen Anschluss für eine Druckgaskartusche, vorzugsweise eine CO2-Druckkartusche, umfassen (über den Anschluss ist die Druckgaskartusche mit dem aufblasbaren Abschnitt fluidisch verbindbar).

Die Anhebevorrichtung kann Rampenartig ausgebildet sein. Die Anhebevorrichtung kann zusammenlegbar/klappbar ausgebildet sein (bspw. über ein oder mehrere Scharniere).

Der Aufsatz dieses Erfindungsgemäßen Aspekts kann einen Laufflächenabschnitt umfassen, der weder zerlegbar noch klappbar oder in anderer Art den äußeren Kreisringumriss der Lauffläche verändernd bewegbar ist.

Die Anhebevorrichtung kann des Weiteren ein Stützelement umfassen, das dazu angeordnet und ausgebildet ist, um bei auf der Anhebevorrichtung befindlichem Fahrzeugrad einen entsprechenden Aufsatz in axialer Richtung zum Fahrzeug zu stützen. Das Stützelement ist vorzugsweise derart ausgebildet, dass es eine Einrichtung umfasst, um den Aufsatz in axialer Richtung in Richtung der Felge zu drängen. Beispielsweise kann hierzu eine Schraubvorrichtung vorgesehen sein, mittels der der Aufsatz in Richtung Fahrzeugrad schraubbar ist.

Vorzugsweise ist das Stützelement strebenartig ausgebildet und erstreckt sich von einem die Fahrbahn kontaktierenden Teil der Anhebevorrichtung, auf dem auch das Fahrzeugrad steht, in vertikaler Richtung aufwärts. Durch das Gewicht des Fahrzeugs, das sich auf der Anhebevorrichtung befindet, ist diese quasi fest am Boden angedrückt und das sich von einem Bodenbereich der Anhebevorrichtung nach oben erstreckende Stützelement ist sicher und stabil gehalten. Das Stützelement kann beispielsweise als Vierkantrohr ausgebildet sein.

Es kann vorgesehen sein, die Anhebevorrichtung gemäß des erfindungsgemäßen Systems mit einem Aufsatz zu kombinieren, der in Umfangsrichtung einstückig ausgebildet ist und außerdem Spannmittel in Form von radial einwärts gespannten Schiebern aufweist. Die radial einwärts gespannten Schieber können auf ihrer der Felge zugewandten Seite eine flachere Steigung aufweisen als auf ihrer zur Kontaktierung der Felge vorgesehenen Seite. Der Aufsatz mit den radial einwärts gespannten Schiebern wird quasi mit den Schiebern in der radial einwärts befindlichen Position in axialer Richtung auf die Felge aufgeschoben. Durch die Steigung an der der Felge zugewandten Seiten des Schiebers wird dieser nach radial außen bewegt. Nachdem die Schieber über das Felgenhorn geschoben wurden, werden sie durch die Federvorspannung der Schieber in den Hintergriff mit dem Felgenhorn bewegt. Vorzugsweise weisen die Schieber auf ihrer zur Kontaktierung des Felgenhorns ausgebildeten Seite eine komplementär zum Felgenhorn ausgebildete Kontur auf. Anschließend können die Schieber mittels einer Befestigungseinrichtung mit dem Laufflächenabschnitt fest verbunden werden, so dass die Schieber an einem Herausbewegen aus der Hintergriffstellung mit dem Felgenhorn gehindert sind.

### Erfindungsgemäßer Aspekt 13 - Scheuerschutzleistenschiebevorrichtung

Aufgabe eines dreizehnten erfindungsgemäßen Aspekts ist es, einen Aufsatz für ein Fahrzeugrad bereitzustellen, der besonders geeignet für die Montage an Fahrzeugrädern mit Reifen mit Scheuerleiste ist.

Hierzu ist bei einem Aufsatz der eingangs genannten Art ein schwenkbar angelenktes Spannmittel vorgesehen, wobei im Bereich des Spannmittels zusätzlich eine Schiebevorrichtung für die Scheuerschutzleiste vorgesehen ist. Das schwenkbare Spannmittel ist zusätzlich in radialer Richtung über eine zentrale Werkzeugansatzstelle bewegbar. Vorzugsweise sind wenigstens drei derartige Spannmittel mit einer jeweiligen Scheuerschutzleistenschiebevorrichtung kombiniert um den Umfang des Aufsatzes verteilt angeordnet. Die Scheuerschutzleistenschiebevorrichtung bewegt sich bei radialer Bewegung des Spannmittels ebenfalls in radialer Richtung. Zum Verspannen des Aufsatzes am Fahrzeugrad ist dabei vorgesehen, dass über eine Betätigung der Werkzeugansatzstelle die Scheuerschutzleistenschiebevorrichtung in Eingriff mit der Scheuerschutzleiste gebracht wird und anschließend eine radial auswärts gerichtete Bewegung des Spannmittels sowie der Scheuerschutzleistenschiebevorrichtung bewirkt wird. Ist das Spannmittel weit genug nach radial auswärts bewegt worden, so schwenkt es über eine Federvorspannung selbsttätig in Hintergriffstellung mit dem Felgenhorn ein. Dieses selbsttätige Einschwenken ist möglich, da durch die Scheuerschutzleistenschiebevorrichtung der Reifen vom Felgenhorn weggedrängt wurde, so dass ausreichend Freiraum zum Einschwenken des Spannmittels besteht. Nach dem Einschwenken des Spannmittels wird das Spannmittel mitsamt der Scheuerschutzleistenschiebevorrichtung radial einwärts bewegt und die einzelnen Spannmittel somit gegeneinander verspannt.

Durch das Zurückziehen (in radialer Richtung) der Scheuerschutzleistenschiebevorrichtung geht der Reifen zurück in Kontakt mit dem Felgenhorn bzw. dem nun am Felgenhorn befindlichen Spannmittel und drückt diese(s) Spannmittel zusätzlich gegen das Felgenhorn. Hierdurch wird eine besonders sichere Befestigung des Aufsatzes über die Spannmittel ermöglicht. Im Anschluss an diesen Befestigungsvorgang kann dann ein Laufflächenabschnitt über die an dem Montageabschnitt befindlichen Spannmittel befestigt werden. Dies kann über Befestigungseinrichtungen erfolgen, die ähnlich denen aus den vorangegangenen Ausführungsformen ausgebildet sind.

Vorzugsweise sind die Scheuerschutzleistenschiebevorrichtungen beidseitig an den schwenkbaren Spannmitteln angeordnet.

Vorzugsweise sind die schwenkbaren Spannmittel über Blattfedern zur Felge hin in ihrer Schwenkstellung gespannt.

### Erfindungsgemäßer Aspekt 14 - Schwenken mittels radial auswärts gerichteter Bewegung

Aufgabe eines weiteren erfindungsgemäßen Aspekts ist es, einen Aufsatz bereitzustellen, der einfach am Fahrzeugrad anbringbar ist.

Diese Aufgabe wird erfindungsgemäß bei einem gattungsgemäßen Aufsatz dadurch gelöst, dass er mehrere Spannmittel aufweist, die jeweils durch eine radial auswärts gerichtete Bewegung eines Aktivierungselements in eine Hintergriffstellung mit dem Felgenhorn eingeschwenkt werden können. Vorzugsweise ist das Aktivierungselement mittels einer Gewindestange, die sich in das Aktivierungselement ein- oder ausschraubt, in seiner radialen Position bewegbar. Vorzugsweise ist das Aktivierungselement in einem Aktivierungsrahmen angeordnet, welcher wiederum schwenkbar am jeweiligen Spannmittel angeordnet ist. Vorzugsweise ist das Aktivierungselement translatorisch in dem Aktivierungsrahmen bewegbarangeordnet. Vorzugsweise weist das jeweilige Spannmittel eine axial innenliegende fest mit dem jeweiligen Montageabschnitt des Aufsatzes verbundene Schwenkachse auf.

### Allgemeines

Wie bereits oben erwähnt so ist die vorliegende Beschreibung dahingehend zu verstehen, das die jeweiligen weiteren Merkmale der einzelnen erfindungsgemäßen Aspekte jeweils auch (Neben ihrem Charakter als eigenständige Erfindungen) als Weiterbildung der jeweils anderen erfindungsgemäßen Aspekte zu verstehen sind. Bei den in dieser Anmeldung beschriebenen Ausführungsformen und verschiedenen erfindungsgemäßen Aspekten können weiter jeweils die nachfolgend beschriebenen weiteren Aspekte vorgesehen sein, wobei diese teilweise oben bereits erwähnt wurden.

Der Laufflächenabschnitt kann in Umfangsrichtung mehrteilig aufgebaut sein. Im getrennten Zustand des Laufflächenabschnitts bildet dieser keinen vollständig geschlossen Kreisring.

Der Laufflächenabschnitt kann in Umfangsrichtung durchgängig aufgebaut sein, wobei die Lauffläche ein herausnehmbares umfängliches Segment (abnehmbaren Teil) umfasst. Es kann also vorgesehen sein, dass ein radial äußerer Teil des Laufflächenabschnitts eine umfängliche Unterbrechung aufweist, während ein radial innenliegender Teil des Laufflächenabschnitts in Umfangsrichtung geschlossen und damit der Laufflächenabschnitt an sich durchgängig aufgebaut ist.

Hierdurch kann der erfindungsgemäße Aufsatz jeweils ohne Verwendung eines Mittels zum Anheben des beschädigten Fahrzeugrads montiert werden. Es kann, beispielsweise zunächst der Montageabschnitt befestigt werden. Anschließend kann ein erstes umfängliches Segment des Laufflächenabschnitts am bereits am Fahrzeugrad befestigten Montageabschnitt angebracht werden. Anschließend kann das Fahrzeugrad mit dem daran befindlichen teilweisen Aufsatz rotiert werden und das weitere umfängliche Segment des Laufflächenabschnitts eingesetzt bzw. befestigt werden. Die Montage ist dann abgeschlossen. (Bei dieser Art der Ausbildung des Laufflächenabschnitts kann insbesondere vorgesehen sein, dass der Aufsatz ohne separaten Montageabschnitt auskommt. Mit anderen Worten, der Aufsatz umfasst im Wesentlichen lediglich die beiden Teile des Laufflächenabschnitts und keine weiteren Komponenten.)

Bei Verwendung eines Laufflächenabschnitts mit herausnehmbarem umfänglichem Segment der Lauffläche kann der Laufflächenabschnitt beispielsweise direkt am Fahrzeugrad oder am Montageabschnitt zunächst mit entferntem herausnehmbarem Segment (mit der zur Kombination mit diesem Segment ausgebildeten Ausnehmung zur Fahrbahn orientiert) befestigt werden. Anschließend kann das Fahrzeugrad rotiert werden, sodass die entsprechende Ausnehmung nach oben zeigt, und das herausgenommene Segment der Lauffläche kann eingefügt werden.

Bei einer komplett um die axiale Richtung gegenüber dem Stationärabschnitt rotierbaren Lauffläche kann vorgesehen sein, dass entsprechende Übergänge zwischen den umfänglichen Segmenten des Laufflächenabschnitts bzw. dem herausnehmbaren Segment und dem Rest des Laufflächenabschnitts eine Verschiebung der Lauffläche gegenüber dem Stationärabschnitt trotzdem erlauben. Hierzu ist beispielsweise Lagerung des Laufflächenkörpers derart ausgebildet, dass in Umfangsrichtung kein Anschlag existiert, an dem der Laufflächenkörper anliegen könnte und dadurch an einer Bewegung gehindert werden könnte.

Es kann vorgesehen sein, dass der Laufflächenabschnitt von den Spannmitteln lösbar ist.

Es kann vorgesehen sein, dass die Spannmittel an einem Montageabschnitt, der getrennt von dem Laufflächenabschnitt an der Fahrzeugfelge befestigbar ist, angebracht sind.

Es kann weiter vorgesehen sein, dass wenigstens ein, insbesondere mehrere, insbesondere alle, Spannmittel einen Befestigungsabschnitt mit einer Befestigungseinrichtung aufweisen. Die Befestigungseinrichtung dient dazu bzw. ist dazu ausgebildet, den Laufflächenabschnitt an den Spannmitteln zu befestigen. Beim Befestigen des Laufflächenabschnitts an den Spannmitteln ist die Befestigungseinrichtung derart ausgebildet, dass der Laufflächenabschnitt in axialer Richtung gegen die Spannmittel verspannt ist, so dass er über eine klemmende Befestigung gegen ein Spiel gegenüber den Spannmitteln gesichert ist.

Die Befestigungseinrichtung kann derart ausgebildet sein, dass der Laufflächenabschnitt sich beim Befestigen mittels der Befestigungseinrichtung in axialer Richtung zur Felge hinbewegt.

Dabei kann insbesondere vorgesehen sein, dass durch die Befestigung des Laufflächenabschnitts an den Spannmitteln der Reifen in Richtung Felgenbett vom Felgenhorn weggedrängt wird. Es kann vorgesehen sein, dass die Verspannung der Lauffläche gegenüber den Spannmitteln mit dem weiter oben bereits genannten Anlageabschnitt kombiniert ist, um eine genau definierte Position der Lauffläche gegenüber dem Felgenhorn sicherzustellen.

Bei den beschriebenen Aufsätzen gemäß den verschiedenen erfindungsgemäßen Aspekten kann es vorgesehen sein, dass wenigstens eines der Spannmittel, insbesondere mehrere Spannmittel, in einem Schnitt durch eine in radialer Richtung und axialer Richtung erstreckten Schnittebene einen in axialer Richtung abragenden und nach radial innen verlaufenden hakenartig ausgebildeten Hintergriffabschnitt zum formschlüssigen Hintergreifen des Felgenhorns umfasst. Der Hintergriffabschnitt kann derart ausgebildet sein, dass das Spannmittel, wenn es insbesondere translatorisch radial einwärts in den Hintergriff mit dem Felgenhorn bewegt wird, sich in axialer Richtung zum Felgenhorn hin drängt (hierzu weist der Hintergriffabschnitt eine entsprechende Neigung auf). Der Aufsatz kann, wie bereits weiter oben beschrieben, eine Anlagefläche bzw. einen Anlageabschnitt umfassen, die ausgebildet und angeordnet ist, um das Felgenhorn von axial außen zu kontaktieren und eine genau definierte Position des Aufsatzes gegenüber dem Felgenhorn im Betriebszustand sicherzustellen. Entsprechend gleiten derartige Spannmittel bei einer radial einwärts gerichteten Bewegung in axialer Richtung zur Felge hin, bis das Felgenhorn die Anlagefläche bzw. den Anlageabschnitt kontaktiert.

Die Anlageabschnitte können ein Teil (bspw. einstückig mit dem Spannmittel ausgebildet) des Spannmittels sein. Sie können auch separat von den Spannmitteln am Aufsatz angebracht sein, beispielsweise als Teil des Laufflächenabschnitts. Wenn die Anlageabschnitte an den jeweiligen Spannmittel selbst ausgebildet sind, kann der Hintergriffabschnitt in den Anlageabschnitt übergehen, wobei im Bereich des Übergangs zwischen dem Hintergriffabschnitt und dem Anlageabschnitt eine in axialer Richtung verlaufende Einbuchtung (axial zurückversetzter Abschnitt) auf Seiten und oberhalb des Anlageabschnitts vorgesehen sein kann.

Es kann vorgesehen sein, dass die Spannmittel der beschriebenen Aufsätze in verschiedenen vorbestimmten Positionen, die auf bestimmte Felgengrößen abgestimmt sind, am Aufsatz anbringbar sind. Die Spannmittel können in den vorbestimmten Positionen fest (im Sinne von unbeweglich) anbringbar sein. Die Spannmittel können in den vorbestimmten Positionen auch beweglich, insbesondere radial einwärts, beweglich befestigt sein (der Bewegungsspielraum in den einzelnen Positionen ist dann kleiner als der Abstand der Positionen zueinander).

Der Aufsatz kann feststehend (im Sinne von unbeweglich gegenüber dem Montage- oder Laufflächenabschnitt) befestigte (auch in verschiedenen vorbestimmten Positionen befestigbare) Spannmittel und beweglich, insbesondere radial einwärts, beweglich befestigte Spannmittel umfassen (Die Relativposition der Spannmittel zueinander ist jedoch veränderbar, um den Aufsatz an der Felge zu verspannen).

Sowohl der Montageabschnitt, die Verspannvorrichtung als auch die im Betriebszustand abnehmbare Verspanneinheit können mit einem Zentralabschnitt ausgebildet sein, von dem aus sich Stege zu verschiedenen Spannmitteln (bzw. zu deren Positionen) erstrecken. Die Stege können als Umschalungen (bzw. als teilwiese Umschalungen, die bspw. in einer Richtung, bspw. zur Felge hin, offen sind) ausgeführt sein. In den Umschalungen können Kopplungsmittel (bspw. Gewindestangen) angeordnet sein. Die Kopplungsmittel können zur Verbindung eines im Zentralabschnitt angeordneten Teils eines Getriebes mit den Spannmitteln dienen.

Der Stationärabschnitt bzw. Laufflächenabschnitt und/oder der Montageabschnitt können eine Grundstruktur, welche als Magnesiumdruckgusselement ausgebildet ist umfassen. Insbesondere kann vorgesehen sein, dass der Werkstoff dieser Magnesiumgrundstruktur AZ91 (mit 0,8% Zink) ist.

Die Spannmittel sind vorzugsweise aus Stahl ausgebildet.

Es kann vorgesehen sein, dass der Laufflächenkörper aus Kunststoff in axialer Richtung wenigstens zu einer Seite (insbesondere axial zur Felge hin und axial von der Felge abgewandt) hin über einen darunter liegenden metallischen Abschnitt des Laufflächenabschnitts, der den Laufflächenkörper stützt, hinausragt. Dies kann um den gesamten Umfang der Fall sein. Der Laufflächenkörper kann also axial jeweils über die ihn tragende Struktur sozusagen überstehen. Der Laufflächenkörper erhält dadurch eine erhöhte Verschleißbeständigkeit.

Der Laufflächenkörper kann vorzugsweise eine Erstreckung in radialer Richtung von wenigstens 15mm, insbesondere 20mm, insbesondere 25mm, insbesondere 30mm, aufweisen.

Der Laufflächenkörper kann vorzugsweise eine Erstreckung in radialer Richtung von höchstens 75mm, insbesondere 70mm, insbesondere 65mm, insbesondere 60mm, insbesondere 55mm, insbesondere 50mm, aufweisen.

### Figurenkurzbeschreibung

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
- Figur 1: ein Fahrzeugrad;
- Figur 2: die Felge des Fahrzeugrades aus Figur 1 in einer Schnittdarstellung;
- Figur 3: eine erste Ausführungsform eines erfindungsgemäßen Aufsatzes;
- Figur 4: eine Schnittdarstellung des Aufsatzes aus Figur 3;
- Figur 5: einen Teilbereich von Figur 4;
- Figur 6: einen weiteren erfindungsgemäßen Aufsatz;
- Figur 7: eine Schnittdarstellung durch den Aufsatz aus Figur 6;
- Figur 8: einen Teilbereich eines weiteren erfindungsgemäßen Aufsatzes;
- Figur 9: eine Schnittdarstellung durch den Aufsatz aus Figur 8;
- Figur 10: eine Schnittdarstellung einer anderen Position des Aufsatzes aus Figur 8;
- Figur 11: einen weiteren erfindungsgemäßen Aufsatz;
- Figur 12: eine weitere Darstellung des Aufsatzes aus Figur 11;
- Figur 13: eine Schnittdarstellung entlang einer Orthogonalen zur axialen Richtung erstreckten Ebene durch den Aufsatz aus Figur 12;
- Figur 14: einen laufenden Abschnitt eines weiteren erfindungsgemäßen Aufsatzes in einer Schnittdarstellung;
- Figur 15: den Laufflächenabschnitt aus Figur 14 in einer Ansicht bei Blick in axialer Richtung;
- Figur 16: eine Schnittdarstellung durch den Laufflächenabschnitt aus Figur 15;
- Figur 17: eine Seitenansicht auf den Aufsatz aus Figur 15;
- Figur 18: eine Einzeldarstellung des Laufflächenkörpers des Aufsatzes der Figuren 14 bis 17;
- Figur 19: einen weiteren erfindungsgemäßen Aufsatz;
- Figur 20: eine Schnittdarstellung durch den Aufsatz aus Figur 19;
- Figur 21: einen weiteren erfindungsgemäßen Aufsatz;
- Figur 22: einen weiteren erfindungsgemäßen Aufsatz;
- Figur 23: einen weiteren erfindungsgemäßen Aufsatz
- Figur 24: eine weitere Darstellung des Aufsatzes aus Figur 21;
- Figur 25: eine Schnittdarstellung durch den Aufsatz aus Figur 24;
- Figur 26: eine Darstellung entsprechend Figur 24 des Aufsatzes aus Figur 22;
- Figur 27: eine Schnittdarstellung des Aufsatzes aus Figur 22 und 26;
- Figur 28: eine weitere Darstellung des Aufsatzes aus Figur 23;
- Figur 29: eine Schnittdarstellung des Aufsatzes aus Figur 23;
- Figur 30: den Laufflächenabschnitt eines weiteren erfindungsgemäßen Aufsatzes;
- Figur 31: den Aufsatz aus Figur 30 in an der Felge angebrachtem Zustand;
- Figur 32: eine Explosionsdarstellung des Laufflächenabschnitts aus Figur 30;
- Figur 33: eine Schnittdarstellung durch den Laufflächenabschnitt des Aufsatzes der Figur 30 bis 32;
- Figur 34: eine weitere Schnittdarstellung durch den Aufsatz der Figur 30 bis 32;
- Figur 35: eine weitere Schnittdarstellung durch den Aufsatz der Figur 30 bis 32;
- Figur 36: eine weitere Schnittdarstellung durch den Aufsatz der Figur 30 bis 32;
- Figur 37: eine weitere Schnittdarstellung durch den Aufsatz der Figur 30 bis 32;
- Figur 38: eine weitere Schnittdarstellung durch den Aufsatz der Figur 30 bis 32;
- Figur 39: einen weiteren erfindungsgemäßen Aufsatz;
- Figur 40: eine weitere Darstellung des Aufsatzes aus Figur 39;
- Figur 41: eine Seitenansicht des Aufsatzes aus Figur 39 und 40;
- Figur 42: eine Schnittdarstellung des Aufsatzes aus Figur 39 bis 41
- Figur 43: eine Detaildarstellung des Aufsatzes aus Figur 39 bis 42;
- Figur 44: eine Detaildarstellung des Aufsatzes aus den Figuren 39 bis 43;
- Figur 45: eine weitere Detaildarstellung des Aufsatzes aus den Figuren 39 bis 44;
- Figur 46: mehrere Detaildarstellungen von Teilen des Aufsatzes aus den Figuren 39 bis 45;
- Figur 47: der Aufsatz aus den Figuren 39 bis 46 im an einer Felge befestigten Zustand;
- Figur 48: eine Explosionsdarstellung des Aufsatzes aus den Figuren 39 bis 47;
- Figur 49: eine weitere erfindungsgemäße Ausführungsform des Aufsatzes;
- Figur 50: der Montageabschnitt des Aufsatzes aus Figur 49 beim Anbringen an der Felge des Fahrzeugrads;
- Figur 51: der Anbringvorgang aus Figur 50 in einer Seitenansicht;
- Figur 52: der Montageabschnitt mit das Felgenhorn hintergreifendem Spannmittel;
- Figur 53: eine Seitenansicht der Konfiguration aus Figur 52;
- Figur 54: eine Schnittdarstellung der Konfiguration gemäß den Figuren 50 und 51;
- Figur 55: eine Schnittdarstellung gemäß den Konfigurationen von Figur 52 und 53;
- Figur 56: ein weiterer erfindungsgemäßer Aufsatz;
- Figur 57: der Aufsatz aus Figur 56 in einer perspektivischen Darstellung;
- Figur 58: der Aufsatz aus den Figuren 56 und 57 in einer perspektivischen Darstellung beim Blick auf die der Felge zugewandte Seite;
- Figur 59: eine Darstellung des Aufsatzes aus Figuren 56 bis 58;
- Figur 60: eine weitere Darstellung des Aufsatzes aus den Figuren 56 bis 59;
- Figur 61: einen weiteren erfindungsgemäßen Aufsatz bzw. dessen Spannmittel beim Ansetzen am Felgenhorn;
- Figur 62: das Spannmittel bzw. der Aufsatz aus Figur 61 im das Felgenhorn hintergreifenden Zustand;
- Figur 63: den Montageabschnitt des Aufsatzes aus Figur 61 und 62;
- Figur 64: den Montageabschluss von Figur 63 in explosionsartiger Darstellung;
- Figur 65: ein weiterer erfindungsgemäßer Aufsatz;
- Figur 66: den Aufsatz aus Figur 65 bzw. den Montageabschnitt des Aufsatzes aus Figur 65;
- Figur 67: ein Detail des Montageabschnitts aus Figur 65 und 66;
- Figur 68: ein weiteres Detail des Montageabschnitts;
- Figur 69: einen weiteren erfindungsgemäßen Aufsatz;
- Figur 70: eine Detaildarstellung des Aufsatzes aus Figur 69;
- Figur 71: einen weiteren erfindungsgemäßen Aufsatz bzw. einen Teil des Laufflächenabschnitts dieses Aufsatzes;
- Figur 72: Wärmeleitelemente aus dem Aufsatz aus Figur 71;
- Figur 73: eine perspektivische Darstellung eines Teils des Laufflächenabschnitts des Aufsatzes aus Figur 71 und 72;
- Figur 74: ein Detail des Aufsatzes aus Figur 71 bis 73 im Schnitt;
- Figur 75: ein weiteres Detail im Schnitt des Aufsatzes aus Figur 71 bis 73;
- Figur 76: ein weiteres Detail im Schnitt des Aufsatzes aus Figur 71 bis 73;
- Figur 77: einen weiteren erfindungsgemäßen Aufsatz;
- Figur 78: verschiedene Darstellungen eines Teils des Laufflächenabschnitts des Aufsatzes aus Figur 77;
- Figur 79: den Aufsatz aus Figur 77 und 78 in einer Darstellung beim Blick in axialer Richtung auf die der Felge abgewandte Seite;
- Figur 80: ein Schnitt durch die Darstellung von Figur 79;
- Figur 81: ein Detail aus Figur 80;
- Figur 82: eine Anhebevorrichtung;
- Figur 83: die Anhebevorrichtung aus Figur 82 im entleerten Zustand;
- Figur 84: die Anhebevorrichtung aus Figur 82 und 83 mit einem darauf befindlichen Fahrzeugrad;
- Figur 85: einen weiteren erfindungsgemäßen Aufsatz;
- Figur 86: einen Teil des Aufsatzes aus Figur 85;
- Figur 87: den Teil aus Figur 86 von einer anderen Perspektive;
- Figur 88: den Montageabschnitt des Aufsatzes aus Figur 85 in einer Explosionsdarstellung;
- Figur 89: Teile einer Verspanneinheit eines weiteren erfindungsgemäßen Aufsatzes;
- Figur 90: eine Verspanneinheit und die Spannmittel des Aufsatzes zu Figur 89;
- Figur 91: die Verspanneinheit von axial außen her gesehen;
- Figur 92: ein Detail der Verbindung der Verspanneinheit mit einem Spannmittel;
- Figur 93: eine andere Perspektive ....? die Darstellung von Figur 92;
- Figur 94: eine andere Perspektive ....die Darstellung von Figur 92;
- Figur 95: eine andere Perspektive ....die Darstellung von Figur 92;
- Figur 96: die Verspanneinheit aus Figur 90;
- Figur 97: einen Laufflächenabschnitt eines weiteren erfindungsgemäßen Aufsatzes;
- Figur 98: einen Laufflächenabschnitt eines weiteren erfindungsgemäßen Aufsatzes;
- Figur 99: einen Teil des Laufflächenabschnitts aus Figur 98;
- Figur 100: einen weiteren erfindungsgemäßen Aufsatz;
- Figur 101: einen weiteren erfindungsgemäßen Aufsatz;
- Figur 102: einen weiteren erfindungsgemäßen Aufsatz;
- Figur 103: den Aufsatz aus Figur 102 in einer Schnittdarstellung sowie eine alternative Ausbildung von Federelementen;
- Figur 104: einen weiteren erfindungsgemäßen Aufsatz;
- Figur 105: alternative Ausbildung von Federelementen sowie einen Laufflächenabschnitt eines weiteren erfindungsgemäßen Aufsatzes;
- Figur 106: alternative Ausbildung von Federelementen sowie einen Laufflächenabschnitt eines weiteren erfindungsgemäßen Aufsatzes;
- Figur 107: einen weiteren erfindungsgemäßen Aufsatz;
- Figur 108: Details des Aufsatzes aus Figur 107, insbesondere der Dämpfungseinrichtung 87;
- Figur 109: ein erfindungsgemäßes System, umfassend eine Anhebevorrichtung sowie einen Aufsatz;
- Figur 110: ein weiteres erfindungsgemäßes System;
- Figur 111: ein weiteres erfindungsgemäßes System;
- Figur 112: ein weiterer erfindungsgemäßer Aufsatz;
- Figur 113: der Aufsatz aus Figur 112 in anderen Perspektiven;
- Figur 114: ein weiteres erfindungsgemäßes System;
- Figur 116: das System aus Figur 115 während dem Anbringvorgang;
- Figur 117: das System aus Figur 115 im angebrachten Zustand;
- Figur 118: ein Laufflächenabschnitt 16;
- Figur 119: einen Laufflächenabschnitt eines weiteren erfindungsgemäßen Aufsatzes;
- Figur 120: einen Laufflächenabschnitt eines weiteren erfindungsgemäßen Aufsatzes;
- Figur 121: einen Laufflächenabschnitt eines weiteren erfindungsgemäßen Aufsatzes;
- Figur 122: den Laufflächenabschnitt aus Figur 121 in anderen Darstellungen;
- Figur 123: den Laufflächenabschnitt eines weiteren erfindungsgemäßen Aufsatzes;
- Figur 124: den Laufflächenabschnitt eines weiteren erfindungsgemäßen Aufsatzes.
- Figur 125: einen weiteren erfindungsgemäßen Aufsatz, im am Fahrzeugrad befestigten Zustand;
- Figur 126: ein Detail des Aufsatzes aus Figur 125;
- Figur 127: der Montageabschnitt des Aufsatzes aus Figur 125 im Detail;
- Figur 128: ein Spannmittel des Aufsatzes aus Figur 125;
- Figur 129: das Spannmittel aus Figur 128 beim Hintergreifen des Felgenhorns;
- Figur 130: das Spannmittel in Hintergriffstellung mit dem Felgenhorn;
- Figur 131: den Montageabschnitt einer weiteren Ausführungsform in explosionsartiger Darstellung;
- Figur 132: der Montageabschnitt aus Figur 131 beim Anbringen an der Felge eines Fahrzeugrads;
- Figur 133: der Montageabschnitt aus Figur 131 mit Spannmitteln, die das Felgenhorn hintergreifen; und
- Figur 134: ein Detail der Spannmittel des Aufsatzes des Montageabschnitts aus Figur 131.

### Figurenbeschreibung

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

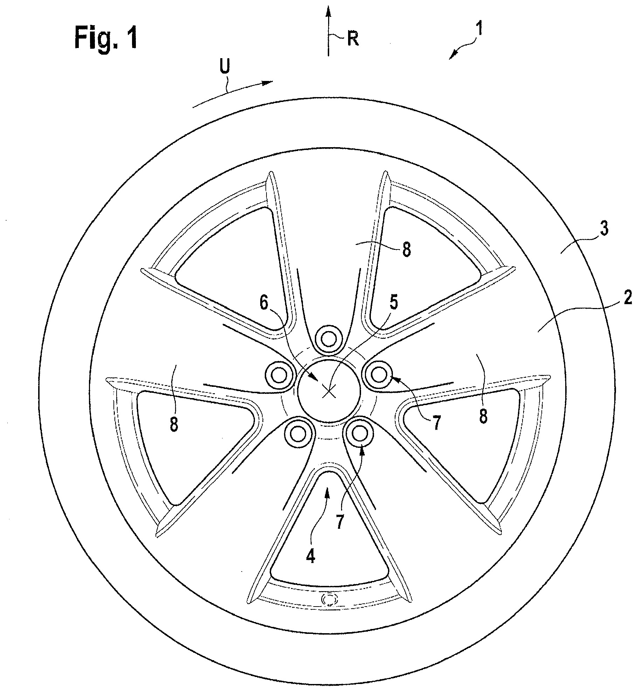

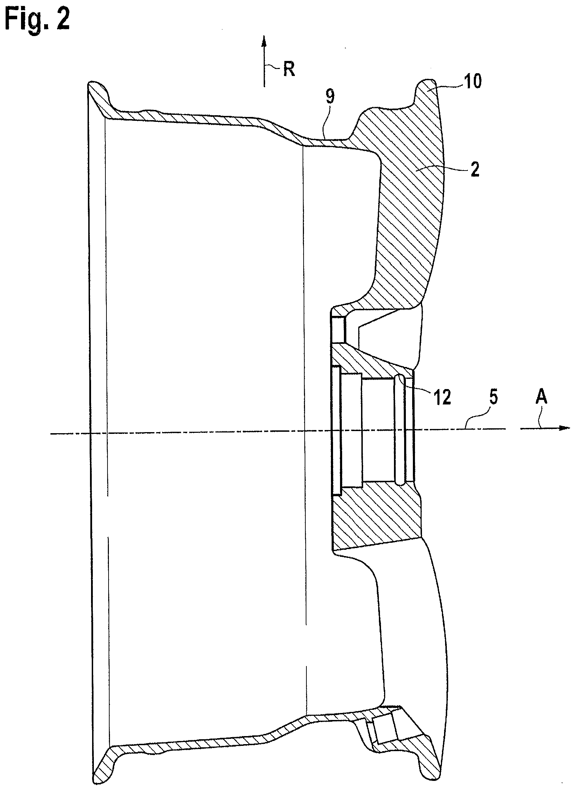

Figur 1 zeigt in schematischer Darstellung ein Fahrzeugrad 1. das Fahrzeugrad 1 umfasst eine Felge 2 und einen auf der Felge 2 angebrachten Reifen 3. Die Felge 2 ist in Figur 2 einzeln ohne den Reifen 3 gezeigt.

Eine Umfangsrichtung ist durch einen Pfeil mit dem Bezugszeichen U dargestellt. Eine axiale Richtung ist durch einen Pfeil mit dem Bezugszeichen A dargestellt (Figur 2). Eine radiale Richtung ist durch einen Pfeil mit dem Bezugszeichen R dargestellt.

Radial innenliegend umfasst die Felge 2 einen Lochkreis 4 des Fahrzeugrads 1. Im Zentrum des Lochkreises 4 ist um eine entlang der axialen Richtung A verlaufenden Drehachse 5 des Fahrzeugrads 1 eine sogenannte Mittenöffnung 6, die teilweise auch als Nabenbohrung oder Mittellochzentrierung bezeichnet wird, angeordnet. Der Lochkreis 4 umfasst vorliegend fünf Schraubenlöcher 7, von denen zwei mit einem Bezugszeichen 30 versehen sind. Bei dem vorliegenden Fahrzeugrad 1 erstrecken sich fünf Speichen 8 vom Bereich des Lochkreises 4 nach radial außen. Die Felge 2 umfasst ein Felgenbett 9 und ein Felgenhorn 10 und die Mittenöffnung 6 weist eine vertiefte umlaufende Nut 12 auf.

Hat der Reifen 3 des Fahrzeugrads 1 ein Loch, so entweicht die im Reifen befindliche Luft und die Reifenfunktion des Fahrzeugrades 1 ist eingeschränkt.

Um in einem solchen Fall den Fahrbetrieb weiterhin zu ermöglichen kann ein erfindungsgemäßer Aufsatz 14 verwendet werden.

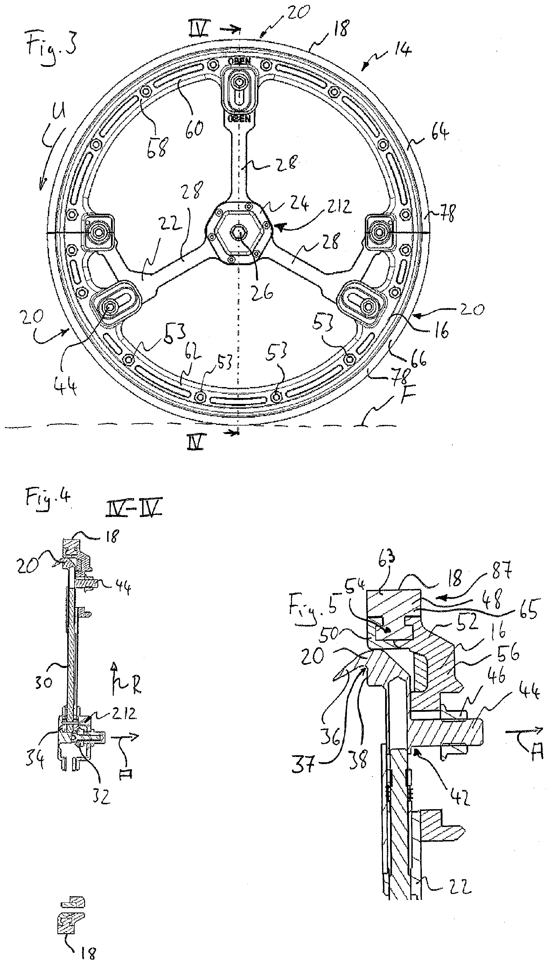

Ein Beispiel eines derartigen Aufsatzes 14 ist in Figur 3 gezeigt. Der Aufsatz 14 ist mit einem Laufflächenabschnitt 16 und mit einer Lauffläche 18 zur Kontaktierung einer Fahrbahn F ausgebildet. Der Laufflächenabschnitt 16 umfasst die Lauffläche 18. Die Lauffläche 18 entspricht dem zur Kontaktierung der Fahrbahn vorgesehenen Teil des Aufsatzes 14.

In Figur 3 ist der Aufsatz 14 bei Blick auf seine im Montagezustand dem Fahrzeugrad 1 abgewandte Seite gezeigt. Um den Umfang des Aufsatzes 14 bzw. der Lauffläche 18 verteilt sind mehrere Spannmittel 20 an dem Aufsatz 14 angeordnet. Die Spannmittel 20 sind in den Figuren 4 (die einen Schnitt entlang der Linie A-A zeigt) und 5 (die eine vergrößerte Darstellung des oberen Bereichs der Figur 4 zeigt) gut erkennbar.

Die Spannmittel 20 sind bei der gezeigten Ausführungsform Teil eines Montageabschnitts 22. Der Montageabschnitt 22 weist vorliegend einen Zentralabschnitt 24 auf, der eine im Wesentlichen 6-eckige Grundform aufweist und vorliegend eine Werkzeugansatzstelle 26 umfasst. Der Zentralabschnitt 24 bildet auch ein Gehäuse für einen Teil eines Getriebes 212.

Von dem Zentralabschnitt 24 des Montageabschnitts 22 weg erstrecken sich jeweils Stege 28 zu den Positionen der einzelnen Spannmittel 20 hin. Die Stege 28 sind als Umschalungen für Kopplungsmittel 30 ausgebildet. Die Stege 28 umschließen die Kopplungsmittel 30 nach axial außen sowie in Umfangsrichtung U hin. In axialer Richtung A zur Felge hin sind die Stege 28 vorliegend offen ausgeführt. Die Stege 28 können jedoch auch vollständig geschlossen (die Kopplungsmittel 30 vollständig umschließend) ausgeführt sein.

Die Kopplungsmittel 30 bilden gemeinsam mit einem Antriebskegelrad 32 und je Spannmittel einem Abtriebskegelrad 34, das mit dem Antriebskegelrad 32 zusammenwirkt, ein Getriebe 212. Die Werkzeugansatzstelle 26 ist mit dem Antriebskegelrad 32 gekoppelt. Bei Betätigung über die Werkzeugansatzstelle 26 rotiert das Antriebskegelrad 32 um die axiale Richtung A und wirkt mit dem Abtriebskegelrad 34 derart zusammen, dass dieses um die radiale Richtung R rotiert. Das Abtriebskegelrad 34 ist mit dem Kopplungsmittel 30 gekoppelt. Das Kopplungsmittel 30 ist vorliegend als Gewindestange ausgeführt. Die Gewindestange rotiert mit dem Abtriebskegelrad 34. Mit dem gegenüberliegenden Ende (also dem Ende, welches nicht mit dem Abtriebskegelrad gekoppelt ist), greift die Gewindestange in ein Gegengewinde an dem Spannmittel 20 ein. Durch Rotation des Kopplungsmittels 30 bzw. der Gewindestange 30 schraubt sich die Gewindestange 30 in das Spannmittel 20 weiter ein (bzw. aus) und das Spannmittel 20 wird hierdurch in radialer Richtung R bewegt. Je Spannmittel 20 greift ein Abtriebskegelrad 34 in das Antriebskegelrad 32. Auf diese Art und Weise werden durch Betätigung der Werkzeugansatzstelle 26 alle drei Spannmittel 20 gleichzeitig und gleichförmig bewegt. Bei Betätigung über die Werkzeugansatzstelle 26 werden die Spannmittel 20 rein translatorisch nach radial innen bzw. nach radial außen bewegt.

Die Spannmittel 20 sind in Figur 4 und 5 in einem Schnitt dargestellt, der sich entlang der sich in radialer Richtung R und axialer Richtung A erstreckenden Ebene erstreckt. Die Spannmittel umfassen einen in axialer Richtung A abragenden Hintergriffabschnitt 36.

Der Hintergriffabschnitt 36 ist dabei zum formschlüssigen Felgenhorn 10 ausgebildet. Der Hintergriffabschnitt 36 ist außerdem weiter derart ausgebildet, dass das Spannmittel 20, wenn es translatorisch radial einwärts bewegt wird, in den Hintergriff mit dem Felgenhorn 10 bewegt wird und sich in axialer Richtung A zum Felgenhorn 10 hin drängt.

Der Aufsatz 14 bzw. vorliegend die Spannmittel 20 weisen überdies Anlageabschnitte 38 auf. Die Anlageabschnitte 38 sind vorliegend also ein Teil des Spannmittels 20. Der Hintergriffabschnitt 36 geht in den Anlageabschnitt 38 über, wobei im Bereich des Übergangs zwischen dem Hintergriffabschnitt 36 und dem Anlageabschnitt 38 eine in axialer Richtung A verlaufende Einbuchtung 37 auf Seiten und oberhalb des Anlageabschnitts 38 vorliegt. Die Einbuchtung 37 dient dazu, es zu ermöglichen, dass der Anlageabschnitt 38 flächig am Felgenhorn 10 anliegen kann. Der Anlageabschnitt 38 erstreckt sich vorliegend in einer durch die radiale Richtung R und die umfängliche Richtung U aufgespannten Ebene. Durch das Kontaktieren des Anlageabschnitts 38 mit dem Felgenhorn 10 ist es möglich, den Aufsatz 14 in einer genau definierten Position gegenüber dem Felgenhorn 10 im Betriebszustand zu positionieren. Auf der Felgenhorn-Innenseite liegt der Hintergriffabschnitt 36 am Felgenhorn 10 an. Auf der Felgenhorn-Außenseite liegt der Anlageabschnitt 38 am Felgenhorn 10 an. Hierdurch ist ein formschlüssig sicherer Halt des Aufsatzes am Felgenhorn 10 gewährleistet und es besteht kein Spiel in axialer Richtung A. Insbesondere Spannmittel 20, die lediglich eine Krümmung aufweisen, in der das Felgenhorn 10 aufgenommen ist, vermögen eine derart feste Positionierung des Aufsatzes 14 in axialer Richtung A nicht zu gewährleisten, da das Felgenhorn 10 sich in dem gekrümmten Bereich hin und her bewegen kann.

Wie in Figur 5 weiterhin gut erkennbar ist, weisen die Spannmittel 20 je einen Befestigungsabschnitt 42 mit einer Befestigungseinrichtung 44 auf. Die Befestigungseinrichtung 44 ist vorliegend als einstückig mit dem Spannmittel 20 ausgebildeter Gewindebolzen 44 ausgeführt. Auf die Befestigungseinrichtung 44 ist ein entsprechendes Gegenstück 46 aufbringbar, das vorliegend als Schraubenmutter ausgebildet ist. Über die Befestigungseinrichtung 44 in Zusammenwirken mit dem Gegenstück 46 (der Schraubenmutter) ist es möglich, den Laufflächenabschnitt 16 an dem Spannmittel 20 zu befestigen und in axialer Richtung gegen ein Spiel gesichert an dem Spannmittel anzubringen. Der Laufflächenabschnitt 16 ist quasi zwischen dem Spannmittel 20 und dem Gegenstück 46 verklemmt bzw. verspannt. Durch die genaue Positionierung des Spannmittels 20 am Felgenhorn 10 über den Anlageabschnitt 38 und die Verklemmung des Laufflächenabschnitts 16 zwischen dem Spannmittel 20 und dem Gegenstück 46 mit der Befestigungseinrichtung 44 ist der Laufflächenabschnitt 16 und damit auch die Lauffläche 18 in einer gegenüber dem Felgenhorn 10 genau definierten Position am Fahrzeugrad 1 anbringbar. Bei Befestigung des Laufflächenabschnitts 16 über die Befestigungseinrichtung 44 bewegt sich der Laufflächenabschnitt 16 in axialer Richtung A zur Felge 2 hin.

Vorliegend ist die Lauffläche 18 auf einem Laufflächenkörper 48 angeordnet. Der Laufflächenkörper 48 ist im vorliegenden Beispiel als einstückig ausgebildetes Kunststoffelement ausgebildet (je umfängliches Segment des Laufflächenabschnitts 16 einstückig). Der Laufflächenkörper 48 ist zwischen einem axial innen liegenden ersten Teil des Laufflächenabschnitts 16 und einem radial außen liegenden zweiten Teil 52 des Laufflächenabschnitts 16 gehalten. Die beiden Teile 50 und 52 des Laufflächenabschnitts 16 sind über mehrere umfänglich verteilte Verbindungselemente 53, die vorliegend als Schraubverbindungen ausgebildet sind, gegeneinander verspannt. Die beiden Teile 50 und 52 des Laufflächenabschnitts 16 bilden eine schwalbenschwanzartige Aufnahme 54 für den Laufflächenkörper 48. In der Aufnahme 54 ist der Laufflächenkörper 48 formschlüssig gehalten. Die Aufnahme des Laufflächenkörpers 48 ist jedoch derart, dass dieser nicht kraftschlüssig zwischen den beiden Teilen 50 und 52 verklemmt ist, sondern mit einer Spielpassung in der Aufnahme 54 gehalten ist.

Eine Verschiebung des Laufflächenkörpers 48 in umfänglicher Richtung U gegenüber einem Stationärabschnitt 56 ist möglich.

Der Stationärabschnitt 56 ist vorliegend Teil des Laufflächenabschnitts 16 und umfasst die beiden Teile 50 und 52 des Laufflächenabschnitts 16. Der Stationärabschnitt 56 ist über die Befestigung mittels den Spannmitteln 20 derart gegenüber der Felge befestigt, dass er sich im Betriebszustand, also im Fahrbetrieb des Fahrzeugs nicht gegenüber der Felge bewegt (weder in umfänglicher noch in axialer oder radialer Richtung).

Im Gegensatz hierzu kann der Laufflächenkörper 48, und damit die Lauffläche 18, eine Relativbewegung in umfänglicher Richtung gegenüber dem Stationärabschnitt 56 des Laufflächenabschnitts 16, und damit gegenüber der Felge 10, durchführen. Vorliegend ist der Stationärabschnitt 56 auch gegenüber dem Montageabschnitt 22 im Betriebszustand bzw. in der vorgesehenen Befestigung für den Betrieb unbeweglich angeordnet.

Der Stationärabschnitt 56 umfasst vorliegend einen Ringabschnitt 58. Der Ringabschnitt 58 ist vorliegend durch die beiden Teile 50 und 52 gebildet und in Umfangsrichtung U geschlossen. Wie in Figur 3 erkennbar ist, ist der Ringabschnitt 58 in Umfangsrichtung U mehrteilig ausgebildet und weist ein erstes umfängliches Segment 60 und ein zweites umfängliches Segment 62 auf. Auch der Laufflächenkörper 48 weist ein erstes umfängliches Segment 64 des Laufflächenkörpers und ein zweites umfängliches Segment 66 auf (die vorliegend jeweils einstückig ausgebildet sind).

Der Aufsatz 14 der Figuren 3 bis 5 umfasst eine Dämpfungseinrichtung 87 in Form eines Laufflächenkörpers 48 mit über seine radiale Erstreckung variierender Steifigkeit bzw. Nachgiebigkeit. Der Laufflächenkörper 48 weist zur Bildung der Dämpfungseinrichtung 87 einen harten und wenig nachgiebigen radial außen liegenden Teil 63 auf, der auch die Lauffläche 18 bildet. Radial innenliegend hiervon weist der Laufflächenkörper 48 einen radial innen liegenden Teil 65 auf, der nachgiebiger als der radial außen liegende Teil 63 ausgebildet ist und sich leichter verformen lässt. Dabei liegt der radial innenliegende Teil 65 auf einem metallischen Abschnitt des Laufflächenabschnitts 16 auf und wird durch diesen gestützt. Bei Belastung durch Fahrbahnkontakt kann sich der radial innenliegende Teil 65 verformen und dämpft dadurch die Abrollbewegung des Aufsatzes 14. Der radial außen liegende Teil 63 und der radial innenliegende Teil 65 sind vorliegend einstückig miteinander ausgebildet, wobei beim Herstellungsprozess des Laufflächenkörpers 48 verschiedene Kunststoffarten miteinander kombiniert wurden, um die variable Nachgiebigkeit zu erhalten. Der Aufsatz 14 kann auch ohne die Dämpfungseinrichtung 87 ausgebildet sein oder auch mit einer andersartigen Dämpfungseinrichtung 87.

Zur Montage des Aufsatzes 14 kann zunächst der Montageabschnitt 22 mit den Spannmitteln 20 am Fahrzeugrad 1 angesetzt werden. Über die Werkzeugansatzstelle 26 können die Spannmittel 20 dann nach radial einwärts bewegt werden. Dabei hintergreifen die Spannmittel 20 das Felgenhorn 10 mit ihren Hintergriffabschnitten 36, bis der Anlageabschnitt 38 von axial außen her am Felgenhorn 10 anliegt. Damit ist die Position der Spannmittel 20 sowie des Montageabschnitts 22 genau definiert gegenüber dem Felgenhorn 10 festgelegt.

Anschließend kann zunächst eines der umfänglichen Segmente 60, 62 des Laufflächenabschnitts 16 an dem Montageabschnitt 22 angesetzt werden. Über eine Befestigung mittels der Befestigungseinrichtungen 44 kann das erste Segment 60 im oberen Bereich des Fahrzeugrades 1 fest am Fahrzeugrad bzw. an den Spannmitteln bzw. dem Montageabschnitt 22 befestigt werden. Anschließend kann das Fahrzeugrad 1 um eine halbe Umdrehung gedreht werden und das bereits befestigte umfängliche Segment 60 des Laufflächenabschnitts 16 kontaktiert die Fahrbahn. In dem nun oben liegenden Bereich (der zunächst unten angeordnete und die Fahrbahn kontaktierende Bereich) kann das zweite umfängliche Segment 62 des Laufflächenabschnitts 16 angebracht werden und damit der Ringabschnitt 58 in Umfangsrichtung U geschlossen werden. Auch das zweite umfängliche Segment wird mittels der Befestigungseinrichtung 44 gegenüber den Spannmitteln 20 befestigt. Wenn die Befestigung abgeschlossen ist, befindet sich der Aufsatz 14 im Betriebszustand und die Fahrt mit dem Fahrzeug kann trotz plattem Reifen fortgesetzt werden.

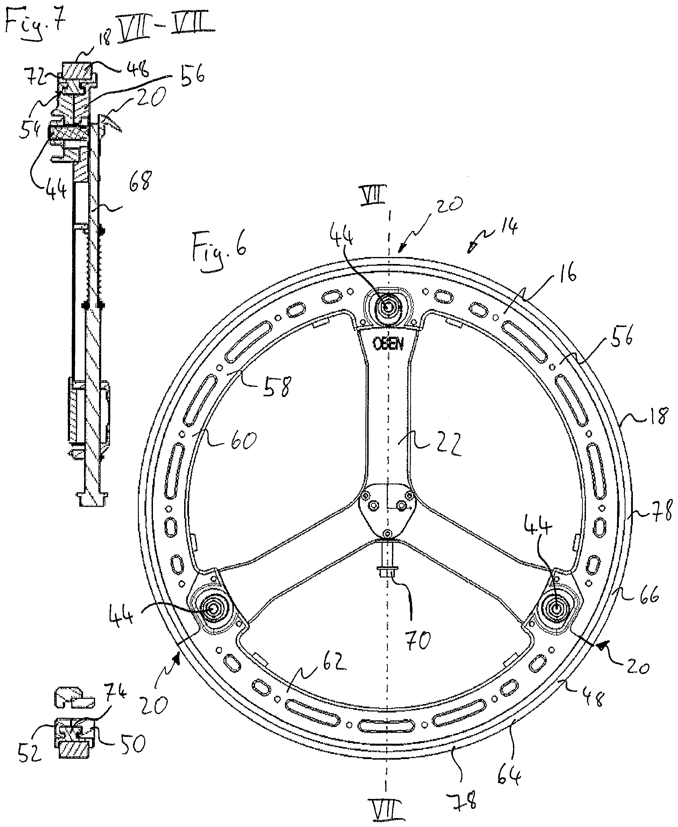

Figur 6 und 7 zeigen eine abgewandelte Ausführungsform des Aufsatzes 14. Der Aufsatz 14 weist ebenso ein erstes umfängliches Segment 60 und ein zweites umfängliches Segment 62 sowohl des Ringabschnitts 58 als auch entsprechend des Laufflächenkörpers 48 auf. Die umfänglichen Segmente des Laufflächenabschnitts 16 sind dabei im Verhältnis 1/3:2/3 aufgeteilt.

Die Spannmittel 20 sind in Figur 6 nicht sichtbar. In Figur 7 ist lediglich das in Figur 6 oben angeordnete Spannmittel 20 (der Schnittdarstellung entlang der Linie VII-VII) sichtbar.

Vorliegend ist lediglich das in Figur 7 sichtbare Spannmittel radial einwärts über eine Gewindestange 68 bewegbar. Die übrigen beiden Spannmittel 20 sind in einer festen Position gegenüber dem Montageabschnitt 22 angeordnet. Die Gewindestange 68, die ein Aktuierungsmittel darstellt, weist eine Werkzeugansatzstelle 70 auf, mittels der das Spannmittel 20 in radialer Richtung R bewegbar ist.

Bei dem Aufsatz gemäß den Figuren 6 und 7 ist weiter vorgesehen, dass der die Lauffläche 18 tragende Laufflächenkörper 48 nicht direkt mit dem Ringabschnitt 58 des Stationärabschnitts 56 gekoppelt ist. Zur Lagerung des Laufflächenkörpers 48 weist der Aufsatz 14 aus Figur 6 und 7 ein Gleitelement 72 auf, das zum einen mit dem Laufflächenkörper 48 unbeweglich verbunden ist und zum anderen in die Aufnahme 54 des Ringabschnitts 58 (umfänglich geschlossen) eingreift. Hierzu bildet der Ringabschnitt 58 beidseitig durch seine beiden Teile 50 und 52 eine Doppelnut, in die ein T-förmiger Teilabschnitt 74 des Gleitelements 72 eingreift (gegenüber dem Stationärabschnitt 56 in Umfangsrichtung U beweglich gelagert; mittels formschlüssigen Hintergriffs am Stationärabschnitt 56 in radialer Richtung R formschlüssig gehalten).

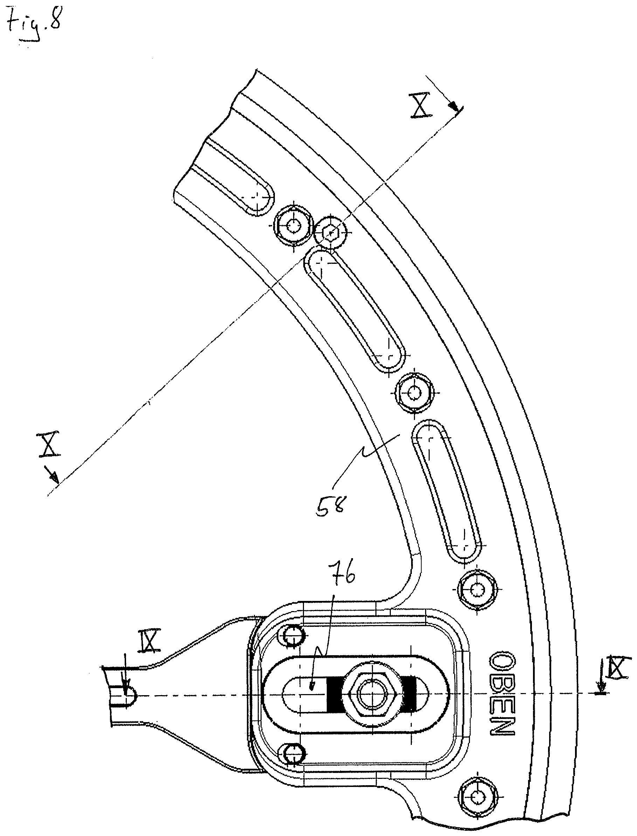

Die Figuren 8 bis 10 zeigen einen Aufsatz 14 bzw. Ausschnitte eines Aufsatzes 14, der in Bezug auf den Laufflächenkörper 48 sowie das Gleitelement 76 ähnlich dem aus Figur 6 und 7 aufgebaut ist. In Bezug auf den Montageabschnitt 22 und die Ausbildung des Laufflächenabschnitts 16 ist der Aufsatz 14 ähnlich dem aus Figuren 3 bis 5 gezeigten Aufsatz aufgebaut. Auch die Spannmittel 20 und deren Betätigung entsprechen im Wesentlichen der Version von Figur 3 bis 5.

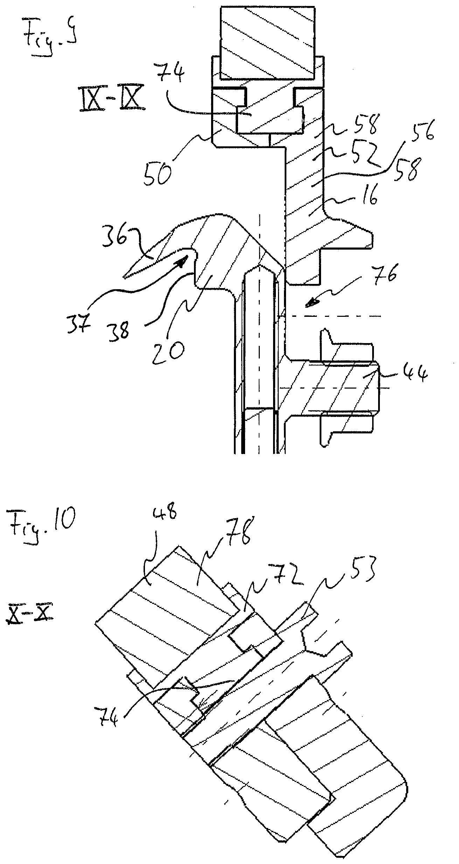

In Figur 9 und 10 ist gut erkennbar, wie das Gleitelement 72 zwischen den Teilen 50 und 52 des Laufflächenabschnitts 16 bzw. des Ringabschnitts 58 gehalten ist. Dabei ist in Figur 10 gut erkennbar, dass die beiden Teile 50 und 52 mittels der Schrauben 53, die Verbindungselemente darstellen, gegeneinander verspannt sind. Erkennbar ist auch, dass der Ringabschnitt 58 bzw. der Stationärabschnitt 56 über Langlöcher 76 mit den Befestigungseinrichtungen 44 verbunden ist. Dies ermöglicht es, dass durch die in radialer Richtung R gegebene Bewegungsfreiheit der Spannmittel 20 (im unverspannten Zustand der Befestigungseinrichtungen 44) der Aufsatz 14 für verschiedene Felgendurchmesser eingesetzt werden kann.

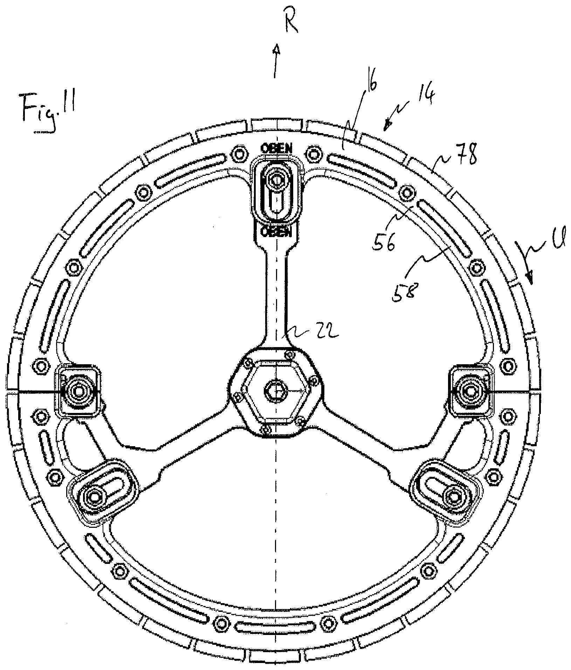

In den Figuren 11 bis 13 ist ein weiterer erfindungsgemäßer Aufsatz dargestellt. Der weitere erfindungsgemäße Aufsatz 14 aus den Figuren 11 bis 13 ist bezüglich seines Montageabschnitts 22 und der Befestigung mittels der Spannmittel 20 sowie der Ausbildung des Laufflächenabschnitts 16 bzw. der ringförmigen Elemente 58, ähnlich dem der Figuren 3 bis 5, aufgebaut. Der Laufflächenabschnitt 16 unterscheidet sich jedoch gegenüber dem von Figur 3 dadurch, dass kein durchgängiger Laufflächenkörper 48 vorgesehen ist. Der Laufflächenkörper 48 weist eine Vielzahl an einzelnen (voneinander getrennt ausgebildeten) Laufflächensegmenten 78 auf. Die Laufflächensegmente 78 sind gleichmäßig um den Umfang des Aufsatzes 14 verteilt angeordnet. Die Laufflächensegmente 78 sind jeweils gegenüber dem Stationärabschnitt 56, der den Ringabschnitt 58 umfasst, in Umfangsrichtung U beweglich angeordnet.

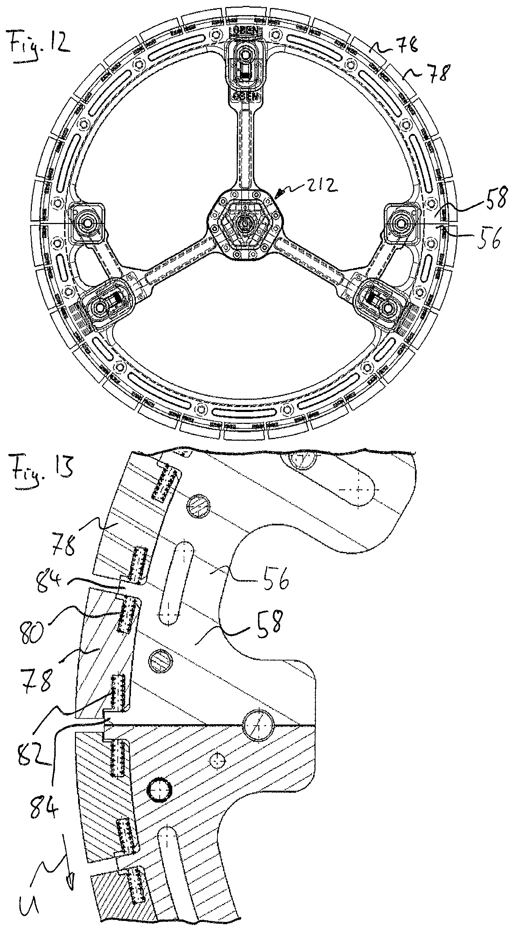

Die einzelnen Laufflächensegmente 78 sind, wie in Figur 13 (die eine halbtransparente Darstellung zeigt) jeweils federnd gegenüber dem Ringabschnitt 58 gelagert. Hierzu ist jedes der Laufflächensegmente 78 in Umfangsrichtung beidseitig über ein erstes elastisches bzw. federndes Element 80 und ein zweites elastisches bzw. federndes Element 82 in beiden umfänglichen Richtungen gegenüber Anlageabschnitten 84 des Stationärabschnitts 56 verspannt.

Vorliegend sind die elastischen bzw. federnden Elemente 80 und 82 jeweils als mechanische Druckfedern ausgebildet. Es sind jedoch auch andere federnde Elemente 80 denkbar. Bei den vorangehend beschriebenen Ausführungsformen bildet jeweils der Laufflächenkörper 48 in seiner Gesamtheit bzw. seine beiden umfänglichen Segmente je ein Laufflächensegment 78. Bei den vorangehend beschriebenen Ausführungsformen (Figuren 3 bis 10) ist die Bewegungsmöglichkeit der jeweiligen Laufflächensegmente 64, 66 in umfänglicher Richtung U nicht eingeschränkt. Bei der Version von Figuren 11 bis 13 hat jedes einzelne Laufflächensegment 78 jedoch nur einen begrenzten Bewegungsspielraum in umfänglicher Richtung U.

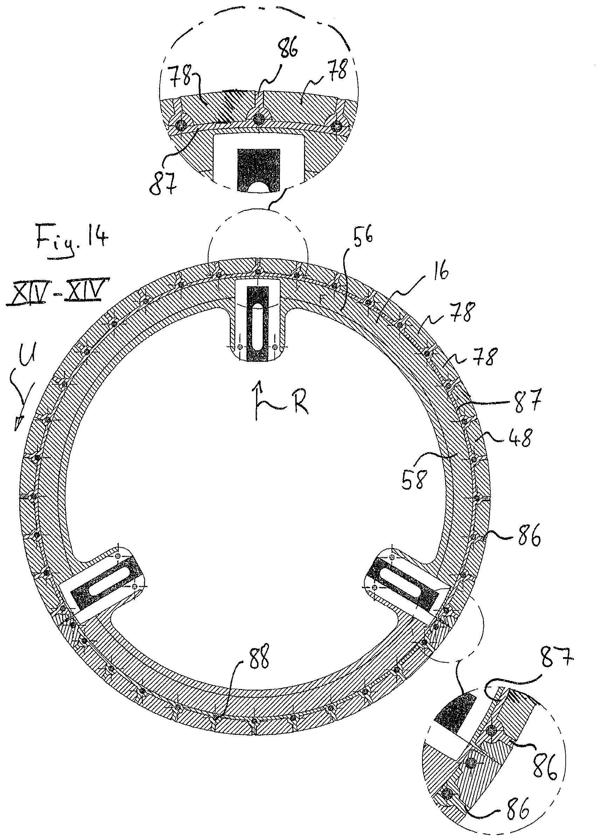

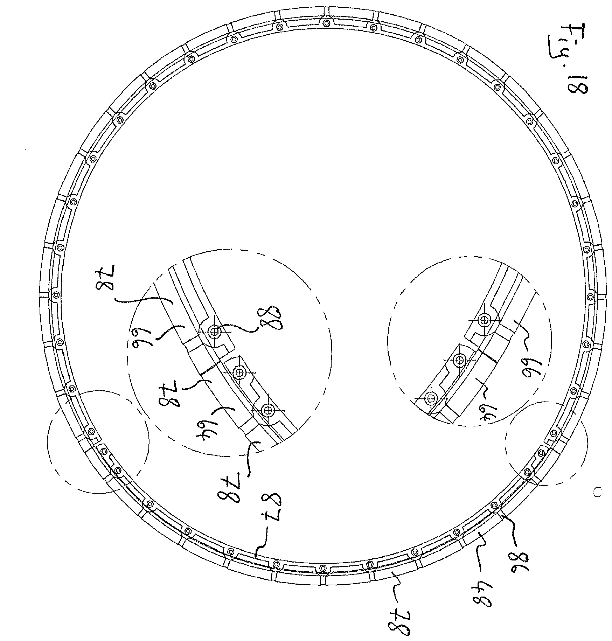

Figuren 14 bis 18 illustrieren einen weiteren erfindungsgemäßen Aufsatz 14. Der Aufsatz 14 der eben genannten Figuren umfasst einen Montageabschnitt ähnlich der Version von Figuren 6 und 7. Der Montageabschnitt 22 ist jedoch in den Figuren nicht gezeigt.

Der Aufsatz aus Figur 14 umfasst einen Laufflächenabschnitt 16, der den Stationärabschnitt 56 sowie die Lauffläche 18 (bzw. einen in mehrere Laufflächensegmente 78 aufgeteilten Laufflächenkörper 48) umfasst. Die einzelnen Laufflächensegmente 78 sind in Umfangsrichtung U zueinander beabstandet. In den Zwischenräumen der einzelnen Laufflächensegmente 78 weist der Laufflächenabschnitt 16 elastische bzw. federnde Elemente 86 auf. Die elastischen bzw. federnden Elemente 86 sind unterhalb der Laufflächensegmente 78 (radial innenliegend von den Laufflächensegmenten 78) miteinander verbunden, so dass die Verbindung der elastischen bzw. federnden Elemente 86 eine Dämpfungseinrichtung 87 zur Dämpfung der Lauffläche 18 in radialer Richtung R bildet.

Die federnden Elemente 86 sind jeweils über Befestigungsmittel 88 gegenüber dem Stationärabschnitt an einer Bewegung in umfänglicher Richtung U gesichert. Die Befestigungsmittel 88 erstrecken sich durch die miteinander verbundenen federnden Elemente 86 in axialer Richtung A hindurch.

Durch die Anordnung der federnden Elemente 86, welche sich zwischen den einzelnen Laufflächensegmenten 78 erstrecken, in Kombination mit der in radialer Richtung zwischen dem Stationärabschnitt 56 und den einzelnen Laufflächensegmenten 78 angeordneten Dämpfungseinrichtung 87 (die vorliegend durch die Verbindung der federnden Elemente 86 miteinander gebildet ist) sind die einzelnen Laufflächensegmente sowohl in umfänglicher Richtung U beweglich (entgegen der Federung durch die federnden Elemente 86) als auch in radialer Richtung beweglich bzw. gedämpft.

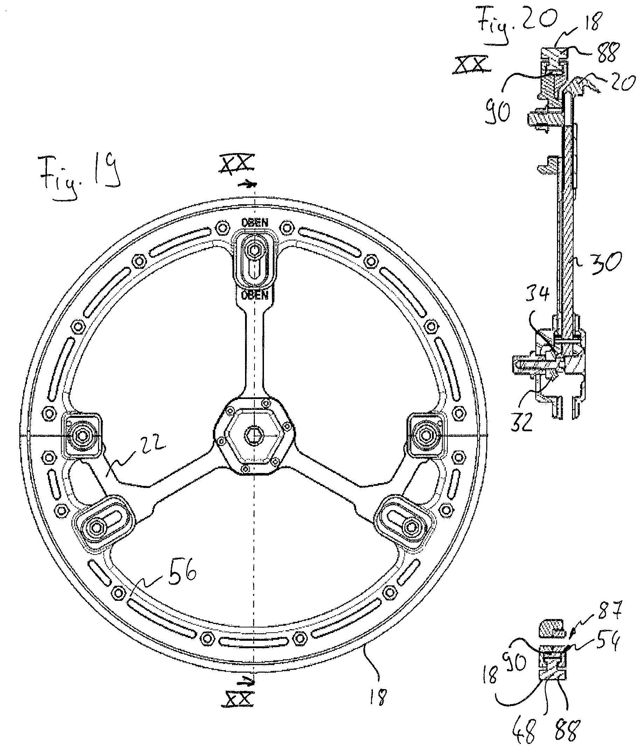

In den Figuren 19 und 20 ist eine weitere Ausführungsvariante eines erfindungsgemäßen Aufsatzes 14 illustriert. Der Montageabschnitt 22 sowie der Stationärabschnitt 56 sind entsprechend der Variante von Figur 3 bis 5 ausgebildet. Die Variante von Figur 19 und 20 unterscheidet sich von der Variante der Figur 3 bis 5 dadurch, dass der Laufflächenkörper 48 zwar ebenso in der Aufnahme 54 angeordnet ist, jedoch radial innen liegend von einem äußeren, die Lauffläche 18 tragenden Abschnitt 88 des Laufflächenkörpers 48 ein vom Laufflächenkörper 48 getrennter innenliegender Dämpfungsabschnitt 90 angeordnet ist, der eine geringere Härte als der außen liegende Abschnitt 88 aufweist. Der Dämpfungsabschnitt 90 bildet eine Dämpfungseinrichtung 87.

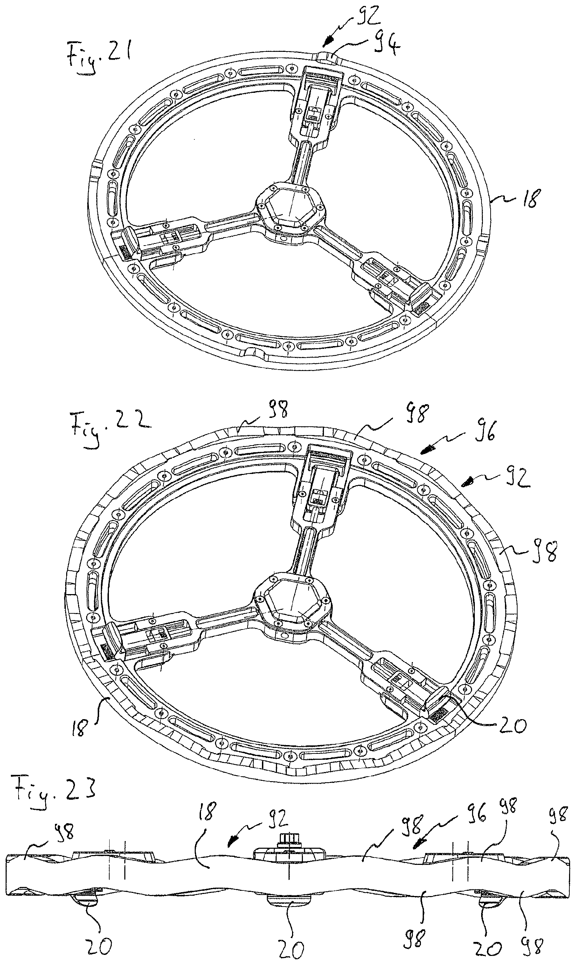

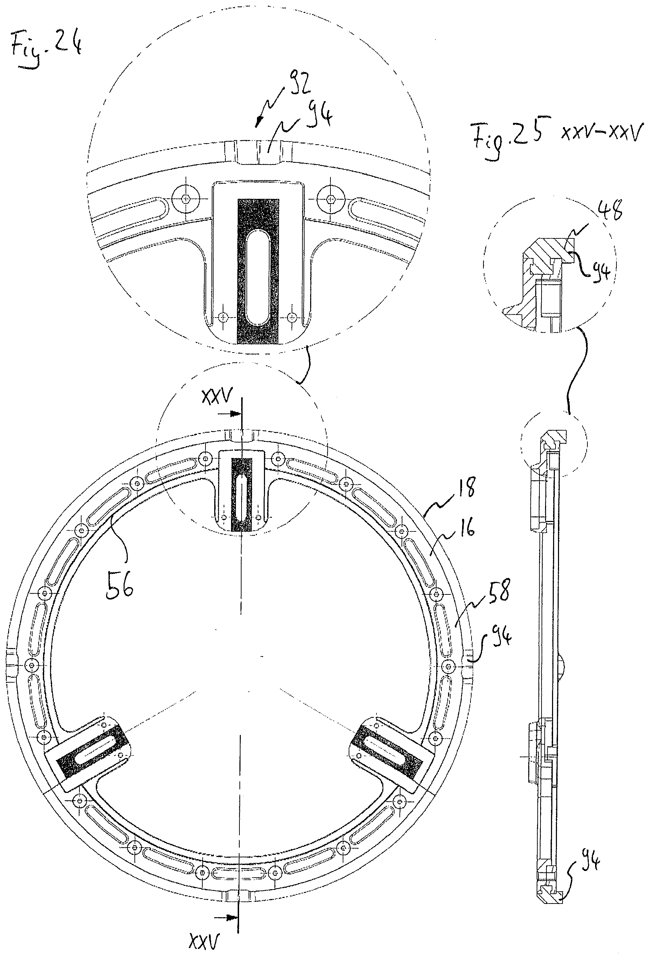

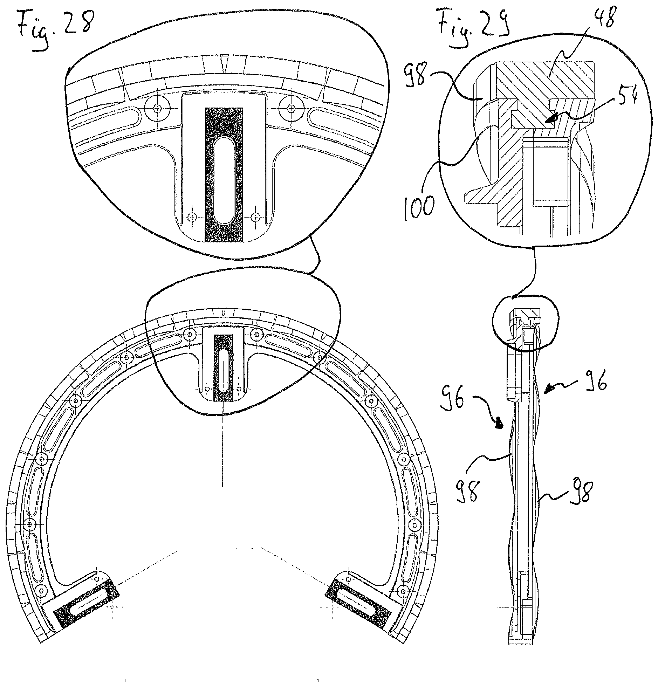

Die Figuren 21 bis 29 illustrieren drei Ausführungsformen von Aufsätzen 14, die jeweils eine Ausfahrhilfe 92 umfassen. Die Ausfahrhilfe 92 dient dazu, das Ausfahren des Aufsatzes 14 aus einer rillenartigen Vertiefung in der Fahrbahn zu vereinfachen bzw. zu verbessern. Derartige rillenförmige Vertiefungen in der Fahrbahn treten beispielsweise bei Straßen mit U-Bahn-Schienen auf. Hier kann in bestimmten Fahrsituationen der Aufsatz in eine derartige Vertiefung geraten und es ist dann wünschenswert, dass das Ausfahren aus der Vertiefung in einfacher Art und Weise möglich ist.

Hierzu (zur Bildung der Ausfahrhilfe 92) können einzelne, in axialer Richtung A (das kann nach axial innen oder nach axial außen sein) gerichtete auskragende Bereiche 94 vorgesehen sein. Eine derartige Variante ist in den Figuren 21 sowie 24 und 25 illustriert.

Der Laufflächenkörper 48 bzw. die Lauffläche kann auch eine Wellenstruktur 96, die eine Vielzahl an axial auskragenden wellenförmigen Abschnitten 98 umfasst, aufweisen. In den Figuren 22 sowie 26 und 27 ist eine erfindungsgemäße Ausführungsform illustriert, bei der die axial auskragenden wellenförmigen Abschnitte 98 in axialer Richtung A zur Felge 2 hin ausgebildet sind.

In den Figuren 23 und 28 bis 29 ist eine Ausführungsform illustriert, bei der in axialer Richtung A beidseitig, also sich zur Felge 2 hin und von der Felge 2 weg erstreckend, eine Wellenstruktur 96 mit wellenförmigen Abschnitten 98 vorgesehen ist. Mit anderen Worten diese Ausführungsform weist jeweils in beide axiale Richtungen A auskragenden wellenförmige Abschnitte 98 auf. Mit einer Wellenstruktur ist dabei gemeint, dass die auskragenden Bereiche (Wellenberge) in zurückgesetzte Bereiche (Wellentäler) übergehen und umgekehrt.

Bei den illustrierten Ausführungsformen mit der Ausfahrhilfe 92 kann vorgesehen sein, dass der Laufflächenkörper 48 sich gegenüber dem Stationärabschnitt 56 in Umfangsrichtung bewegen kann, insbesondere vollständig um den Stationärabschnitt 56 rotieren kann. Der Laufflächenkörper 48 kann auch eine Mehrzahl an beweglich (in Umfangsrichtung) angeordneten Laufflächensegmenten 78 umfassen. Ein vollständig um den Stationärabschnitt 56 rotierbarer Laufflächenkörper 48 kann bspw. mittels einer Spielpassung in der entsprechenden Ausnehmung 54 angeordnet sein.

Alternativ ist erfindungsgemäß auch denkbar, dass der Laufbelag 48 fest in der Aufnahme 54 verspannt ist, so dass keine Relativbewegung möglich ist. Bei der Ausführungsform von Figur 21 sowie 24 und 25 ist vorgesehen, dass die Ausfahrhilfe lediglich durch den Laufflächenkörper 48 gebildet ist. Gleiches gilt für die Ausführungsform von Figur 22 sowie 26 und 27.

In Figur 23 sowie 28 und 29 ist eine Ausführungsform mit einem Stützabschnitt 100 illustriert. Bei dieser Ausführungsform umfasst die Ausfahrhilfe 92 also die axial auskragenden wellenförmigen Abschnitte 98, die durch den Laufflächenkörper 48 sowie einen darunter liegenden, in axialer Richtung A einwärts davon liegenden Stützabschnitt 100 gebildet sind. Der Stützabschnitt 100 wiederum ist aus einem metallischen Material gebildet und erhöht die Festigkeit der Ausfahrhilfe 92. Der Stützabschnitt 100 kann, wenn der Laufflächenköper 48 bzw. die Lauffläche 18 nicht relativ zum Stationärabschnitt 56 bewegbar ist, stoffschlüssig und/oder kraft- und/oder formschlüssig mit dem Laufflächenkörper 48 verbunden sein. Alternativ ist es auch möglich, dass der Stützabschnitt 100 lediglich den Laufflächenkörper 48 von radial innen her stützt und dieser Laufflächenkörper 48 sich aufgrund einer Spielpassung in der Aufnahme 54 bewegen kann. Andere Arten der Einrichtung der Beweglichkeit des Laufflächenkörpers 48 gegenüber dem Stationärabschnitt 56 sind ebenso in Kombination mit der Ausfahrhilfe 92 denkbar. Es ist bspw. denkbar einen ringförmigen, bspw. metallischen, Stützabschnitt 100 vorzusehen, der stoffschlüssig und/oder kraft- und/oder formschlüssig mit dem Laufflächenkörper 48 verbunden ist und gegenüber dem Stationärabschnitt 56 in umfänglicher Richtung rotierbar gelagert ist.

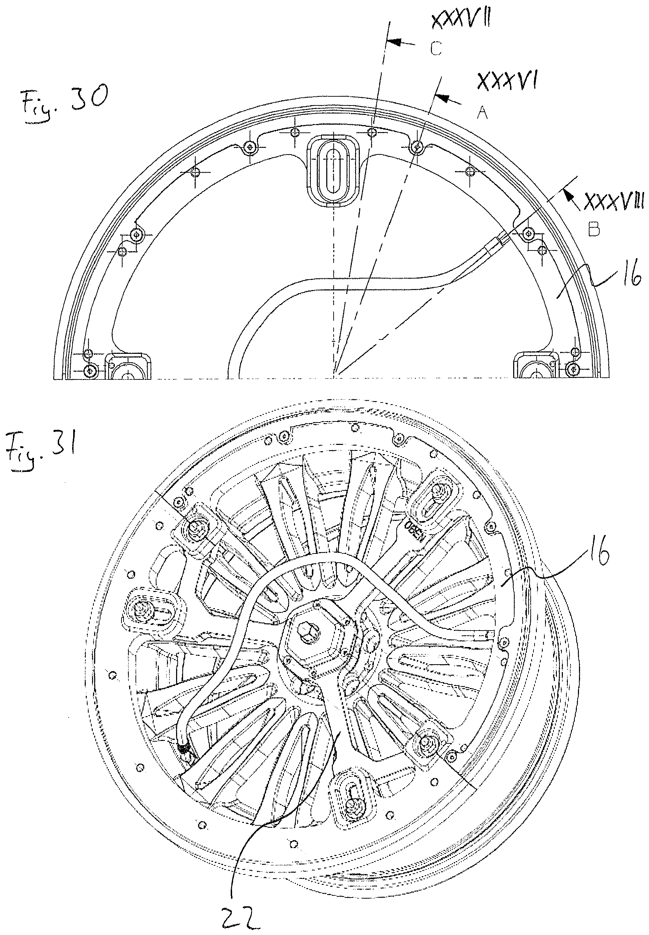

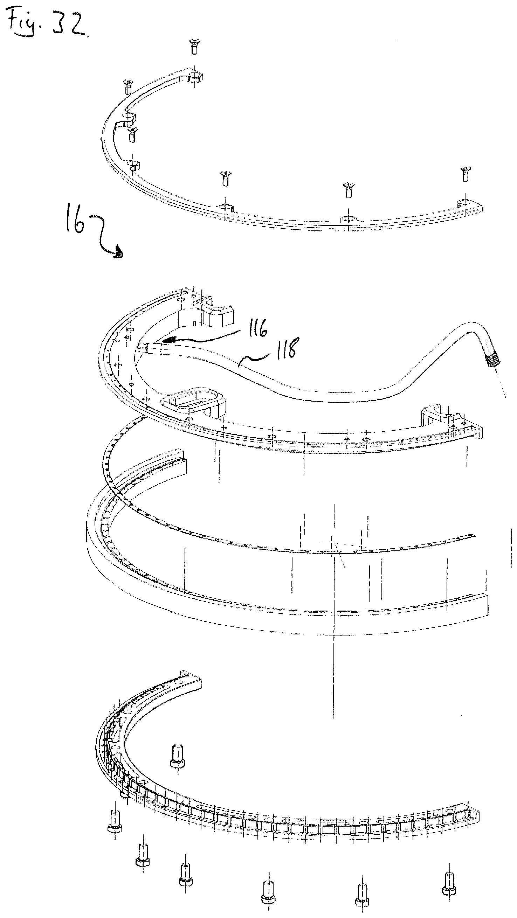

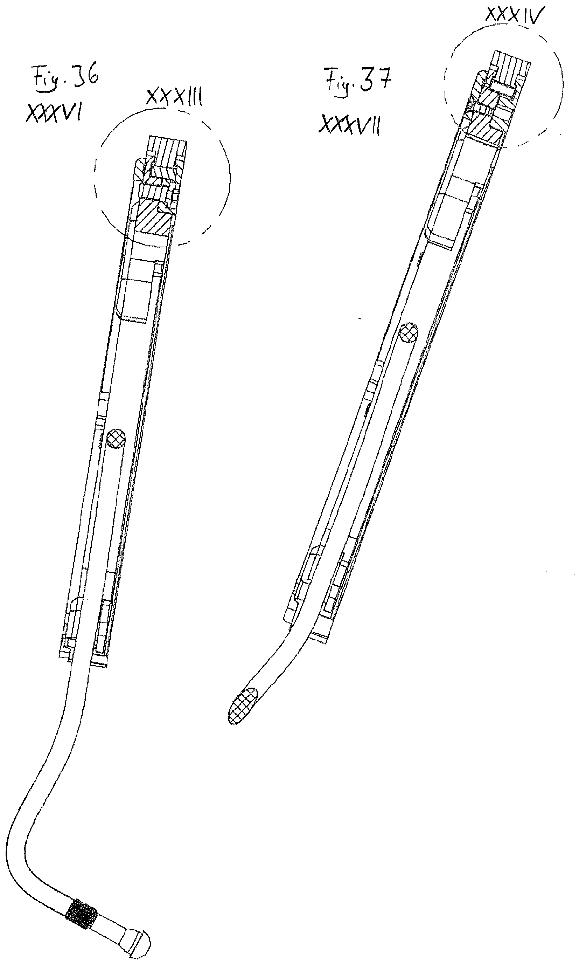

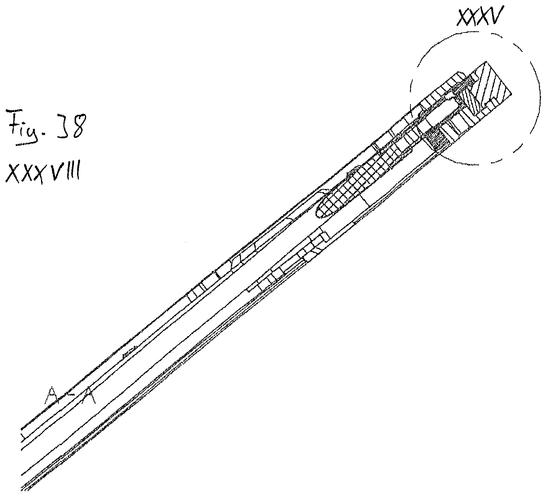

Die Figuren 30 bis 38 zeigen eine weitere Ausführungsform gemäß der vorliegenden Erfindung bei der in diesen Figuren gezeigten Ausführungsform ist vorgesehen, dass der Aufsatz 14 eine Druckerzeugungseinrichtung 102 umfasst. Die Druckerzeugungseinrichtung 102 umfasst vorliegend mehrere Hohlräume 104, die in radialer Richtung R im unteren (radial inneren) Bereich des Laufflächenbelags 48 angeordnet sind. Der Laufflächenbelag 48 ist hierzu mit einem massiven äußeren Abschnitt 106 ausgebildet, an den ein radial innenliegender Abschnitt 108 angrenzt, dieser radial innenliegende Abschnitt 108 umfasst die Hohlräume 104.

Des Weiteren ist der radial innenliegende Abschnitt 108 nachgiebiger ausgebildet als der außenliegende Abschnitt 106 beziehungsweise der radial innenliegende Abschnitt 108 ist aus einem weicheren Material gebildet, so dass der innenliegende Abschnitt 108 beim Kontakt des außenliegenden Abschnitts 106 (beziehungsweise der durch ihn getragenen Lauffläche 18) mit der Fahrbahn komprimiert wird. Die Hohlräume 104 werden dabei ebenso komprimiert. Das in den Hohlräumen 104 befindliche fluide Medium (vorliegend Luft) ist durch die Kompression unter Druck setzbar.

Die Hohlräume 104 sind hierzu radial innenliegend von der Lauffläche 18 angeordnet und die Hohlräume 104 sind derart ausgebildet, dass ihre Wand 110 sich durch das Gewicht des Fahrzeugs bewegen kann. Die radial außenliegende Wand 110 des Hohlraums 104 bildet also einen beweglichen Wandabschnitt 112 des Hohlraums 104. Der bewegliche Wandabschnitt 112 bewegt sich bei einer Kompression des Hohlraums nach radial innen. Es kann vorgesehen kann, dass die mehreren Hohlräume 104 über eine Sammelleitung 114 miteinander verbunden sind.

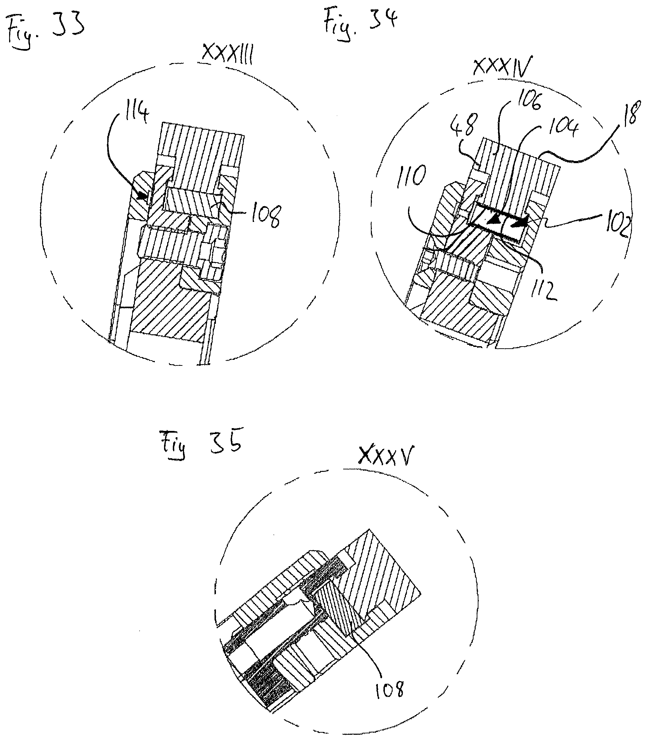

Wie in Figur 33 erkennbar ist die Sammelleitung 114 vorliegend in Form einer umlaufenden Nut an dem Stationärabschnitt 56 des Aufsatzes 14 ausgebildet. Die Sammelleitung 114 mündet dann an einer Kopplungsstelle 116 in eine Verbindungsleitung 118. Die Verbindungsleitung 118 ist an den in seinem Fahrverhalten beeinträchtigenden Reifen ankoppelbar, so dass dieser mit Druckluft bei der Bewegung des Aufsatzes 14 versorgbar ist und dadurch aufgepumpt werden kann, so dass er zusätzlich zu dem Aufsatz 14 die Fahrt unterstützt.

Der Montageabschnitt 22 der Ausführungsform der Figuren 30 bis 38 ist entsprechend dem Montageabschnitt 22 der Ausführungsform der Figur 3 bis 5 ausgebildet. Es kann eine in Umfangsrichtung U bewegliche Lauffläche 18 beziehungsweise in Umfangsrichtung U bewegliche Laufflächensegmente 78 vorgesehen sein. Es kann auch vorgesehen sein, dass der in Umfangsrichtung länglich erstreckte Laufflächenkörper 48, der beispielsweise zwei umfängliche Segmente umfassen kann, um die Rotationsachse des Fahrzeugrads gegenüber dem Stationärabschnitt 56 des Aufsatzes 14 rotierbar ist. Es kann dabei beispielsweise vorgesehen sein, dass der radial innenliegende Abschnitt 108 mit den Hohlräumen 104 beziehungsweise der Druckerzeugniseinrichtung 102 unbeweglich gegenüber dem Stationärabschnitt 56 angeordnet ist und lediglich der radial äußere Abschnitt 106 des Laufflächenkörpers 48 in Umfangsrichtung beweglich ist. Es kann jedoch auch vorgesehen sein, dass der radial innere Abschnitt 108 und der radial äußere Abschnitt 106 gemeinsam in umfänglicher Richtung U bewegbar sind.

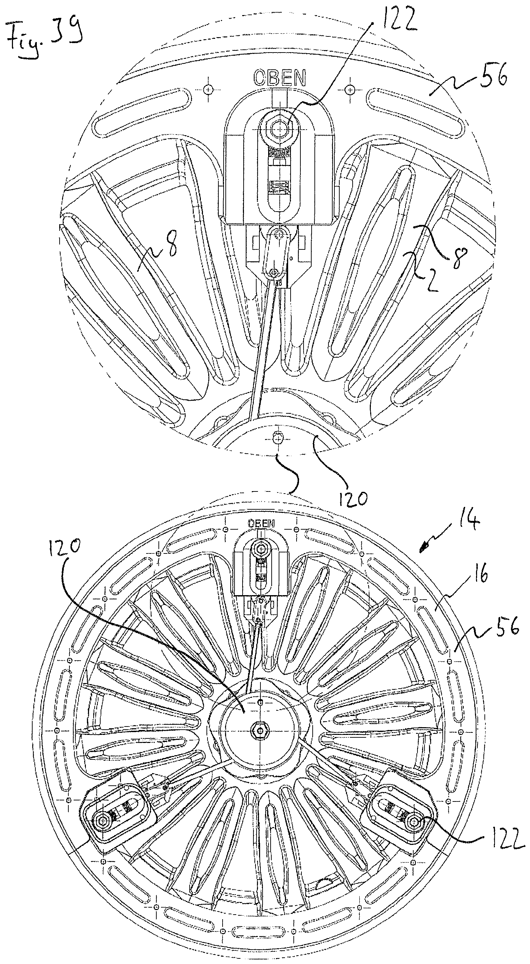

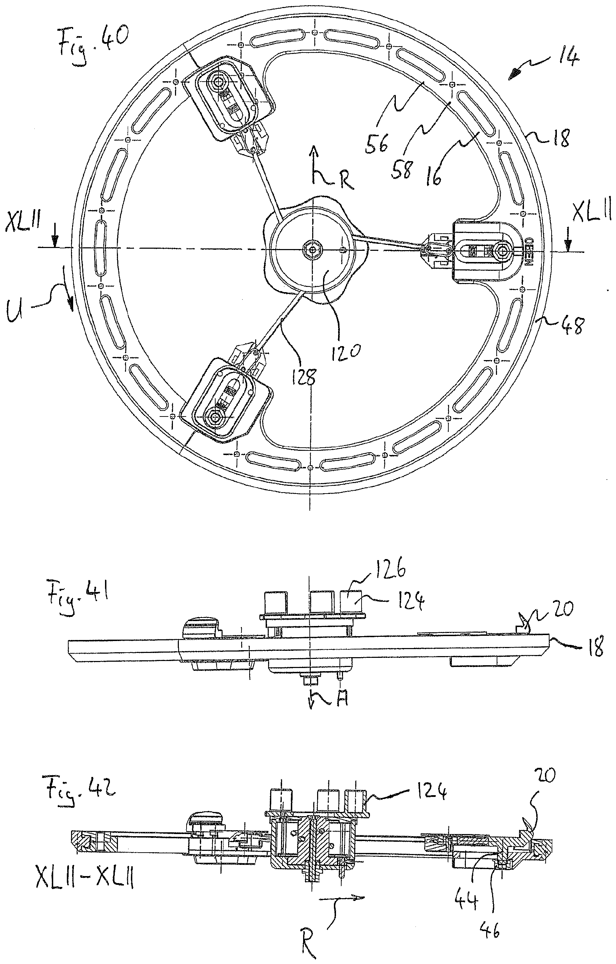

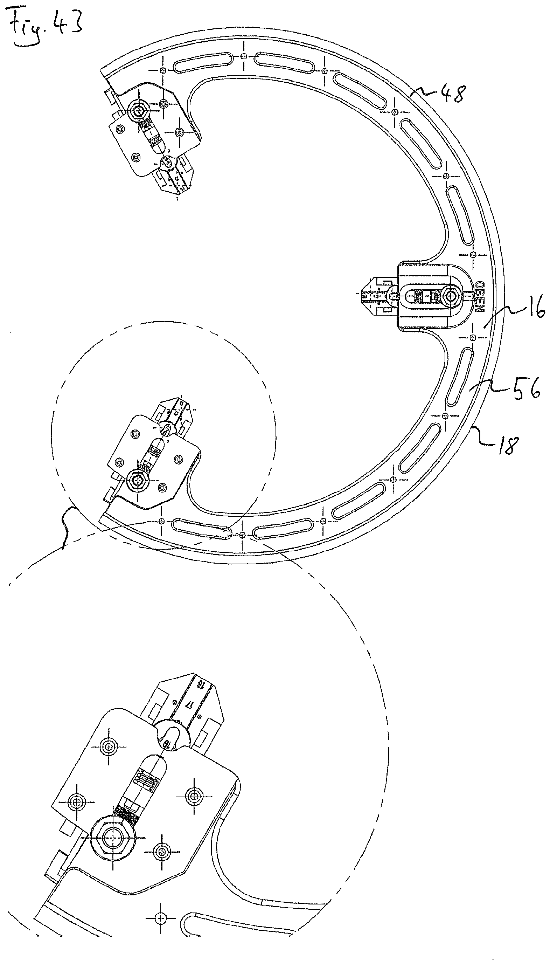

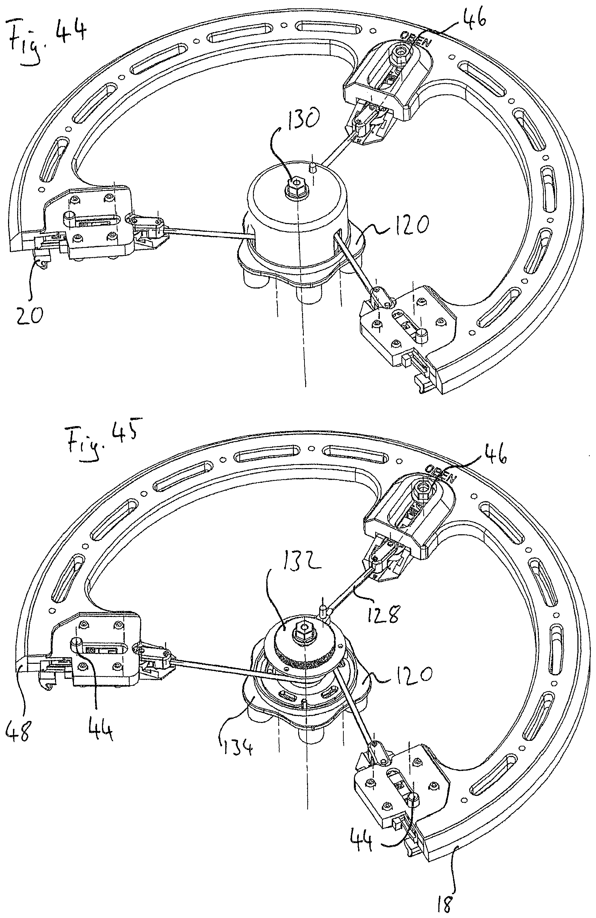

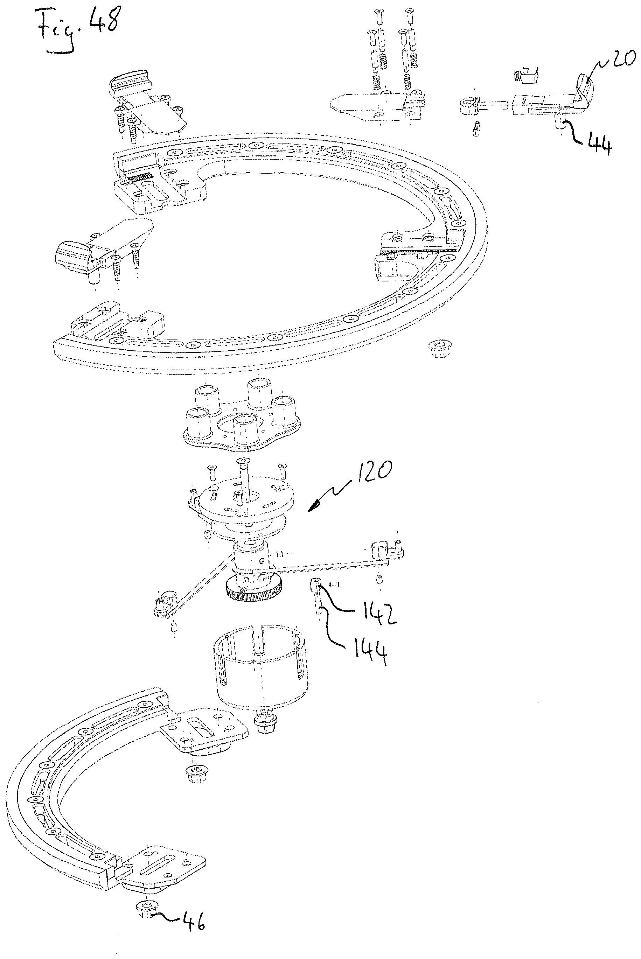

Die Figuren 39 bis 48 zeigen eine weitere erfindungsgemäße Ausführungsform eines Aufsatzes 14. Der Aufsatz 14 der Figuren 39 bis 48 weist einen Laufflächenabschnitt 16 bzw. Stationärabschnitt 56 auf, an welchem die Spannmittel 20 angeordnet sind. Diese Ausführungsform des Aufsatzes 14 weist außerdem eine Verspanneinheit 120 auf. Die Verspanneinheit 120 ist ausgebildet, um die Spannmittel 20 in Hintergriff mit dem Felgenhorn 10 zu bringen. Die Verspanneinheit 120 ist dabei derart ausgebildet, dass sie vom Laufflächenabschnitt 16 bzw. Stationärabschnitt 56 lösbar ist und es vorgesehen ist, dass die Verspanneinheit 120 im Betriebszustand mit dem Aufsatz 14 beziehungsweise dem Stationärabschnitt 56 unverbunden ist und sich nicht am Fahrzeugrad 1 befindet.

Die Spannmittel 20 werden, wenn sie in Hintergriffstellung mit dem Felgenhorn 10 bewegt wurden, mit Sicherungsmitteln 122 die auf entsprechende Gewindebolzen, die an den Spannmitteln 20 angeordnet sind, aufgeschraubt werden, befestigt und gegen ein Spiel gegenüber dem Stationärabschnitt 56 gesichert. Die sich von den Spannmitteln 20 weg erstreckenden Gewindebolzen bilden Befestigungseinrichtung 44. Die Verspannung über die Befestigungseinrichtung 44 fixiert die Spannmittel gegenüber der Felge 2 und gegenüber dem Stationärabschnitt 56. Diese Befestigung mit den Sicherungsmitteln 122 und den Gewindebolzen entspricht also der Befestigung mittels der Befestigungseinrichtung 44 mit dem Gegenstück 46, wie sie in Bezug auf die Figuren 3 bis 5 beschrieben wurde.

Die Verspanneinheit 120 weist vorliegend eine Abstützeinrichtung 124 auf. Die Abstützeinrichtung 124 ist derart angeordnet und ausgebildet, dass sie die Verspanneinheit 120 in axialer Richtung A von der Felge 2 beabstandet abstützt. Vorliegend umfasst die Abstützeinrichtung 124 mehrere hülsenartig ausgebildete Aufsetzeinrichtungen 126. Die Aufsetzeinrichtungen 126 sind ausgebildet und angeordnet, um auf die Radschrauben aufgesetzt zu werden und die Verspanneinheit 120 gegenüber den Radschrauben abzustützen.

Die Verspanneinheit 120 umfasst mehrere Kraftübertragungsmittel 128, die dazu angeordnet und ausgebildet sind, um mit den Spannmitteln 20 in Verbindung gebracht zu werden und die Spannmittel 20 in Hintergriffstellung mit dem Felgenhorn 10 zu überführen. Vorliegend wird das Überführen in diese Hintergriffstellung mit dem Felgenhorn 10 durch eine nach radial einwärts gerichtete Zugbewegung auf die Spannmittel 20 ausgeübt. Hierzu wird über eine Werkzeugansatzstelle 130 der Verspanneinheit 120 eine radial einwärts gerichtete Zugkraft mittels der Kraftübertragungsmittel 128 auf die Spannmittel 20 übertragen.

Die Kraftübertragungsmittel 128 sind vorliegend biegeschlaff ausgebildet. Vorliegend sind sie als seilartige Verbindungsmittel ausgebildet.

Durch eine Rotation eines Spannabschnitts 132 der Verspanneinheit 120 gegenüber einem Basisabschnitt 134 beziehungsweise gegenüber dem Stationärabschnitt 56 des Aufsatzes 14, wird die effektive Länge der Kraftübertragungsmittel 128 durch ein Aufwickeln auf dem Spannabschnitt 132 verkürzt und die Spannmittel 20 werden über die Kopplung mit den Kraftübertragungsmitteln 128 (seilartige Verbindungsmittel) radial einwärts bewegt, beziehungsweise vorliegend gezogen.

Eine Verspanneinheit 120 im Sinne der Erfindung kann einen Basisabschnitt 134 aufweisen, der vorzugsweise derart ausgebildet ist, dass er sich an der Felge 2 vorzugsweise an Radbolzen beziehungsweise an Radschrauben abstützen kann und hierdurch auch eine Sicherung gegen eine Rotation um die Drehachse 5 bzw. die axiale Richtung A erhält.

Weiter kann eine Verspanneinheit 120 im Sinne der vorliegenden Erfindung einen Spannabschnitt 132 umfassen, der gegenüber dem Basisabschnitt rotierbar ist, wodurch die Spannmittel 20 in die Hintergriffstellung überführbar sind.

Vorzugsweise kann eine Verspanneinheit 120 Kraftübertragungsmittel 128 aufweisen, die vorzugsweise in ihrer länglichen Erstreckung (bzw. in ihrer Erstreckung in radialer Richtung) verkürzbar sind.

Es ist ebenso denkbar, dass die Kraftübertragungsmittel 128 in ihrer Radialerstreckung (bei an sich gleichbleibender Länge) verkürzbar sind beispielsweise durch ein Verschwenken, so dass ihre Länge an sich zwar gleich bleibt aber durch eine Umorientierung eine Verkürzung ihrer radialen Erstreckung erfolgt.

Die Verspanneinheit 120 kann weiter eine Rasteinrichtung 136 umfassen, die eine Sicherung gegen ein ungewolltes Lösen der Verdrehung beziehungsweise der Verspannung des Spannabschnitts 132 gewährleistet.

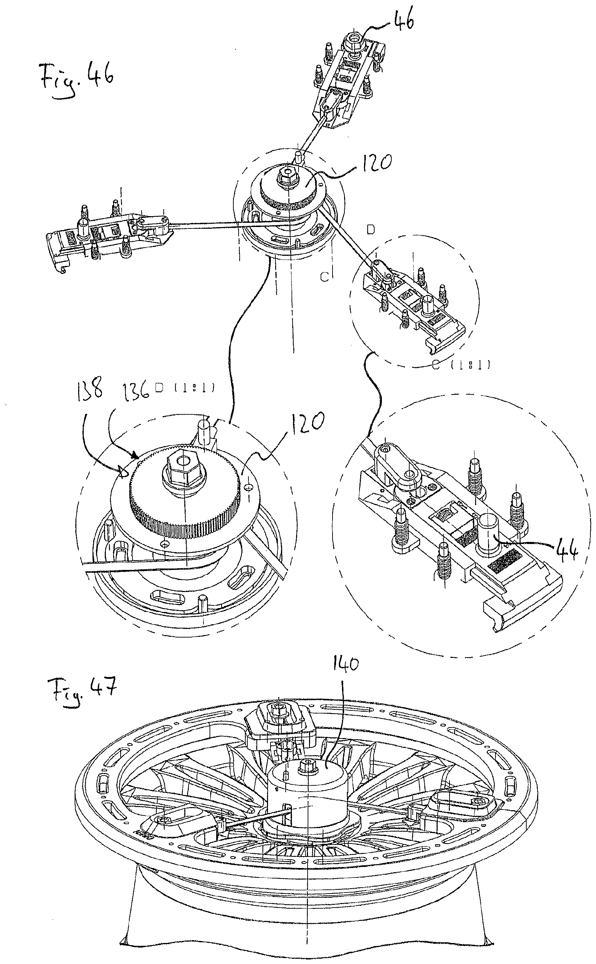

Im Beispiel von Figur 46 ist illustriert, dass diese Rasteinrichtung 136 mittels eines Zahnabschnitts 138 auf dem Spannabschnitt 132 und einem entsprechenden Gegenstück 142 (bspw. in einer Abdeckung der Verspanneinheit 120) gegeben sein kann. Das Gegenstück 142 weist ebenso wie der Zahnabschnitt 138 eine Verzahnung auf, die zum Zahnabschnitt 138 komplementär ausgebildet ist. Über einen entsprechenden Druckmechanismus kann das Gegenstück 142 in Eingriff mit dem Zahnabschnitt 138 gebracht werden beziehungsweise aus diesem Eingriff herausbewegt werden.

Der Aufsatz der Figuren 39 bis 48 kommt ohne einen am Fahrzeugrad verbleibenden Montageabschnitt 22 aus.

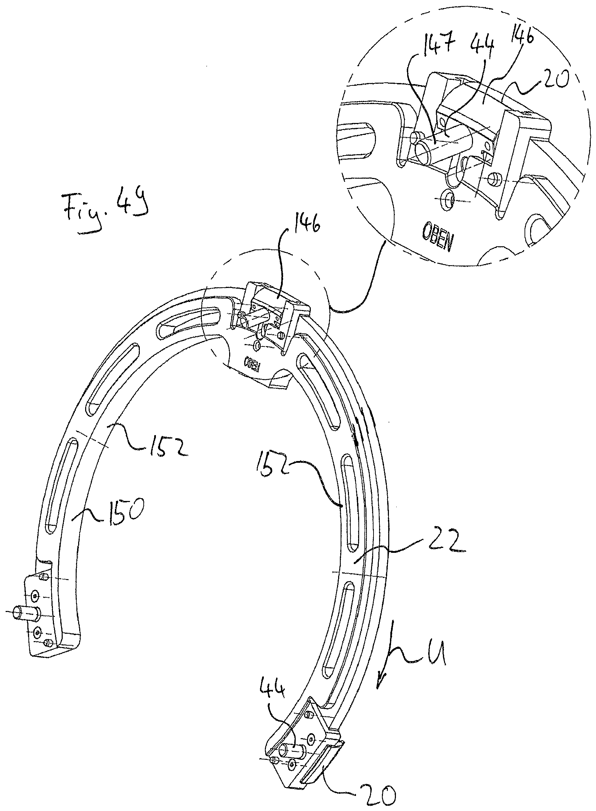

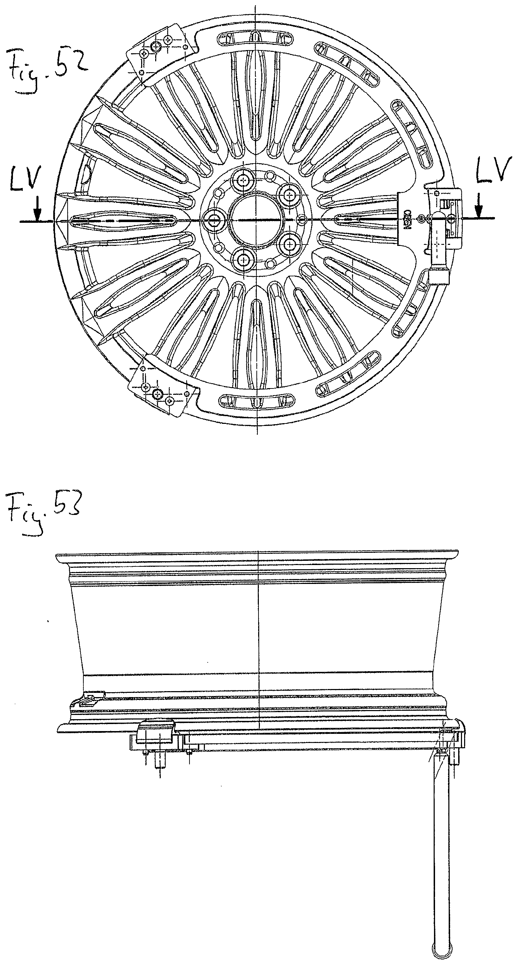

Die Figuren 49 bis 55 illustrieren eine Variante eines Aufsatzes 14, der zwei feststehende Spannmittel 20 (gegenüber dem Aufsatz bzw. dem Montageabschnitt 22) umfasst und ein schwenkbares Spannmittel, welches das Bezugszeichen 146 trägt. Das schwenkbare Spannmittel 146 ist um die Umfangsrichtung U schwenkbar ausgebildet. Vorliegend ist der Übersichtlichkeit halber lediglich der Montageabschnitt 22 des Aufsatzes 14 in den Figuren gezeigt.

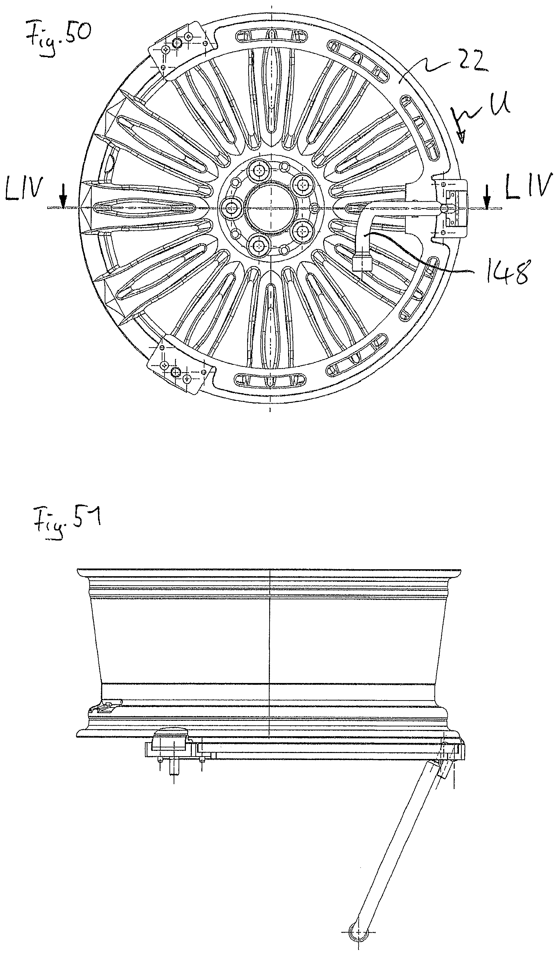

Zur Montage des Montageabschnitts 22 dieser Ausführungsform werden die beiden feststehenden Spannmittel 20 manuell in Hintergriff mit dem Felgenhorn 10 gebracht. Anschließend wird das schwenkbare Spannmittel 146 über eine Hebelvorrichtung 148, die in Figur 50 bis 53 mittels eines einfachen Schraubenschlüssels illustriert ist, in Hintergriff mit dem Felgenhorn 10 geschwenkt. Die Hebelvorrichtung 148 ist an einer Hebelansatzvorrichtung 147 (die vorliegend durch die Befestigungseinrichtung 44 gebildet ist) an dem Spannmittel 146 ansetzbar.

Der Montageabschnitt 22 weist einen kreisbogenförmigen Grundkörper 150 auf. Der Grundkörper 150 weist zwei, vorliegend bogenförmig ausgebildete, Schenkel 152 auf, die sich von dem schwenkbaren Spannmittel 146 in Umfangsrichtung U weg erstrecken. Die feststehenden Spannmittel 20 sind an den freien Enden dieser Schenkel 152 angeordnet. Das schwenkbare Spannmittel 146 weist eine Anlagefläche 38 auf, die sich in einer zur axialen Richtung A orthogonalen Ebene erstreckt (gleiches gilt für die feststehenden Spannmittel 20, die bspw. entsprechend dem in Figur 5 gezeigten ausgebildet sein können).

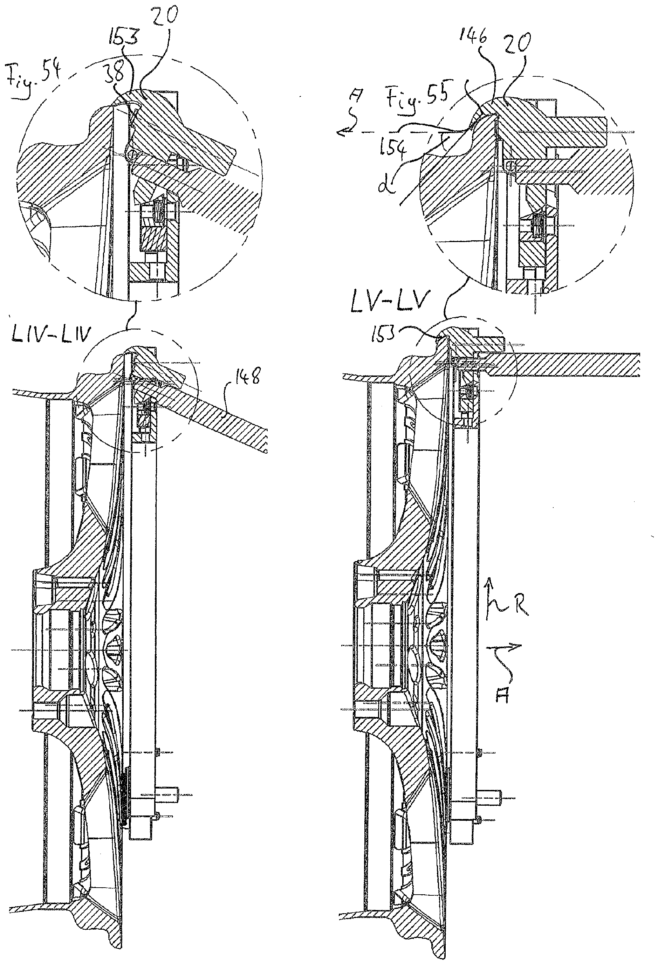

Von der Anlagefläche 38 abragend weist das Spannmittel 146 einen bogenförmigen Hintergriffabschnitt 153 auf. Der Hintergriffabschnitt 153 ist dabei vorliegend derart aufgeführt, dass er einen komplementär zur Felgenhornkontur ausgebildeten Abschnitt aufweist. In seinem vorderen Bereich (axial vorne) weist der Hintergriffabschnitt 153 eine Spitze 154 auf, die zum Einführen zwischen Reifen 3 und Felgenhorn 10 dient. Der Hintergriffabschnitt 153 ist bei diesem Spannmittel 146 bogenförmig ausgebildet, so dass das Spannmittel 146 effizient eingeschwenkt werden kann. Das Spannmittel 146 ist dabei derart ausgebildet, dass bei der in Figur 55 gezeigten eingeschwenkten Position des Spannmittels 146 der Hintergriffabschnitt 153 zunächst in axialer Richtung A erstreckt verläuft und dann durch die Krümmung des Hintergriffabschnitts 153 in einen Teil (bzw. in einen entsprechend verlaufenden Abschnitt) des Hintergriffabschnitts 153 übergeht, der in einem Winkel α zwischen 30 und 60 Grad, beziehungsweise 40 und 50 Grad, vorliegend ca. 45 Grad, zur axialen Richtung A verläuft.

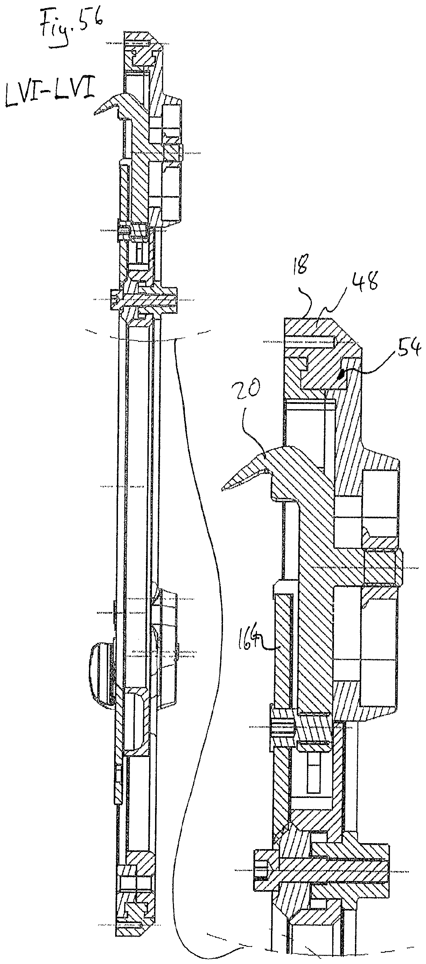

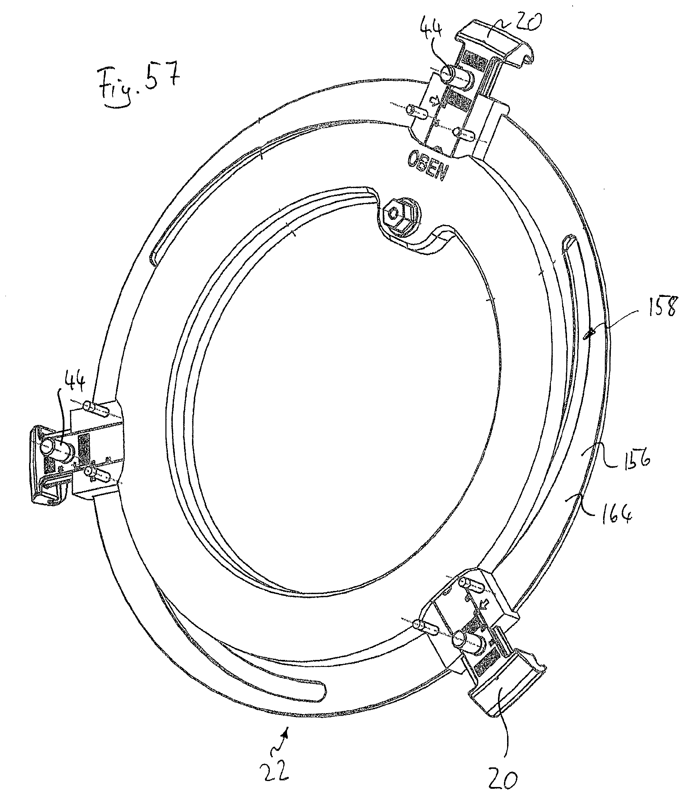

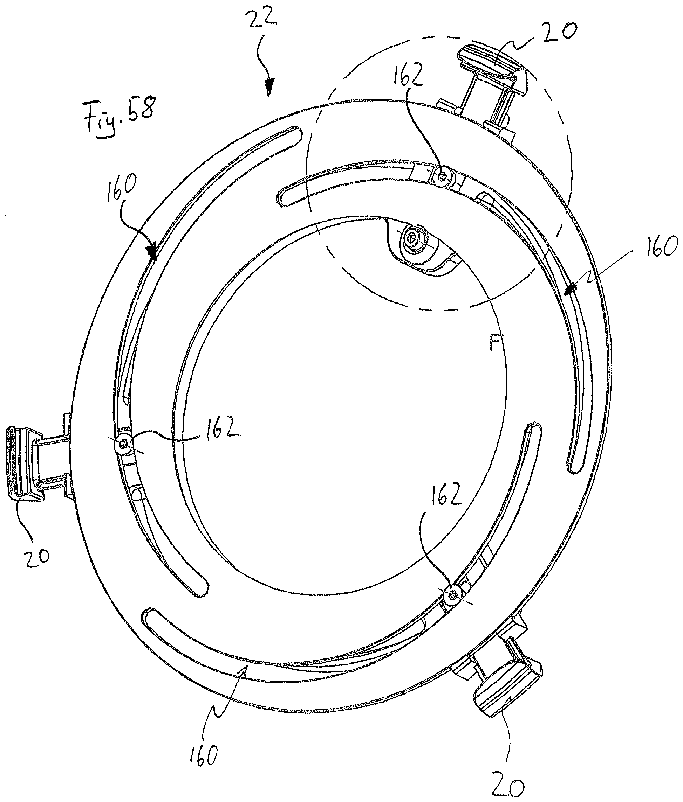

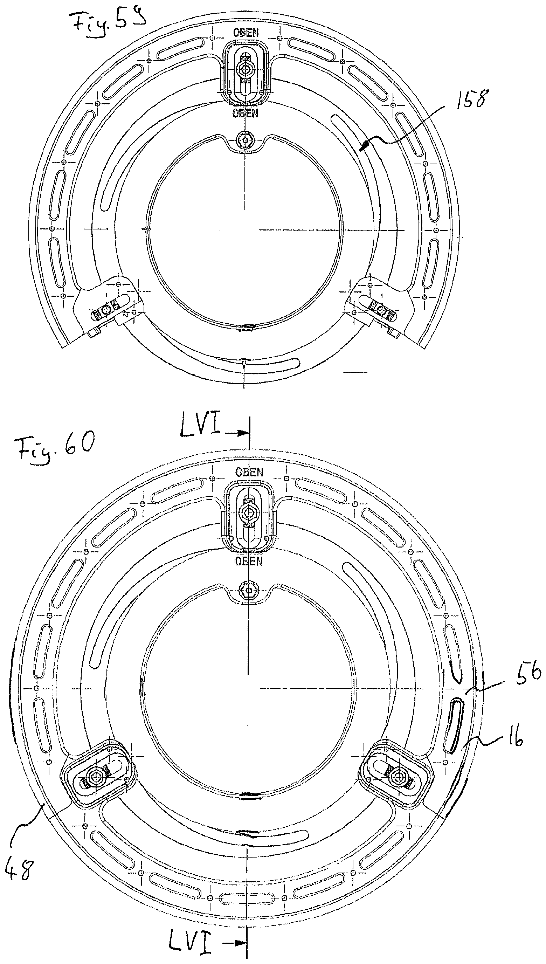

Die Figuren 56 bis 60 zeigen eine weitere Ausführungsform eines erfindungsgemäßen Aufsatzes 14. Bei dieser Ausführungsform ist vorgesehen, dass der Aufsatz 14 eine Verspannvorrichtung 156 aufweist, die eine Kurvenbahn 158 umfasst. Die Kurvenbahn 158 weist je Spannmittel 20 einen separaten Kurvenbahnabschnitt 160 auf. Jedes der über die Kurvenbahnabschnitte 160 aktuierbaren Spannmittel 20 weist jeweils einen Eingriffsabschnitt 162 auf. Durch den Eingriff der Eingriffsabschnitte 162 in die Kurvenbahnabschnitte 160 können die Spannmittel 20 durch Rotation der Verspannvorrichtung 156 (bzw. durch Rotation des die Kurvenbahn 158 tragenden Abschnitts, bzw. des plattenförmigen Elements 164), in radialer Richtung R bewegt werden.

Die einzelnen Kurvenbahnabschnitte 160 der Kurvenbahn 158 erstrecken sich dabei in Umfangsrichtung U, wobei sich entlang ihrer umfänglichen Erstreckung ihre radiale Position ändert. Die Änderung der radialen Position ist derart, dass die Spannmittel 20 bei Bewegung der Verspannvorrichtung in Umfangsrichtung U in ihrer radialen Position veränderbar sind. Durch die schlitzartige Ausbildung der Kurvenbahnabschnitte 160 ist es möglich, die Spannmittel 20 jeweils radial einwärts und radial auswärts zu bewegen. Die Verspannvorrichtung 156 weist ein plattenförmiges Element 164 auf, auf welchem die Kurvenbahn 158 angeordnet ist.

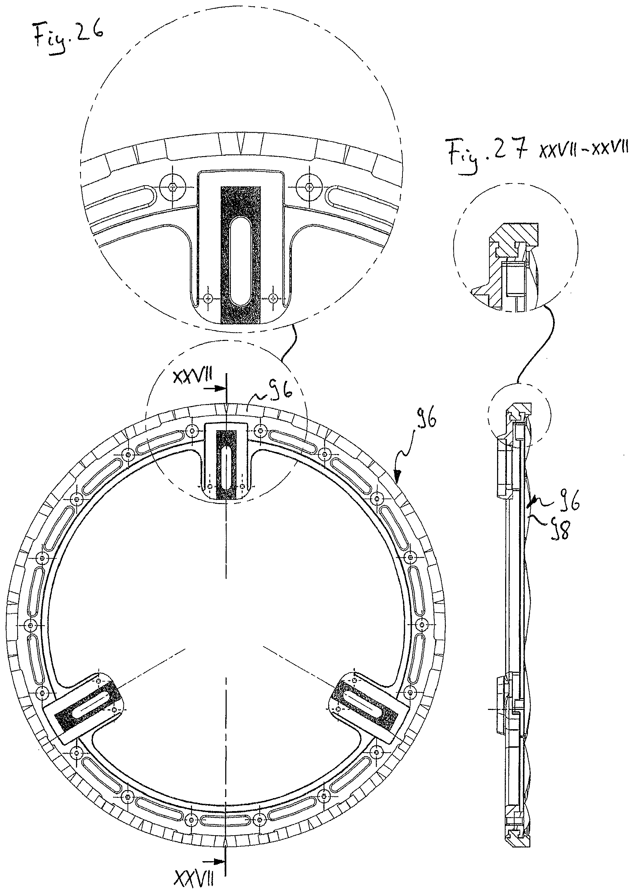

Die Ausbildung des Laufflächenabschnitts 16 mit dessen Stationärabschnitt 56 entspricht im Wesentlichen dem von beispielsweise Figur 27, wobei vorliegend der Aufsatz 14 beziehungsweise der Laufflächenkörper 48 keine Ausfahrhilfe umfasst (das Vorsehen einer Ausfahrhilfe 92 ist jedoch ebenso möglich).

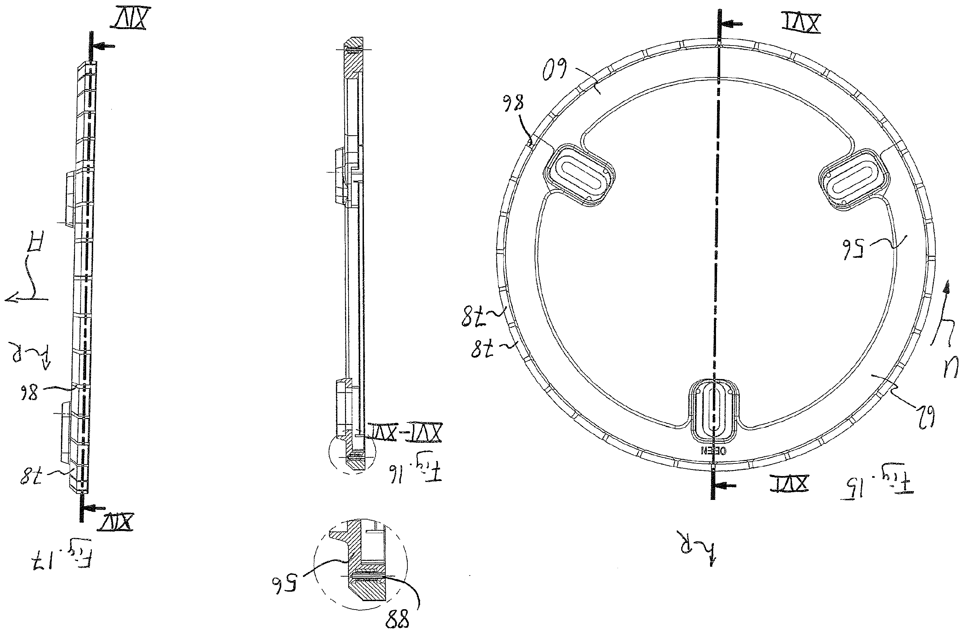

Ähnlich aufgebaut ist auch der Laufflächenabschnitt 16 der Version von Figur 15. Der vorliegend (Figuren 56 bis 60) gezeigte Laufflächenkörper 48 weist jedoch keine einzelnen Laufflächensegmente auf.

Denkbar ist also bspw. das zusätzliche Vorsehen einer Ausfahrhilfe 92 sowie von einzelnen beweglichen Laufflächensegmenten 78, die in Umfangsrichtung U verteilt (und bspw. federnd gelagert) zur Bildung der Lauffläche 18 angeordnet sind.

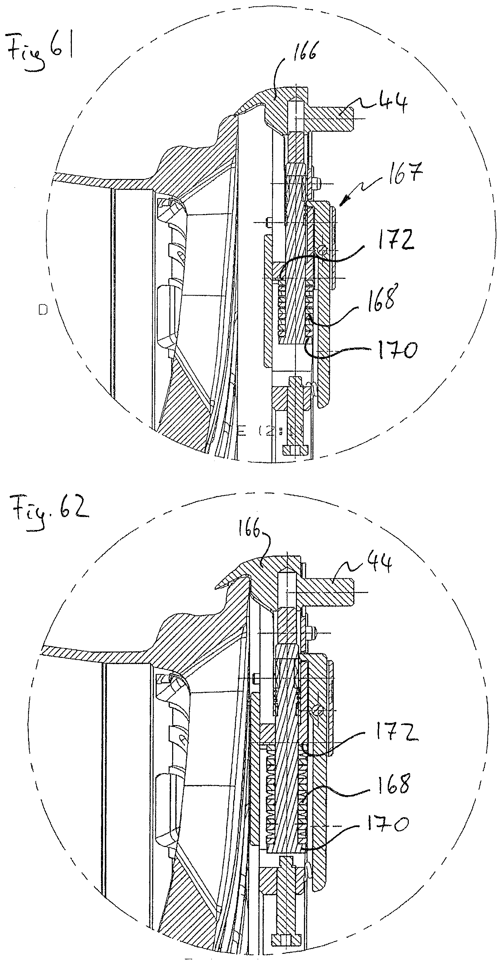

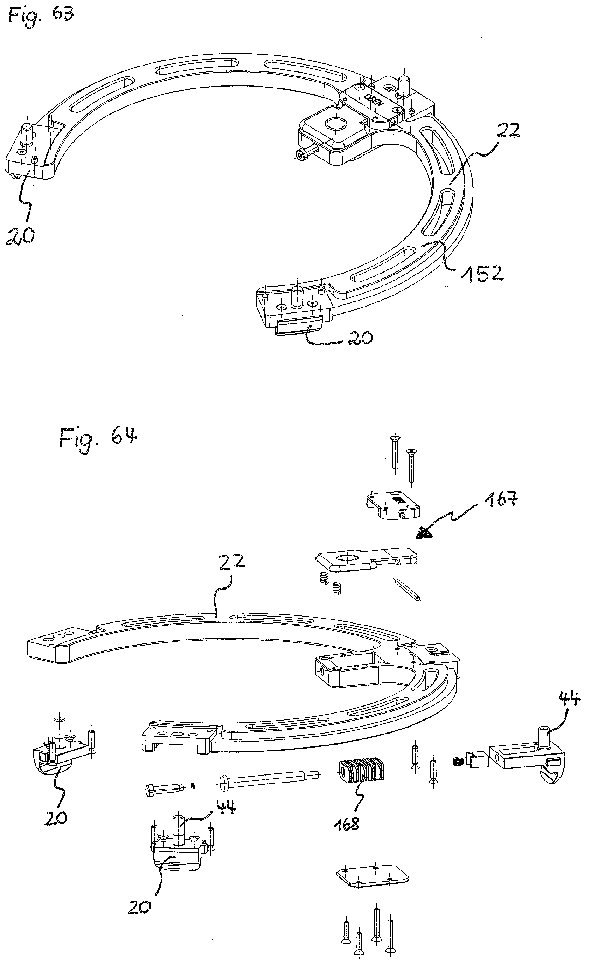

In den Figuren 61 bis 64 ist eine weitere Ausführungsform eines erfindungsgemäßen Aufsatzes 14 (gezeigt ist der Montageabschnitt 22) illustriert.

Dieser Aufsatz 14 umfasst ein Spannmittel 166, welches in radialer Richtung R vorgespannt ist. Das Spannmittel 166 ist im gezeigten Beispiel in eine radial innenliegende Stellung vorgespannt. Die übrigen beiden (an den in Umfangsrichtung U erstreckten Schenkeln 152 des Montageabschnitts 22 angeordneten) Spannmittel 20 sind feststehend ausgebildet (beziehungsweise sie sind in verschiedenen auf unterschiedliche Felgendurchmesser abgestimmten Positionen fest am Montageabschnitt 22 montierbar). Durch eine Verriegelungseinrichtung 167 ist das Spannmittel 166 in der radial äußeren Stellung (wie in Figur 61 gezeigt) gehalten. Durch Betätigen der Verriegelungseinrichtung 167 kann die Vorspannung des Spannmittels 166 freigegeben werden und das Spannmittel 166 bewegt sich aufgrund seiner Vorspannung radial einwärts.

Durch die Federvorspannung des Spannmittels 166 ist es möglich die beiden feststehenden Spannmittel 20 in Hintergriff mit dem Felgenhorn 10 zu bringen und anschließend das federvorgespannte Spannmittel 166 wie in Figur 61 gezeigt an dem Felgenhorn 10 anzusetzen. Durch die Vorspannung des Spannmittels 166 in die radiale innen liegende Stellung zieht sich das Spannmittel 166 selbsttätig in die in Figur 62 gezeigte Stellung, wenn die Verriegelungseinrichtung 167 betätigt wurde. In dieser Stellung hintergreift es das Felgenhorn 10 formschlüssig. Mit seinem Anlageabschnitt 38 liegt es dabei von axial außen am Felgenhorn 10 an.

Der Montageabschnitt 22 ist entsprechend sehr einfach und effizient am Fahrzeugrad 1 beziehungsweise an der Felge 2 montierbar. Das Spannmittel 166 (bzw. die Spannmittel) bewegt sich quasi von selbst in die Hintergriffstellung.

Der Montageabschnitt 22, wie er in den Figuren 61 bis 64 illustriert ist kann bspw. mit einem Laufflächenabschnitt 16 wie er in Figur 15 gezeigt ist kombiniert werden. Durch das Verspannen des Laufflächenabschnitts 16 mittels den Befestigungseinrichtungen 44 an den Spannmitteln 20 beziehungsweise 166 sind die Spannmittel 20, 166 in ihrer das Felgenhorn 10 hintergreifenden Stellung fixiert und der Hintergriff des Spannmittels 166 ist nicht lediglich aufgrund der Federvorspannung realisiert.

Zur Implementierung der Federvorspannung weist der Aufsatz 14 dieser Ausführungsform eine Blattfederanordnung 168 auf. Die Blattfederanordnung 168 liegt an einer Seite an einem Anlageabschnitt 170 des Spannmittels 166 auf und stützt sich am anderen Ende an einem Anlageabschnitt 172 des Montageabschnitts 22 ab, so dass das Spannmittel 166 gegenüber dem Montageabschnitt 22 verspannt ist.

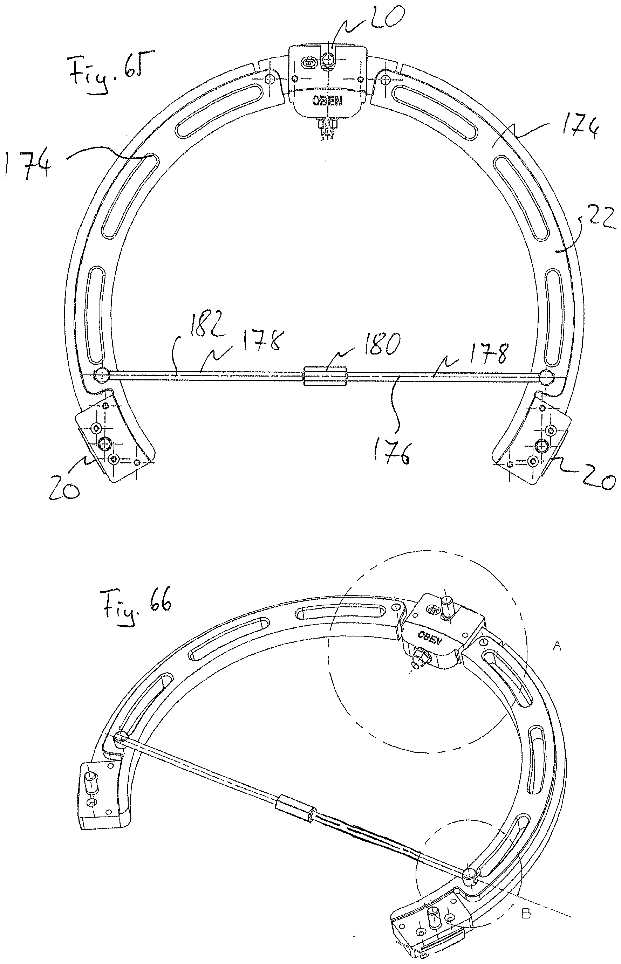

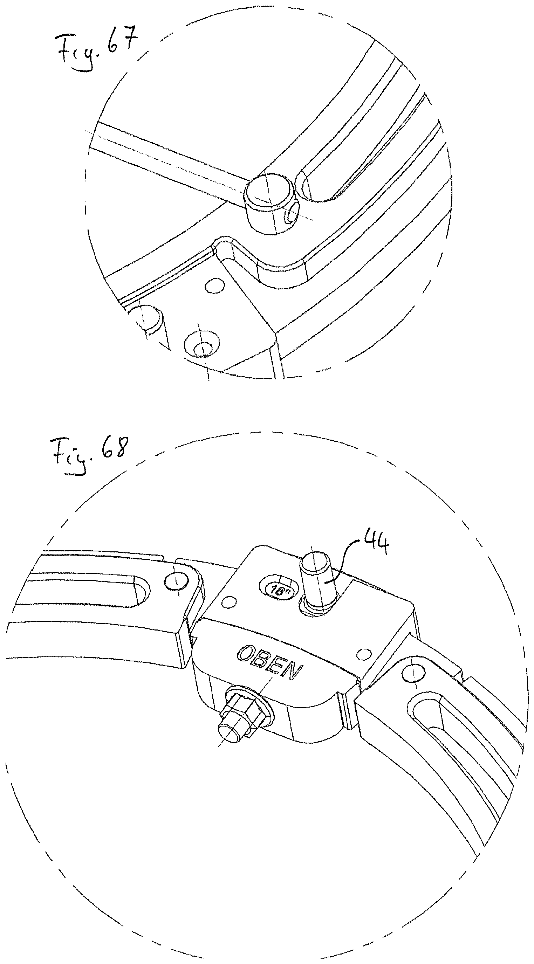

In den Figuren 65 bis 68 ist eine weitere erfindungsgemäße Ausführungsform eines Aufsatzes 14 dargestellt. Der Montageabschnitt 22 dieser Ausführungsform weist relativ zueinander verschwenkbare Schenkel 174 auf. Der Montageabschnitt 22 umfasst vorliegend drei Spannmittel 20. Die beiden verschwenkbaren Schenkel 174 sind jeweils gegenüber einem zentralen Spannmittel 20 um die axiale Richtung A schwenkbar angeordnet. An den freien Enden der Schenkel 174 ist jeweils ein gegenüber den Schenkeln 174 feststehendes Spannmittel 20 angeordnet. Alle drei Spannmittel 20 dieser Ausführungsform sind in ihrer Position gegenüber dem Montageabschnitt in radialer Richtung unbeweglich fixiert (es ist möglich Spannmittel vorzusehen, die in verschiedenen auf unterschiedliche Felgendurchmesser abgestimmte Positionen festlegbar sind).

Der Aufsatz weist überdies ein Verspannelement 176 auf. Das Verspannelement 176 umfasst vorliegend zwei Gewindestangen 178, die in eine Gewindehülse 180 mit gegenläufigen Gewinden eingebracht sind. Die Gewindestangen 178 sind jeweils mit ihren schenkelseitigen Enden schwenkbar an den schwenkbaren Schenkel 174 angelenkt. Mit ihrem schenkelabgewandten Ende sind sie jeweils in der Gewindehülse 180 eingeschraubt. Durch rotieren der Gewindehülse 180 gegenüber den Gewindestangen 178 ist es möglich die Erstreckung des durch die Gewindestangen 178 und die Gewindehülse 180 gebildeten verkürzbaren Elements 182 zu verändern. Durch eine Verkürzung können die beiden schwenkbaren Schenkel 174 aufeinander zubewegt werden. Entsprechend kann zur Montage dieses Montageabschnitts 22 wie folgt verfahren werden, zunächst wird das obere zentrale Spannmittel 20 in Hintergriff mit dem Felgenhorn 10 gebracht. Dann werden die weiteren, an den Schenkeln 174 angelenkten Spannmittel 20, an das Felgenhorn 10 angesetzt und anschließend wird die Gewindehülse 180 verdreht, so dass das verkürzbare Element 182 sich in seiner Erstreckung verkürzt, wodurch die Spannmittel 20, die an den freien Enden der Schenkeln 174 angebracht sind, in die Hintergriffstellung mit dem Felgenhorn 10 überführt werden. Im Anschluss an die Montage des Montageabschnitts 22 kann ein Laufflächenabschnitt 16 des Aufsatzes 14 montiert werden. Jedenfalls ein Teil des Laufflächenabschnitts 16 kann auch bereits während dem Hintergreifen des Felgenhorns 10 fest mit dem Montageabschnitt 22 verbunden sein.

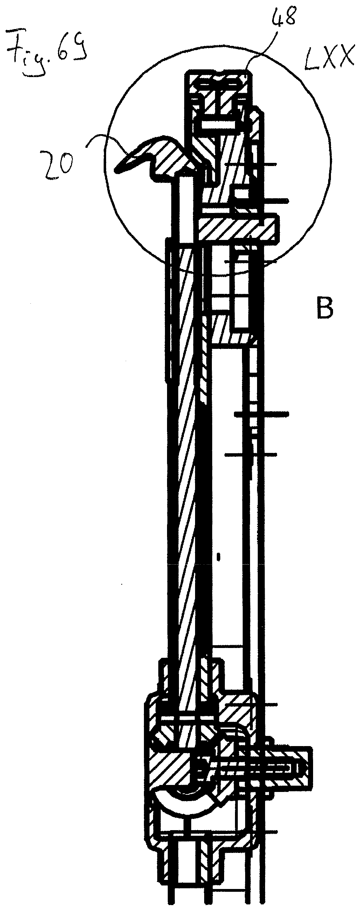

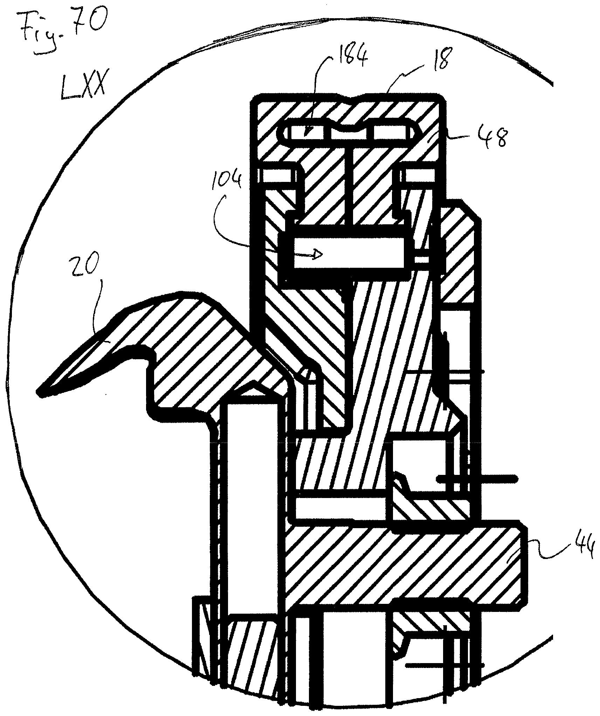

In den Figuren 69 und 70 ist eine weitere erfindungsgemäße Ausführungsform illustriert. Dieser Aufsatz 14 umfasst einen Laufflächenkörper 48 mit einer Druckkammer 184. Die Druckkammer 184 ist in einem Druckmedium beaufschlagbar. Die Druckkammer 184 ist weiterhin derart ausgebildet und angeordnet, dass die Lauffläche 18 durch das in der Druckkammer 184 befindlich Druckmedium bei dem Abrollvorgang des Aufsatzes 14 (beziehungsweise bei dem Abrollvorgang der Lauffläche 18 des Aufsatzes 14) über eine Fahrbahn, gedämpft ist. Über ein in den Figuren 69 und 70 nicht gezeigtes Rückschlagventil ist die Druckkammer 184 mit Druckmedium beaufschlagbar, um die Druckkammer 184 zu füllen und den Laufflächenkörper 48 in einen gefüllten und dämpfenden Zustand zu überführen.

Der Aufsatz 14 weist weiter eine Druckerzeugungseinrichtung 102 auf, die wie bei der Ausführungsform von Figur 30 bis 38, über mehrere Hohlräume 104 verfügt. Die Hohlräume 104 sind jeweils über eine entsprechende Ventilanordnung, die in den Figuren nicht dargestellt ist, mit der Druckkammer 184 derart verbunden, dass die Druckerzeugungseinrichtung 102 die Druckkammer 184 beim Abrollen des Aussatzes über die Fahrbahn mit Druck beaufschlagen kann. Dabei ist die Druckerzeugungseinrichtung 102 derart ausgebildet, dass ab einem bestimmten Druck die Zufuhr von Druckmedium in die Druckkammer 184 eingestellt wird.

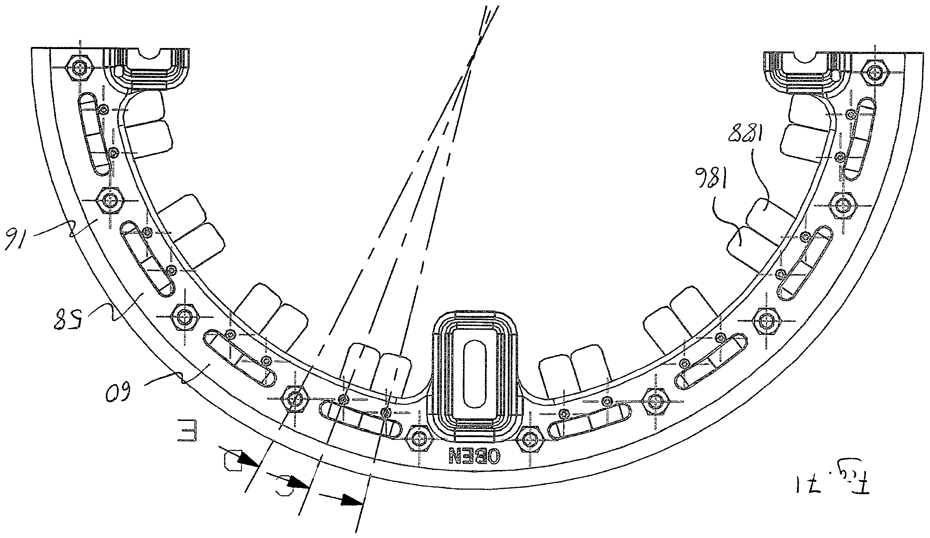

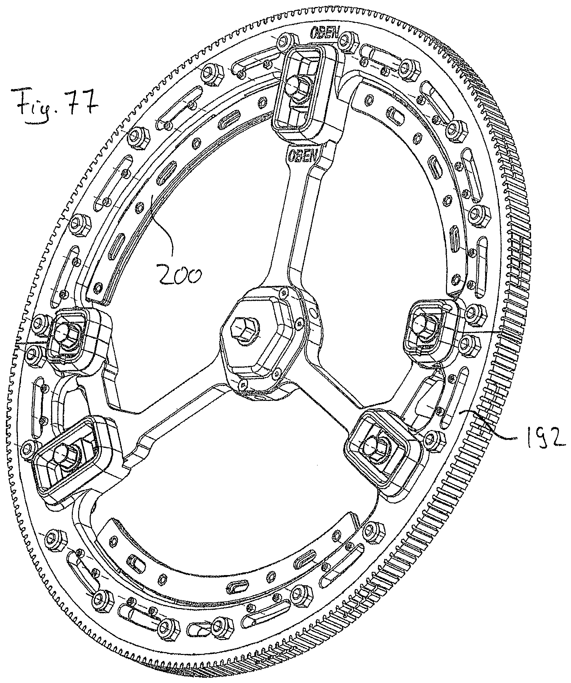

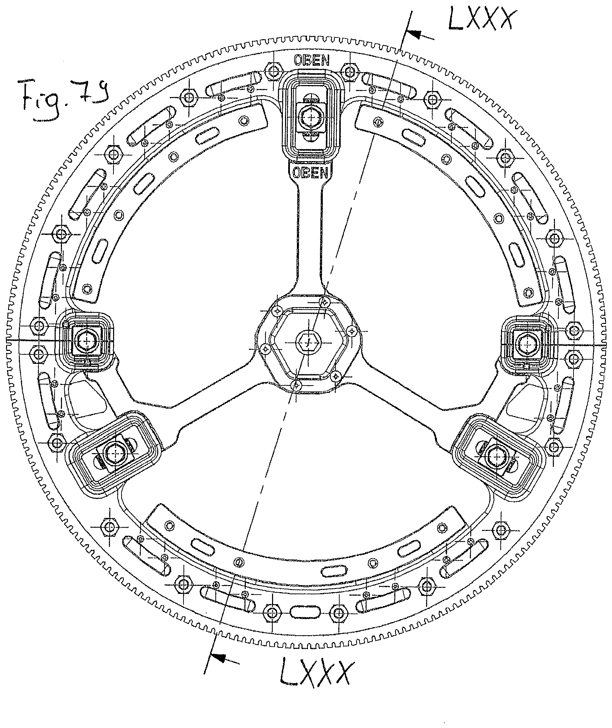

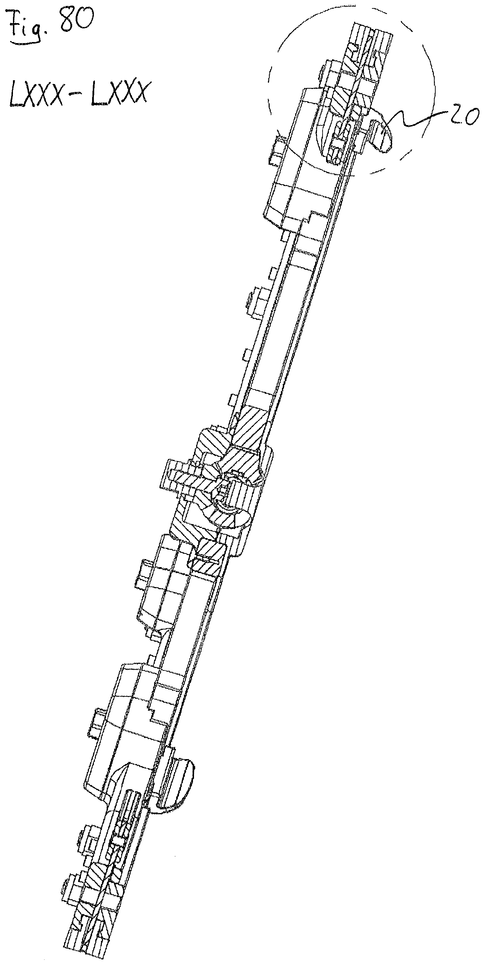

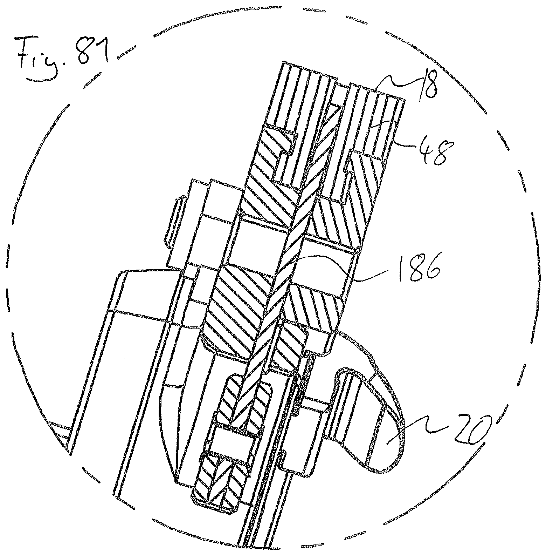

In den Figuren 71 bis 81 sind weitere erfindungsgemäße Ausführungsformen eines Aufsatzes 14 illustriert. In Figur 71 ist lediglich ein erstes Segment 60 des entsprechenden Ringabschnitts 58 gezeigt. Die Aufsätze 14 der Ausführungsformen gemäß Figur 71 bis 81 umfassen Wärmeleitelemente 186, die vorliegend als Wärmeleitbleche 188 ausgebildet sind. Die Wärmeleitbleche 188 sind aus Kupfer gebildet. Die blechförmig ausgebildeten Wärmeleitelemente 186 sind zwischen zwei axialen Elementen 190 und 192 des Laufflächenabschnitts 16 beziehungsweise des Ringabschnitts 58 verspannt.

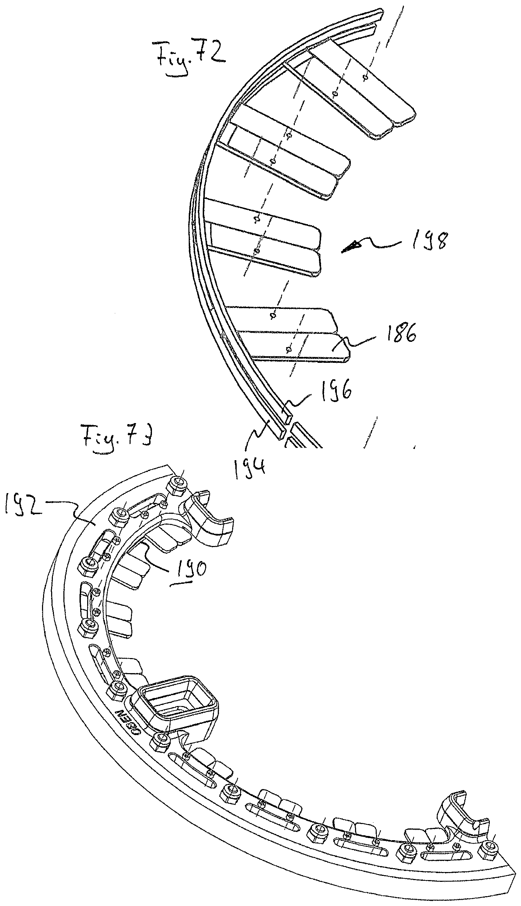

Wie in Figur 72 erkennbar, sind die einzelnen Wärmeleitelemente 186 über umfänglich erstreckte Verbindungselemente 194 und 196 miteinander verbunden. Die einzelnen Wärmeleitelemente 186 mit den Verbindungselementen 194 und 196 bilden gemeinsam eine Wärmeableitungsvorrichtung 198.

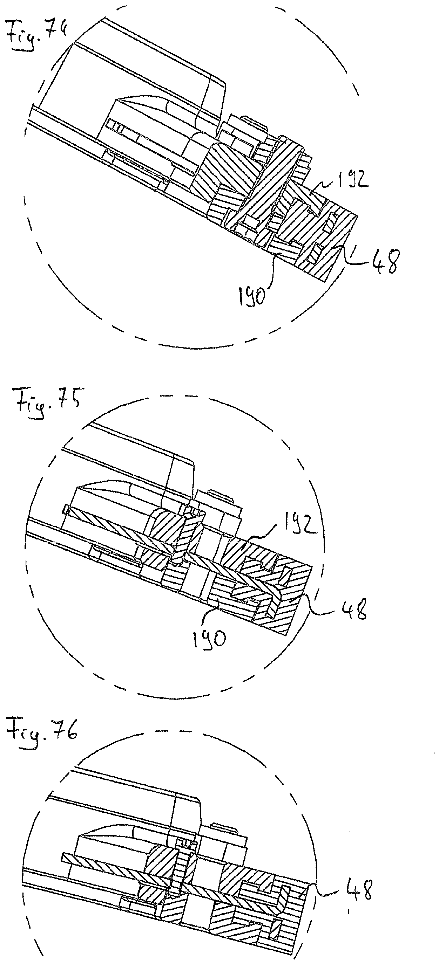

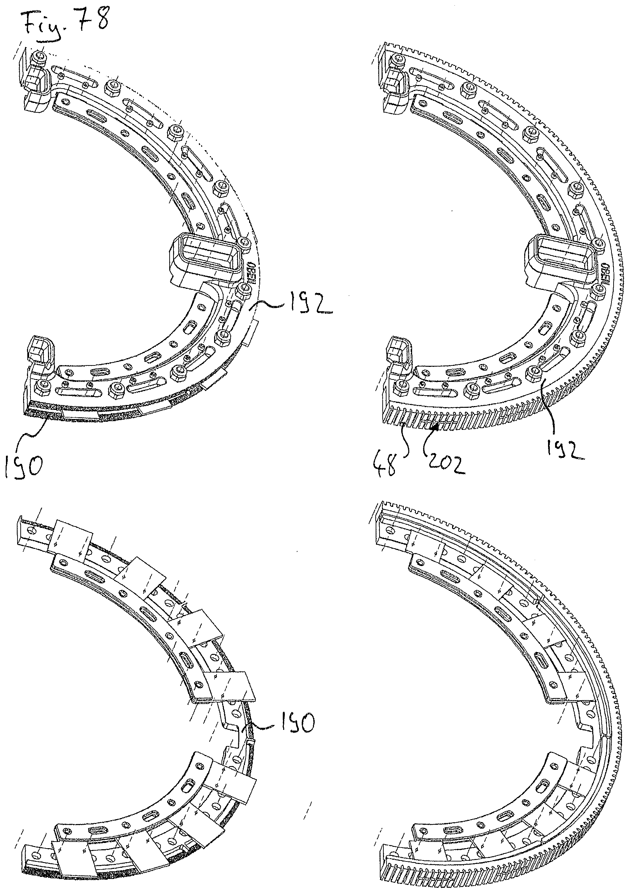

Die Wärmeableitungsvorrichtung 198 ist mit ihrem die Verbindungselemente 194 und 196 umfassenenden Ende in den Laufflächenkörper 48 eingefügt, vorliegend eingegossen. Mit anderen Worten: Der Laufflächenkörper 48 ist um das Wärmeableitsystem 198 herum geformt beziehungsweise angegossen. Dies ist anschaulich in den Figuren 74 bis 76 illustriert. Es ist auch möglich, die Wärmeleitelemente (wie in der Ausführungsform der Figuren 78 bis 81) radial innenseitig über ein radial inneres Verbindungselement 200 miteinander zu verbinden und in Schlitze 202 des Laufflächenkörpers 48 einzufügen. Um einen sicheren Halt der Wärmeleitelemente 186 zu gewährleisten, sind diese bei dieser Ausführungsform zwischen den beiden axialen Teilen 190 und 192 des Ringabschnitts 58 verspannt. Dies ist anschaulich in Figur 78 illustriert.

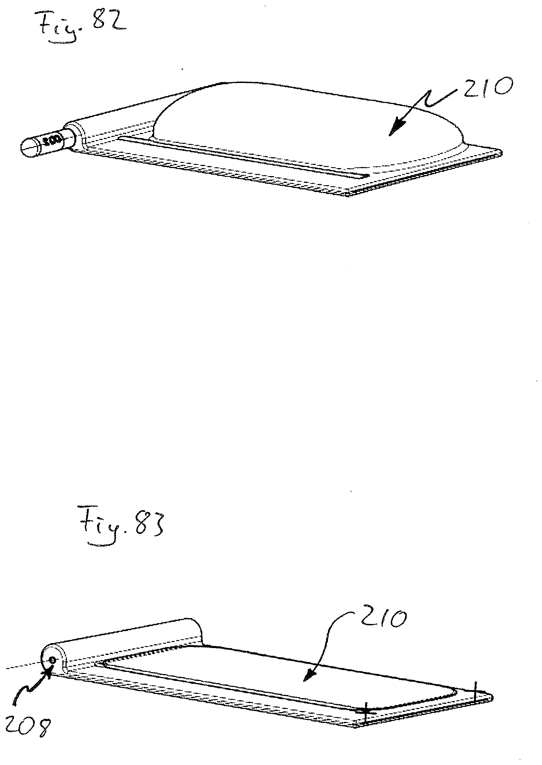

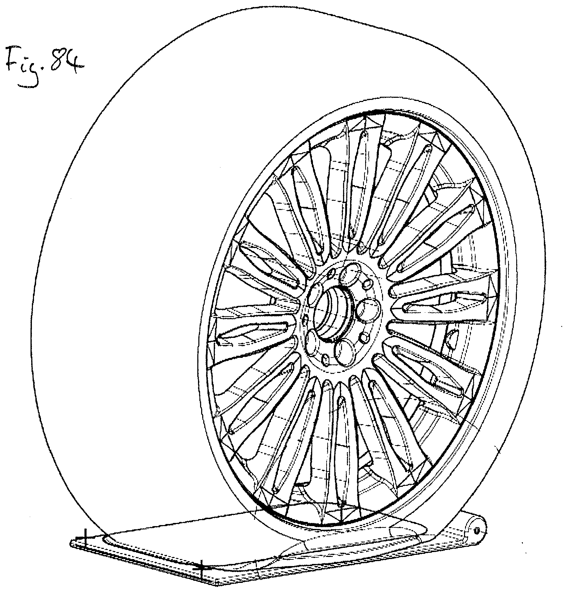

Im Sinne der Erfindung ist auch ein System aus einem Aufsatz, der vorzugsweise einer der vorhergehend beschriebenen Ausführungsformen entspricht und einer Anhebevorrichtung 206. Eine Anhebevorrichtung 206 eines derartigen Systems ist in den Figuren 82 bis 84 illustriert und ausgebildet, um durch ein Auffahren des Fahrzeugs auf die Anhebevorrichtung 206 das Fahrzeugrad 1 mit eingeschränkter Reifenfunktion derart anzuheben, dass der Aufsatz 14 mit umfänglich geschlossener Lauffläche 18 am Fahrzeugrad 1 befestigbar ist. Die Anhebevorrichtung 206 weist hierzu vorliegend einen Anschluss 208 für eine Druckmedienkartusche, vorliegend eine CO2-Druckkartusche auf. Die Anhebevorrichtung 206 weist des Weiteren einen aufblasbaren Abschnitt 210 auf, der in Figur 83 rechts im entleerten Zustand und in Figur 83 links im aufgeblasenen Zustand gezeigt ist. Das Aufblasen dieses aufblasbaren Abschnitts führt zum Anheben des auf ihm platzierten Fahrzeugrads 1, wie dies in Figur 84 illustriert ist. An einem derart angehobenen Fahrzeugrad 1 kann ein Aufsatz mit vollständig umfänglich geschlossener Lauffläche in einem Montageschritt angebracht werden.

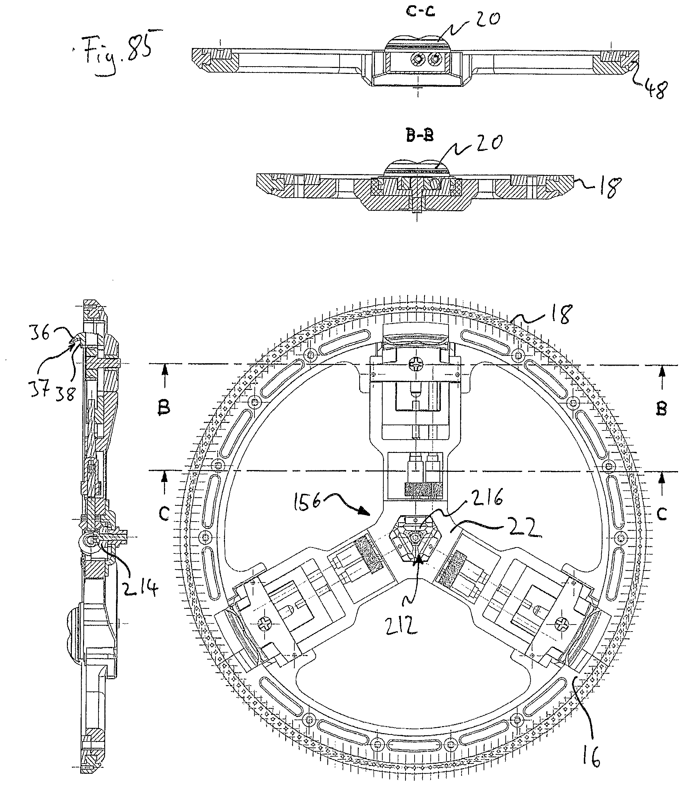

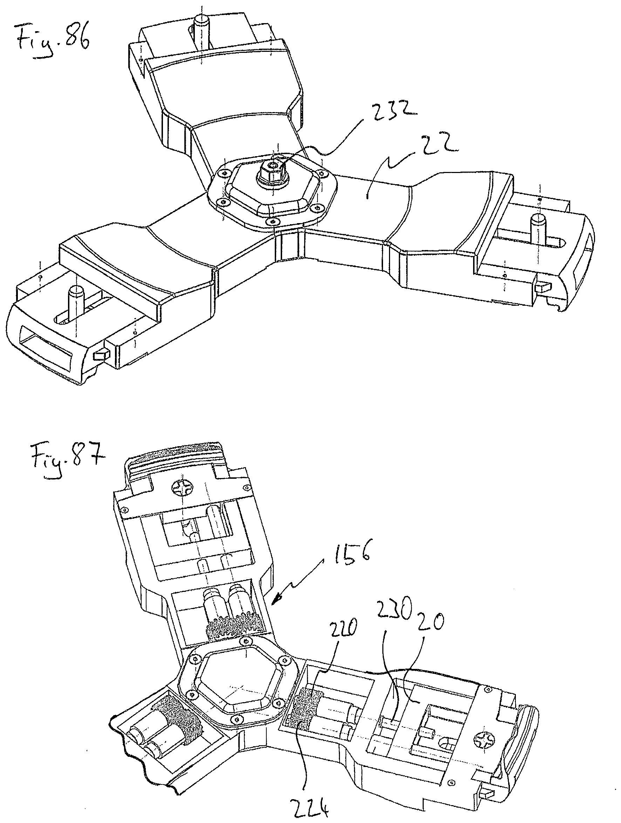

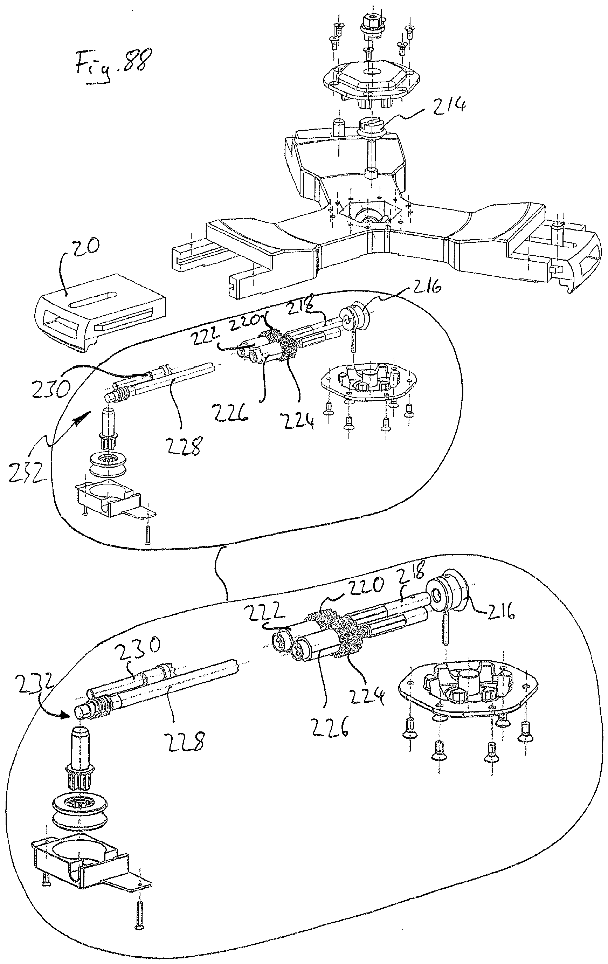

Die Figuren 85 bis 88 illustrieren einen weiteren erfindungsgemäßen Aufsatz 14. Der Aufsatz 14 dieser Ausführungsform weist eine Verspannvorrichtung 156 auf, die in einem Montageabschnitt 22 angeordnet ist. Die Verspannvorrichtung 156 weist ein Getriebe 212 auf, welches vorliegend über ein zentrales Antriebskegelrad 214 sowie je Spannmittel 20 über ein Abtriebskegelrad 216 verfügt. Von dem jeweiligen Abtriebskegelrad 216 weg erstreckt sich eine Abtriebswelle 218, die mit einem Übertragungszahnrad 220 verbunden ist, wobei das Übertragungszahnrad 220 über eine Drehmomentbegrenzungseinrichtung 222 mit einer Spannmittelantriebswelle 230 verbunden ist. Die Drehmomentbegrenzungseinrichtung 222 bildet eine Anzugskraftbegrenzungseinrichtung 222 und ist derart ausgebildet, dass sie eine Bewegung des Übertragungszahnrads 220 von einer Bewegung der Spannmittelantriebswelle 230 entkoppelt, sobald ein Grenzwert eines Anzugsmoments für die Spannmittel 20 überschritten ist.

Das Übertragungszahnrad 220 ist mit einem weiteren Übertragungszahnrad 224 in Eingriff. Das weitere Übertragungszahnrad 224 ist wiederum über eine Drehmomentbegrenzungseinrichtung 226 mit einer Laufflächenabschnittsantriebswelle 228 verbunden.

Die Drehmomentbegrenzungseinrichtung 226 bildet eine Andruckkraftbegrenzungseinrichtung 226 und ist derart ausgebildet, dass sie eine Bewegung des Weiteren Übertragungszahnrads 224 von einer Bewegung der Laufflächenabschnittsantriebswelle 228 entkoppelt, sobald ein Grenzwert eines Anzugsmoments für die axial zur Felge 2 hin gerichtete Bewegung des Laufflächenabschnitts 16 überschritten ist.

Beim Montieren des Aufsatzes 14 mittels der Verspannvorrichtung 156 wird über eine Werkzeugansatzstelle 232 ein Drehmoment in das Getriebe 212 eingeleitet. Hierdurch wird über die Abtriebswelle 218 das erste Übertragungszahnrad 220 angetrieben. Solange das Drehmoment der ersten Drehmomentbegrenzungseinrichtung 222 noch nicht überschritten wird, wird die Drehung der Abtriebswelle 218 auf die Antriebswelle 230 des Spannmittels 20 übertragen, so dass die Antriebswelle 230 sich in das Spannmittel 20 einschraubt, und das Spannmittel 20 nach radial einwärts bewegt wird. Hintergreift das Spannmittel 20 das Felgenhorn und liegt mit ausreichender Kraft an diesem an, so ist die Drehmomentbegrenzung der ersten Drehmomentbegrenzungseinrichtung 222 erreicht und die Spannmittelantriebswelle 230 wird nicht weiter rotiert, sondern die Drehmomentbegrenzungseinrichtung 222 unterbricht die Kraftübertragung auf die Spannmittelantriebswelle 230.

In ähnlicher Weise wird über den Antrieb des weiteren Übertragungszahnrads 224 die Laufflächenantriebswelle 228 angetrieben, bis ein entsprechendes Drehmoment der Drehmomentbegrenzungseinrichtung 226 erreicht ist. Durch die Bewegung der Laufflächenantriebswelle 228 wird über ein Laufflächengetriebe 232 die Lauffläche 18 beim Spannen über die Verspanneinrichtung 156 in Richtung der Felge bewegt. Die Verspannvorrichtung 156 bewegt also sowohl die Spannmittel 20 in Hintergriffstellung mit dem Felgenhorn 10 wie auch die Lauffläche 16 in die für den Betriebszustand vorgesehene Konfiguration.

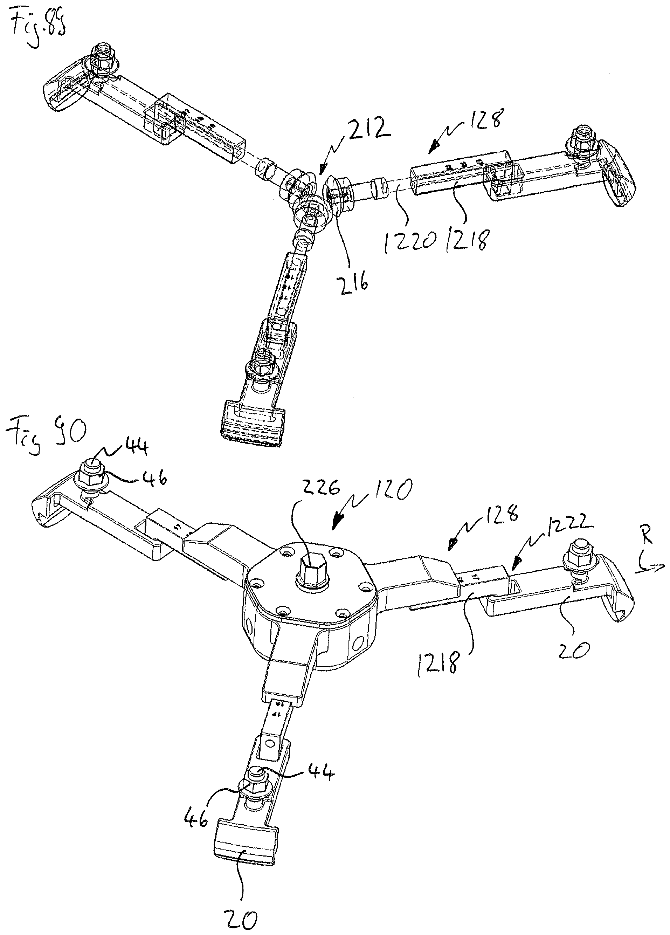

Die Figuren 89 und 90, sowie 91 bis 96 illustrieren je eine Verspanneinheit 120 jeweils eines weiteren erfindungsgemäßen Aufsatzes 14. Die Verspanneinheit 120 ist mittels in radialer Richtung R verkürzbarer Kraftübertragungsmittel 128 ausgebildet.

Die verkürzbaren Kraftübertragungsmittel 128 verfügen über Hakenabschnitte 1218, in die eine Gewindestange 1220 einschraubbar ist, um diese zu verkürzen. Die Hakenabschnitte 1218 sind in entsprechende Einhakabschnitte 1222 an den Spannmitteln 20 einhakbar, so dass die Kraftübertragungsmittel 128 formschlüssig mit den Spannmitteln 20 verbunden sind.

Die Hakenabschnitte 1218 in Kombination mit den Einhakabschnitten 1222 stellen jeweils eine Verbindungsanordnung zwischen den Kraftübertragungsmitteln 128 und den Spannmitteln 20 dar. Andere Arten einer Verbindungsanordnung, insbesondere die einen formschlüssigen Hintergriff zur Verbindung von Kraftübertragungsmittel 128 und Spannmittel 20 umfassen, sind ebenfalls im Sinne der Erfindung.

Die Aktuierung der Kraftübertragungsmittel 128 erfolgt über ein Getriebe 212, das vorliegend entsprechend dem Getriebe 212 der Verspannvorrichtung 156 des Aufsatzes gemäß den Figuren 85-88 ausgebildet ist.

Die Verspanneinheit 120 weist bei den vorliegend beschriebenen Ausführungsformen also ein Getriebe 212 auf, welches vorliegend über ein zentrales Antriebskegelrad 214 sowie je Spannmittel 20 über ein Abtriebskegelrad 216 verfügt. Von dem jeweiligen Abtriebskegelrad 216 weg erstreckt sich die jeweilige Gewindestange 1220 des entsprechenden Kraftübertragungsmittels 128.

Bei der Version von Figur 89 und 90 sind die Kraftübertragungsmittel 128 jeweils ohne einen axialen Anschlag im Bereich der Hakenabschnitte 1218 ausgebildet.

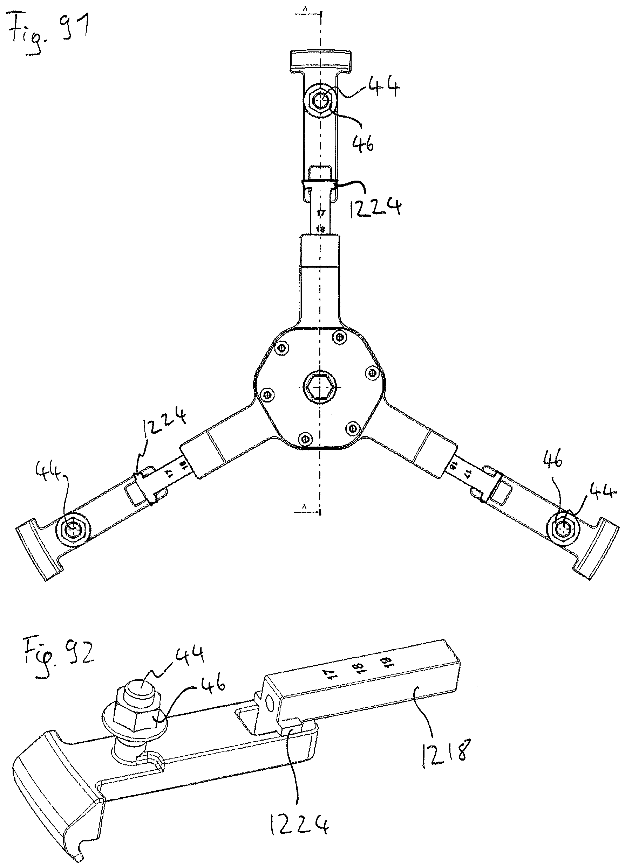

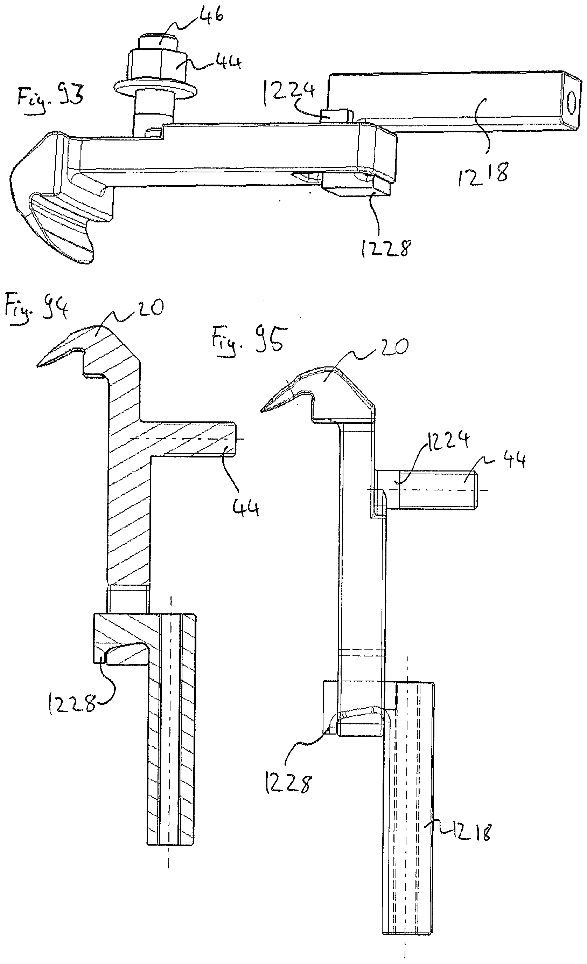

Bei der Version von Figur 91 bis 96 weisen die Hakenabschnitte 1218 jeweils einen axialen Anschlag in Form einer axialen Anlageeinrichtungen 1224 auf, die eine Position der Hakenabschnitte 1218 gegenüber den Spannmitteln 20 definiert festlegt. Wie in den Figuren 93-96 gut erkennbar ist, so weisen die Hakenabschnitte 1218 neben der axial außen angeordneten Anlageeinrichtung 1224 auch eine axial innenliegend angeordnete Anlageeinrichtung 1228 auf (diese ist auch bei der Version von Figur 89 und 90 vorhanden). Die axial äußere Anlageeinrichtungen 224 und die axial innere Anlageeinrichtungen 28 umgreifen gemeinsam einen Teil des Einhakabschnitts 1220 des Spannmittels 20.

Um die Spannmittel 20 in die Hintergriffstellung mit dem Felgenhorn zu überführen, werden diese über die Kraftübertragungsmittel 128 in die Hintergriffstellung mit dem Felgenhorn 10 gezogen. Es wird der Laufflächenabschnitt 16 mittels der Befestigungseinrichtung 44 gegenüber den Spannmitteln 20 verspannt, wodurch diese in Position gehalten sind. Anschließend wird über die Werkzeugansatzstelle 232 eine gegenläufige Bewegung der Kraftübertragungsmittel 128 bewirkt, wodurch diese aus ihrer formschlüssigen Hintergriffstellung mit den Einhakabschnitten 1222 der Spannmittel 20 bewegt werden. Anschließend kann die Verspanneinheit 120 von den Spannmitteln 20 und damit vom Laufflächenabschnitt 16 und der Fahrzeugfelge 2 abgenommen werden.

Die Spannmittel 20 sind dabei mittels der Befestigungseinrichtung 44 und dem entsprechenden Laufflächenabschnitt 16 fest in ihrer Position gegenüber dem Felgenhorn 20 verspannt.

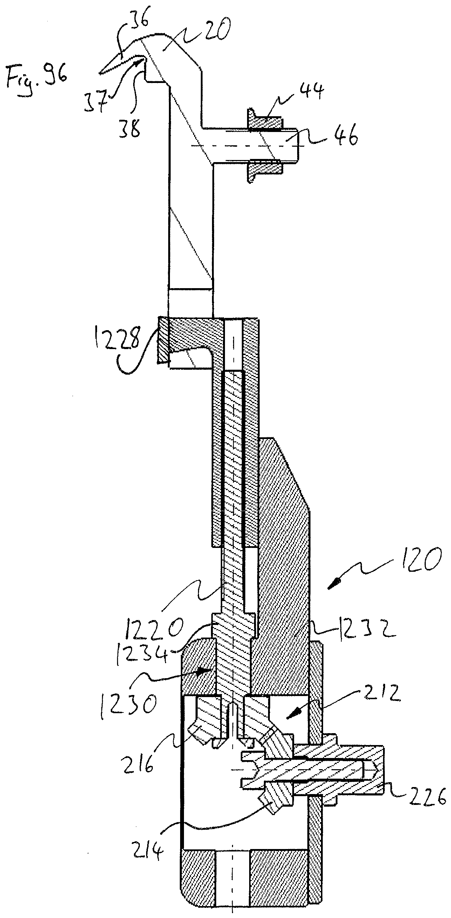

Wie in Figur 96 anschaulich illustriert, so weist die Verspanneinheit 120 eine Führungseinrichtung 1230 für die Gewindestange 1220 auf. Die Führungseinrichtung 1230 ist vorliegend durch eine Öffnung in einem Gehäuse 1232 der Verspanneinheit 120 gebildet. Ein äußerer Erweiterungsabschnitt 1234 der Gewindestange 1220 liegt von außen an der Umrandung der Führungseinrichtung 1230 an und hält zusammen mit dem auf die Gewindestange 1220 aufgebrachten Abtriebskegelrad 216 die Gewindestange 1220 entlang ihrer Längserstreckung in einer genau definierten Position gegenüber dem Gehäuse 1232.

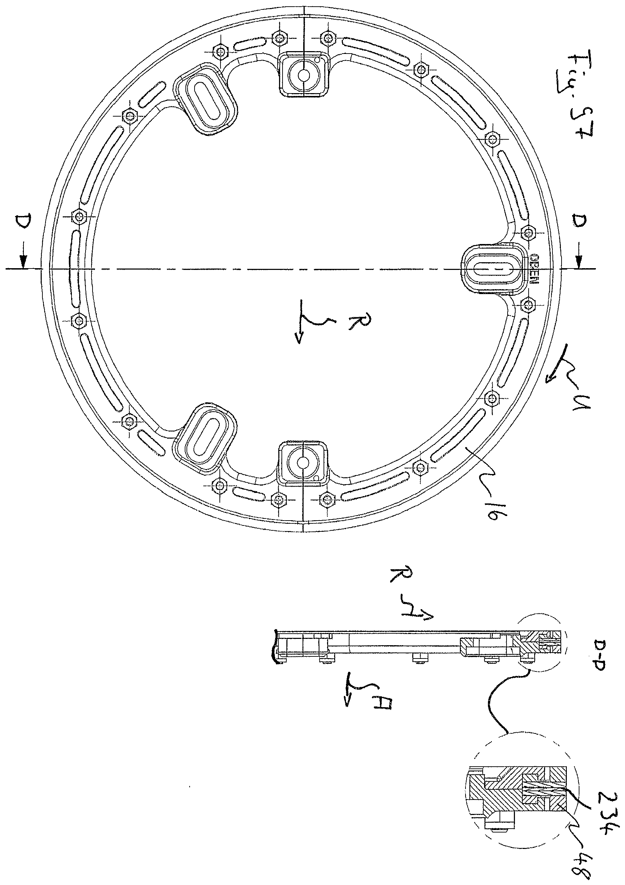

Figur 97 illustriert den Laufflächenabschnitt 16 einer erfindungsgemäßen Ausführungsform eines Aufsatzes 14, der einen Laufflächenkörper 48 umfasst, welcher wiederum einen in axialer Richtung A dämpfenden Abschnitt 234 umfasst. Der dämpfende Abschnitt 234 ermöglicht eine Kompression des Laufflächenkörpers 48 in axialer Richtung A.

Der dämpfende Abschnitt 234 ist derart ausgebildet, dass er in axialer Richtung A nachgiebiger ist, als das ihn jeweils axial innen und außen umgebende Material des Laufflächenkörpers 48.

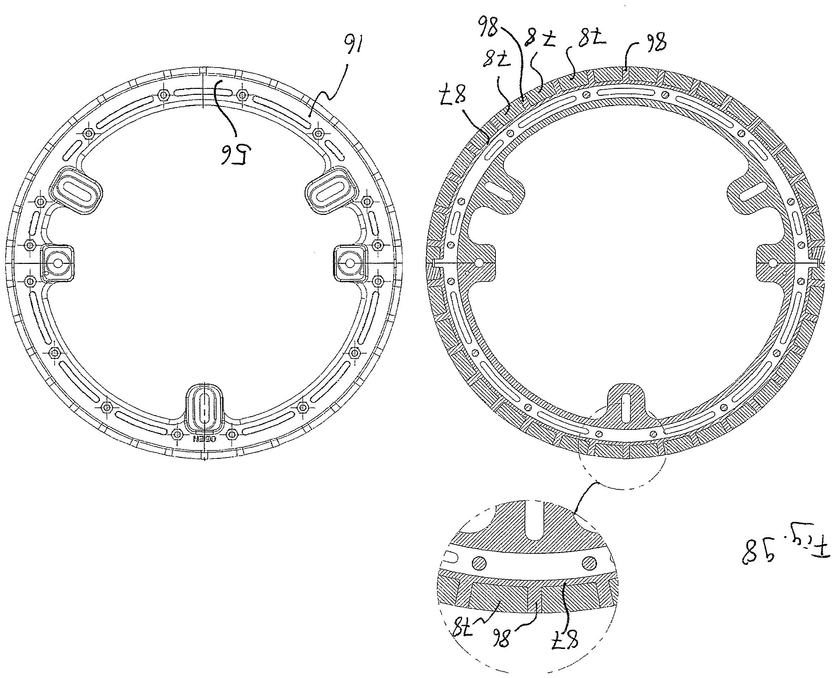

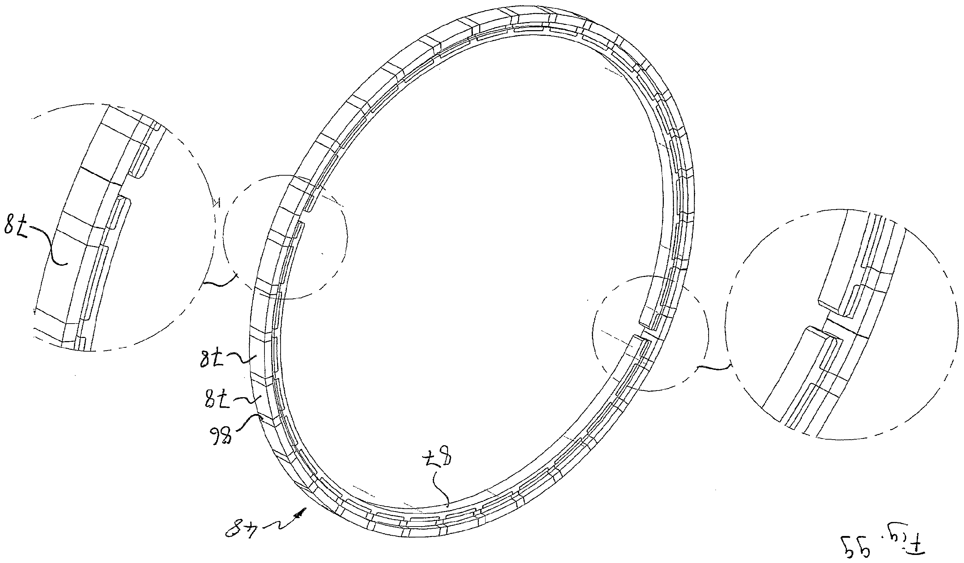

Figur 98 und 99 illustrieren den Laufflächenabschnitt 16 einer erfindungsgemäßen Ausführungsform eines Aufsatzes 14, der einen Laufflächenkörper 48 umfasst, welcher wiederum in mehrere Laufflächensegmente 78 aufgeteilt ist. Die einzelnen Laufflächensegmente 78 sind in Umfangsrichtung U zueinander beabstandet. In den Zwischenräumen der einzelnen Laufflächensegmente 78 weist der Laufflächenabschnitt 16 elastische bzw. federnde Elemente 86 auf.

Der Laufflächenabschnitt 16, bzw. dessen Laufflächenkörper 48, ist damit ähnlich dem der Ausführungsform der Figuren 14 bis 18 ausgebildet und zur Kombination mit einem Montageabschnitt 22 ähnlich dem von Figur 3 vorgesehen.

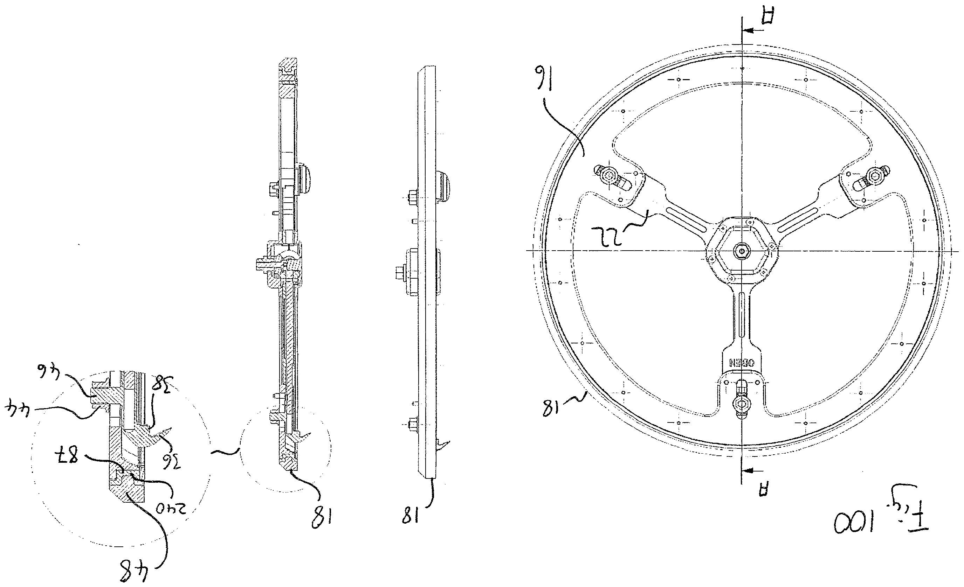

Figur 100 illustriert eine Ausführungsform, die eine Dämpfungseinrichtung 87 umfasst, die radial innenliegend des Laufflächenkörpers 48 angeordnet und separat von diesem ausgebildet ist. Die Dämpfungseinrichtung 87 umfasst einen separat von dem Laufflächenkörper 48 ausgebildeten Dämpfungskörper 240, der durch eine nachgiebige weiche Materialschicht (ein Vollmaterial, das bei Belastung verformbar ist) gebildet ist.

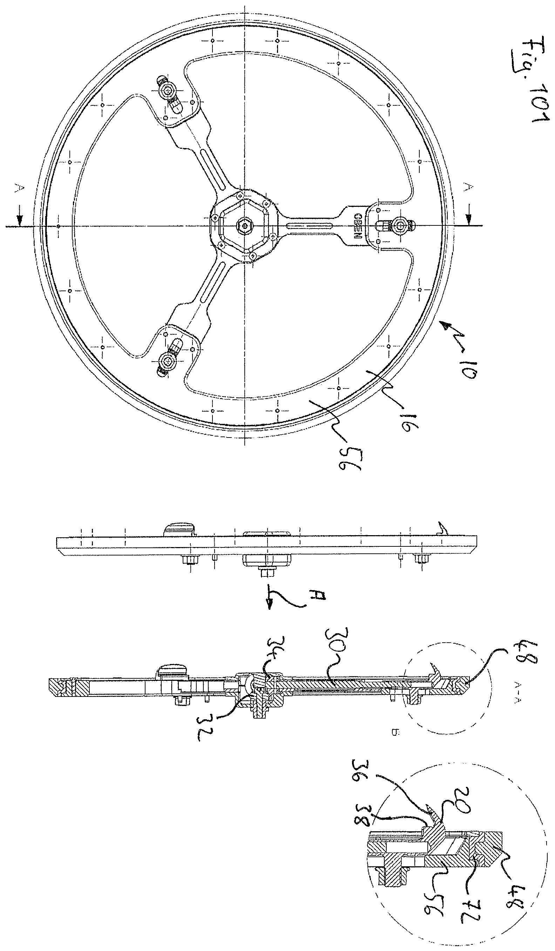

Figur 101 illustriert einen Aufsatz 10, der mit einem Laufflächenkörper 48 ausgebildet ist, der gegenüber dem Stationärabschnitt 56 um die axiale Richtung A herum rotierbar ausgebildet ist. Ähnlich wie der Aufsatz 14 gemäß den Figuren 6 und 7 weist der Aufsatz 14 gemäß Figur 101 ein Gleitelement 72 auf, auf dem der Laufflächenkörper 48 rotierbar gegenüber dem Stationärabschnitt 56 gelagert ist. Der Montageabschnitt 22 dieser Ausführungsform weist jedoch drei bewegliche Spannmittel 20 auf und ist entsprechend dem Montageabschnitt 22 der Ausführungsform von Figur 21 bzw. 22 ausgebildet.

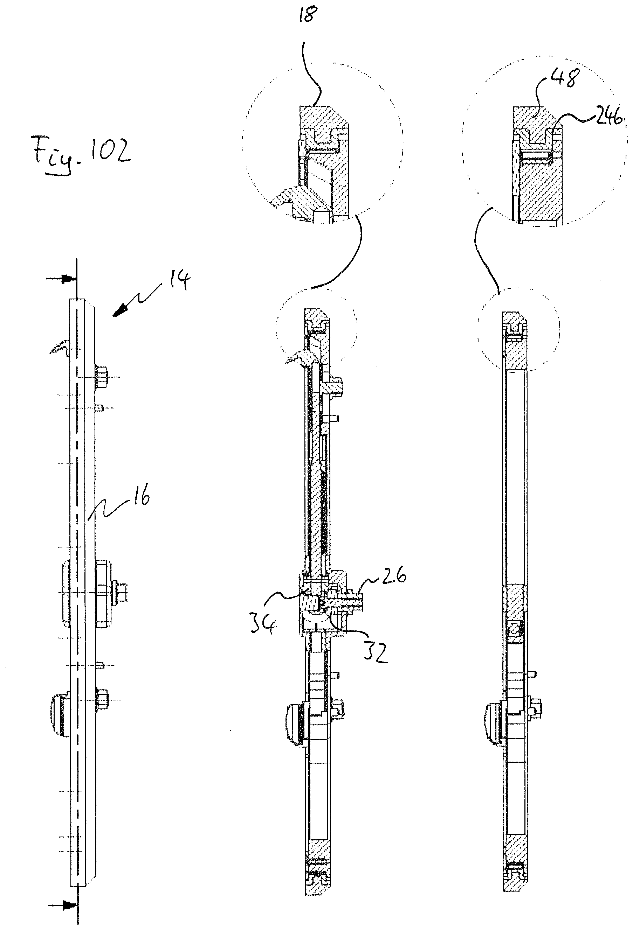

Die Figuren 102 bis 108 illustrieren verschiedene Aufsätze 14 mit unterschiedlich ausgestalteten Dämpfungseinrichtungen 87.

In Figuren 102 bis 104 ist ein Aufsatz 14 illustriert, der eine Dämpfungseinrichtung 87 in Form mehrerer um den Umfang der Lauffläche verteilten Federelemente 236 umfasst. Die Federelemente 236 sind vorliegend im weitesten Sinne U-förmig ausgebildet. Im vorliegenden Fall haben die jeweiligen U-förmigen ausgebildeten Federelemente 236 je einen mittleren Abschnitt 238, der zur Kontaktierung eines radial innenliegenden Bereichs 240 des Laufflächenabschnitts 16 ausgebildet ist. Jeweils an den mittleren Bereich angrenzende äußere Bereiche 242 und 244 sind zur Abstützung des Laufflächenkörpers 48 in radialer Richtung R ausgebildet und angeordnet.

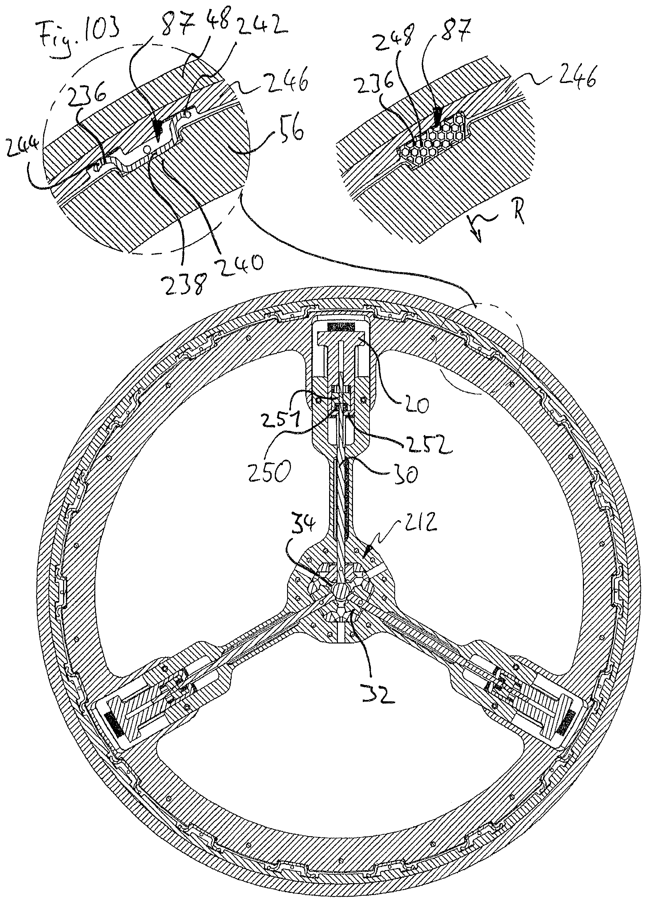

Der Laufflächenkörper 48 steht dabei nicht in direktem Kontakt mit den Federelementen 236, sondern ist in einem metallischen Schalungslement 246 radial innenliegend aufgenommen, wobei dieses Schalungselement 246 in Kontakt mit den Federelementen 236 steht. Oben rechts in Figur 103 ist eine alternative Ausführungsform der Dämpfungseinrichtung 87 bzw. Federelements 236 illustriert. Das Federelement 236 dieser Ausführungsform weist eine metallisch ausgebildete Wabenstruktur 248 auf, die ebenfalls eine Feder- bzw. Dämpfungswirkung in radialer Richtung R bewirkt.

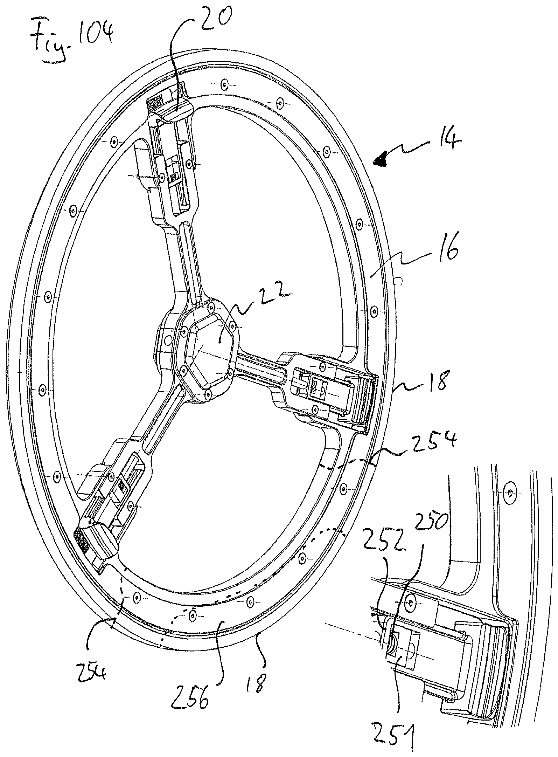

Wie in den Figuren 103 und 104 gut erkennbar ist, so sind die Spannmittel jeweils in eine radial innenliegende Stellung vorgespannt. Die Vorspannung der Spannmittel 20 ist dabei vorliegend über jeweils ein Federelement 250 realisiert, welches radial außenseitig an einem Anschlag 251 der Gewindestange 30 anliegt und radial innenseitig an einem Anschlag 252 des jeweiligen Spannmittels 20.

Durch die Vorspannung der Spannmittel 20 in die radial innenliegende Stellung ist es möglich, den Aufsatz quasi locker auf das Felgenhorn 10 aufzusetzen, so dass die Spannmittel 20 am Felgenhorn 10 durch die Federvorspannung den Aufsatz 14 halten. Anschließend können die Spannmittel 20 über Betätigung der Werkzeugansatzstelle 26 und des damit verbundenen Getriebes 212, welches das Antriebskegelrad 32 und das Abtriebskegelrad 34 und die Gewindestange 30 umfasst, nach radial einwärts bewegt werden. Bei der radial einwärts gerichteten Bewegung der Spannmittel hintergreifen diese das Felgenhorn und ziehen gleichzeitig den Aufsatz 14 in Richtung der Felge, bis das Felgenhorn am Anlageabschnitt 38 der Spannmittel 20 anliegt.

Durch die Vorspannung der Spannmittel 20 wird bei Betätigung der Werkzeugansatzstelle 26 nicht direkt eine Bewegung der Spannmittel 20 durchgeführt. Zunächst wird der Anschlag 251 der Gewindestange 30 radial einwärts gezogen. Wenn der Anschlag 251 der Gewindestange 30 an dem Anschlag 252 des jeweiligen Spannmittels 20 anliegt oder das Federelement 250 vollständig komprimiert hat, so erfolgt eine Bewegung des Spannmittels 20 nach radial einwärts. Das Spannmittel 20 erhält durch die Vorspannung also einen Freigang.

Vorliegend ist der Aufsatz 14 mit einem in Umfangsrichtung einstückigen Laufflächenabschnitt 16 illustriert. Der Laufflächenabschnitt 16 kann insbesondere jedoch in Umfangsrichtung U mehrteilig aufgebaut sein, um eine einfache Montage ohne Hilfsmittel zu ermöglichen.

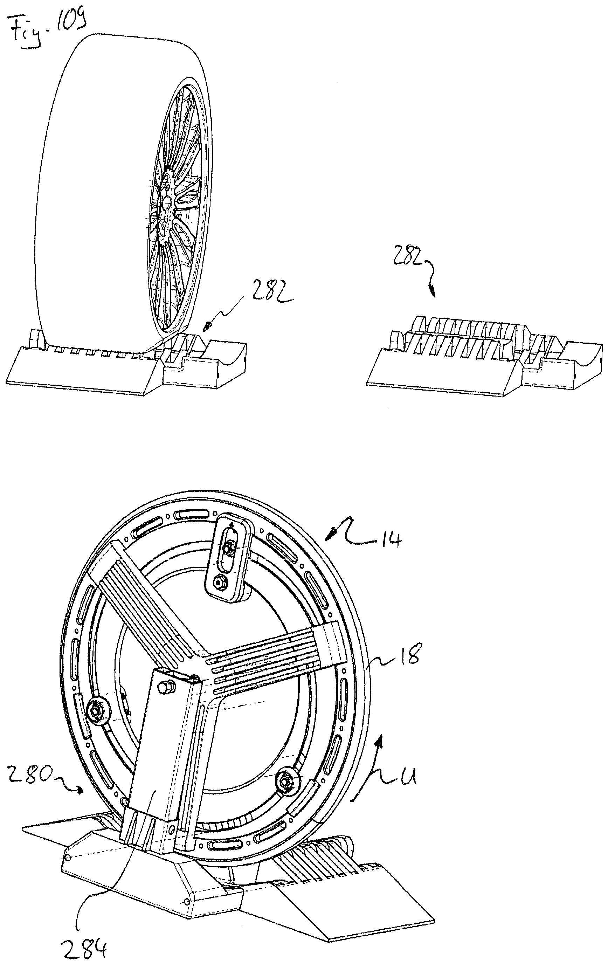

Auf die Montage eines einstückigen Laufflächenabschnitts 16 wird in Zusammenhang mit den Figuren 109 ff. noch weiter im Detail eingegangen.

In Figur 104 ist eine mögliche Aufteilung des Laufflächenabschnitts 16 in mehrere umfängliche Segmente anhand von unterbrochenen Linien illustriert, die jeweils eine Verbindungstelle 254 der umfänglichen Segmente zueinander illustriert.

Denkbar ist ebenso, dass der Laufflächenabschnitt 16 an sich zwar in Umfangsrichtung U geschlossen ausgeführt ist, wobei der Laufflächenabschnitt 16 in Umfangsrichtung U jedoch ein abnehmbares Element 256 aufweist, so dass die Lauffläche 18 in Umfangsrichtung U mehrstückig ausgebildet ist. Das abnehmbare Element des Laufflächenabschnitts 16 trägt das Bezugszeichen 256 und seine Umrisse sind durch eine punktierte Linie skizziert.

Auch das Vorsehen eines derartigen abnehmbaren Elements, eine umfänglich geschlossene Ausführung des Laufflächenabschnitts 16 mit jedoch umfänglich mehrteilig aufgebauter Lauffläche 18, kann ebenso zur hilfsmittellosen Montage des Aufsatzes 14 genutzt werden.

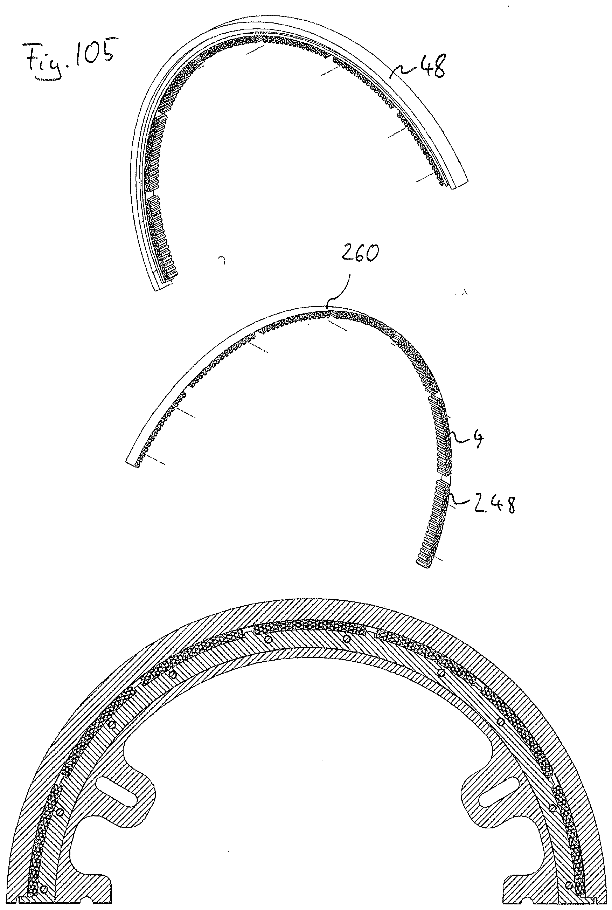

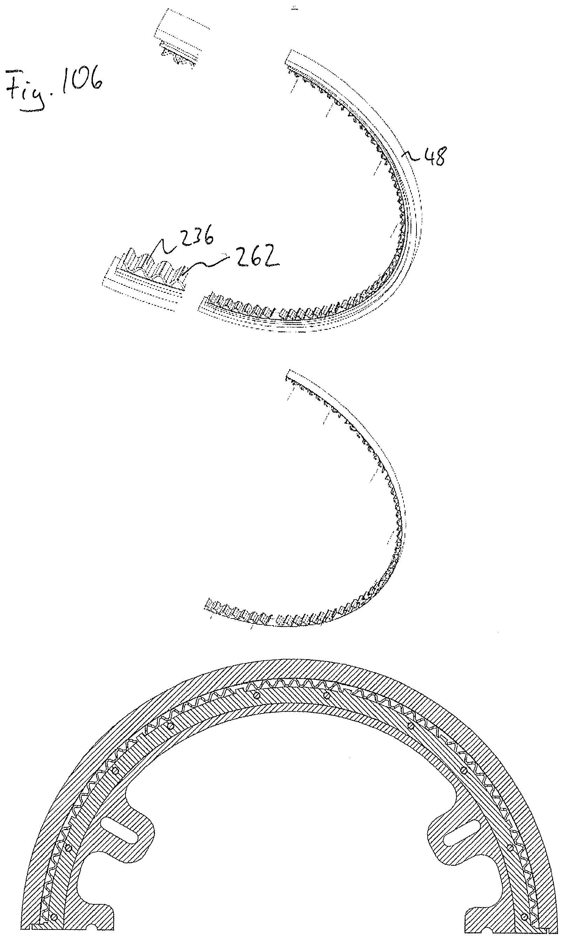

Die Figuren 105 und 106 illustrieren weitere mögliche Ausgestaltungen der Dämpfungseinrichtung 87 bzw. der in der Dämpfungseinrichtung 87 verwendeten Federelemente 236. Bei der Version von Figur 105 sind die Federelemente 236 jeweils als in umfänglicher Richtung erstreckte, wabenförmige Strukturen ähnlich der rechts oberen Darstellung von Figur 103 ausgebildet. Bei der Version von Figur 105 sind die wabenartigen Strukturen 248 in Umfangsrichtung über einen Verbindungsabschnitt 260 miteinander verbunden und der Laufflächenkörper 48 kann über den Verbindungsabschnitt 216 auf die wabenartigen Strukturen 248 aufgegossen sein.

In ähnlicher Weise sind die Federelemente 236 aus Figur 106 miteinander verbunden und der Laufflächenkörper 48 an diese angeformt. Die einzelnen Federelemente 236 der Ausführungsform von Figur 106 erstrecken sich wellenförmig jeweils von einer radial inneren Anlage mit dem Stationärabschnitt 56 bzw. dem Laufflächenabschnitt 16 zu einer radial äußeren Anlage mit dem Laufflächenkörper 48. Die Federelemente 236 sind in der Ausführungsform von Figur 106 also als Wellenfederelemente 262 ausgebildet.

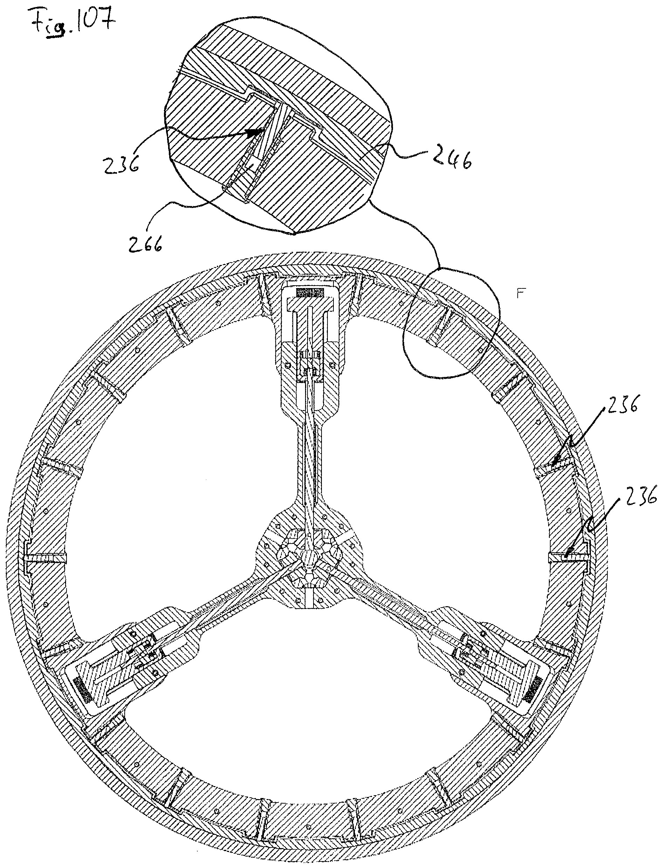

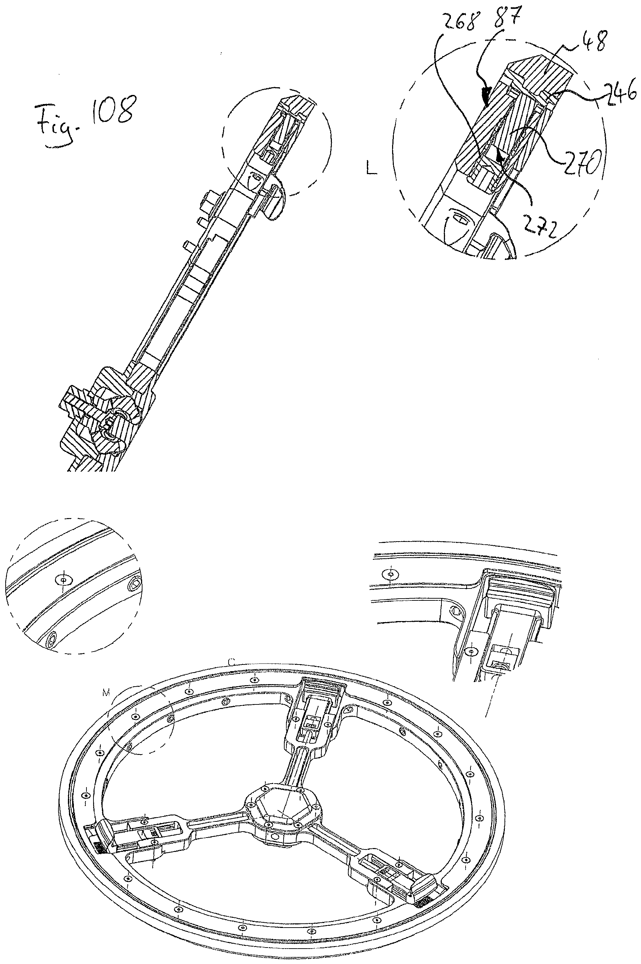

Bei der Ausführungsform von Figur 107 und 108 sind die Federelemente 236 mittels gasdruckgefederter Kolben-Zylinderanordnungen 266 ausgebildet. Die Kolben-Zylinderanordnungen 266 weisen jeweils ein Zylinderelement 268 auf, in denen ein Kolben 270 gasdicht gelagert ist. In einem Hohlraum 272 befindet sich ein kompressibles Dämpfungsmedium, das eine Bewegung des Kolbens dämpft. Vorliegend ist die Bewegung des Kolbens in radialer Richtung. An der radial außenliegenden Seite des Kolbens kontaktiert dieser ein Schalungselement 246, welches vorliegend metallisch ausgebildet ist und den Laufflächenkörper 48 trägt.

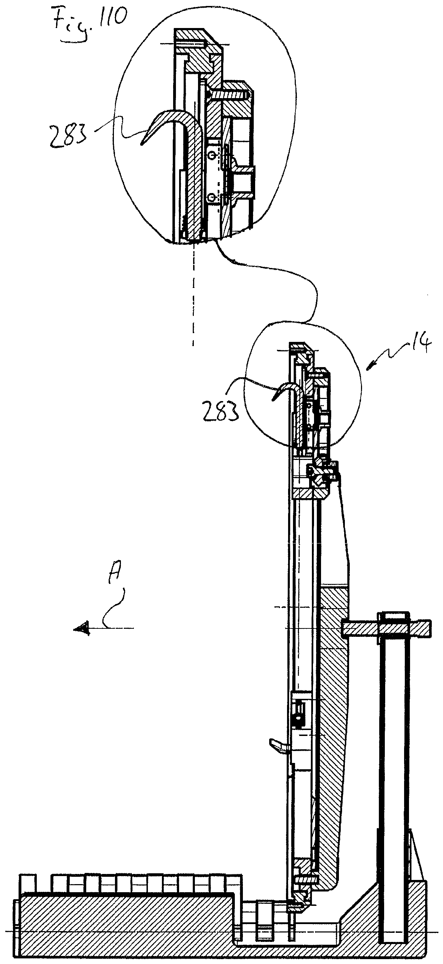

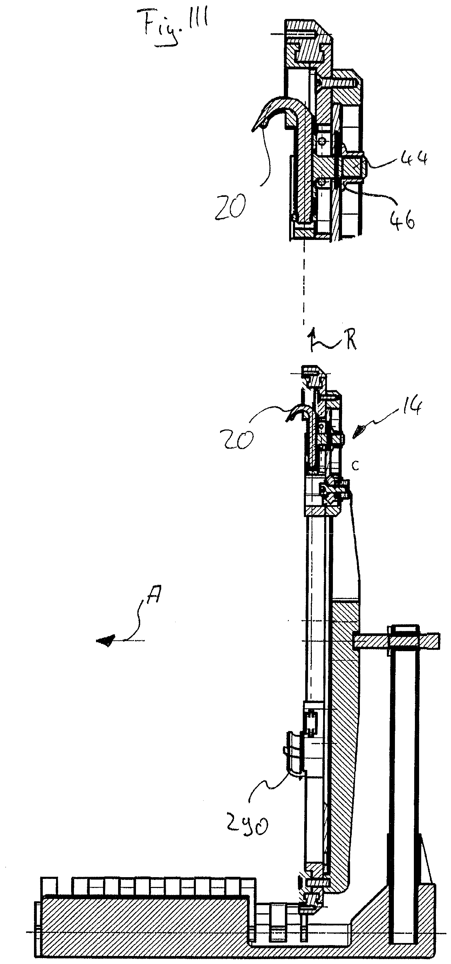

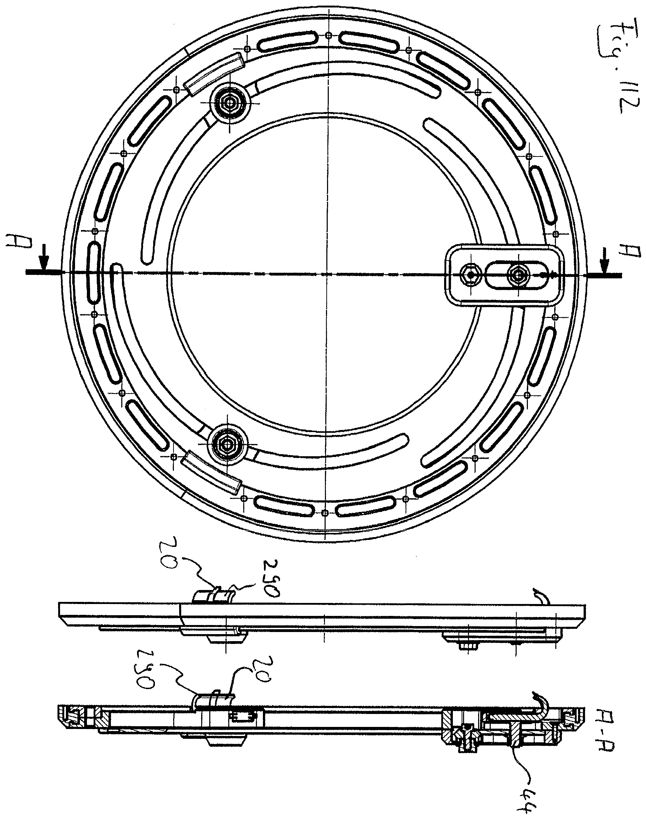

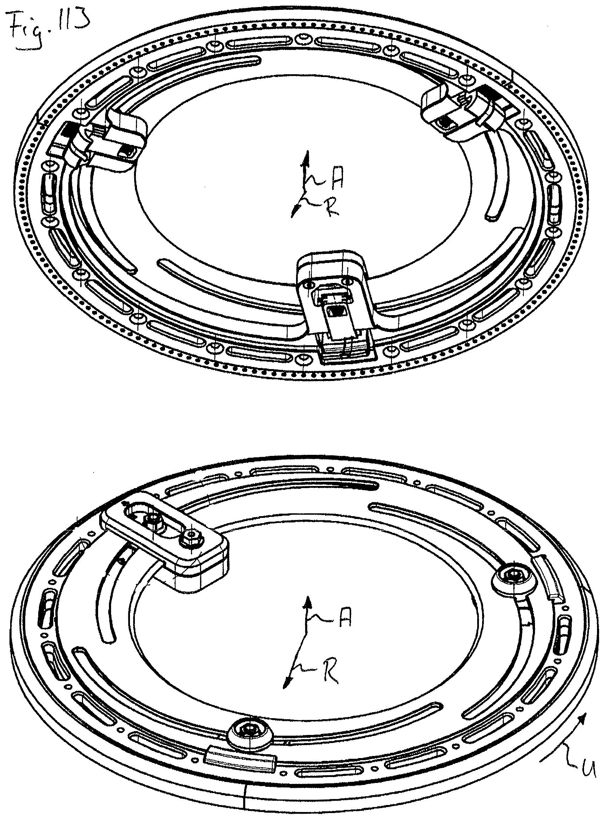

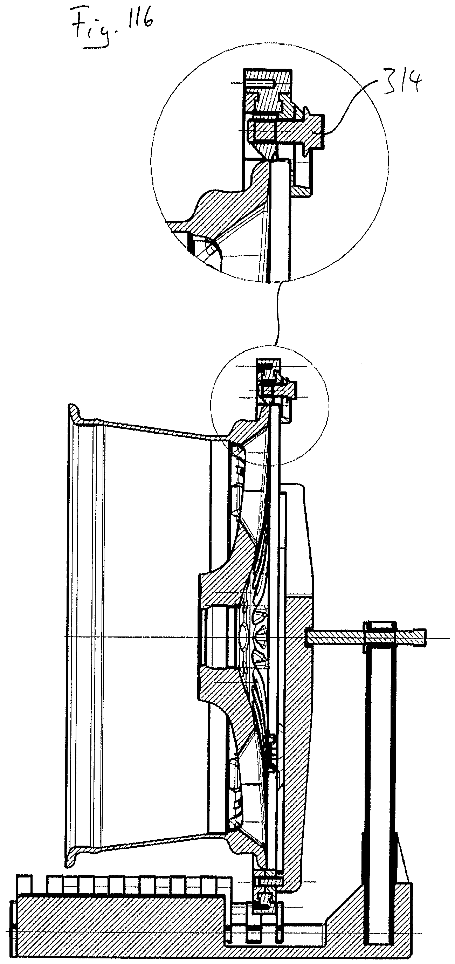

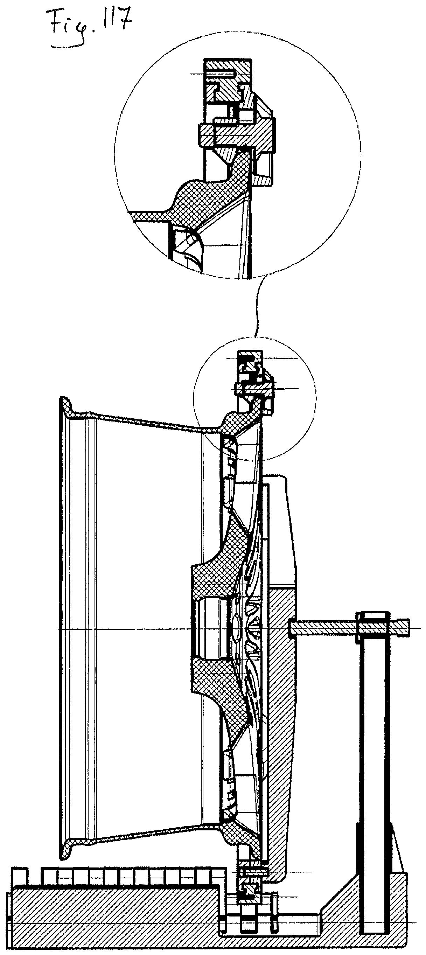

Die Figuren 109 bis 117 illustrieren erfindungsgemäße Systeme, aus einem Aufsatz 14 sowie einer Montagehilfe 280, die eine Anhebevorrichtung darstellt. Im Beispiel von Figur 109 ist die Montagehilfe in Form einer zusammenklappbaren Auffahrrampe 282 ausgebildet. Die zusammenklappbare Auffahrrampe 282 umfasst ein Stützelement 284, dass dazu angeordnet und ausgebildet ist, bei auf der Auffahrrampe 282 befindlichen Fahrzeugreifen 3 den Aufsatz 14 abzustützen, so dass dieser am Fahrzeugrad 1 montierbar ist. Über das Stützelement 284 ist der Aufsatz 14 in axialer Richtung A zum Fahrzeugrad 1 hin drängbar. Durch die Verwendung des Stützelements 284 ist es möglich, mittels Spannmitteln 283 den Reifen vom Felgenhorn wegzudrängen, so dass auch stark einwärts gekrümmte Spannmittel 283 in den Hintergriff mit dem Felgenhorn 10 gebracht werden können. Siehe bspw. die Spannmittel aus Figur 110.

Durch die Verwendung der Auffahrrampe 282 ist es auch möglich, einen Aufsatz mit einstückig ausgebildetem Laufflächenabschnitt am Fahrzeugrad zu montieren. Insbesondere muss der Aufsatz keinen Montageabschnitt 22 aufweisen, der vor dem Laufflächenabschnitt 16 am Fahrzeugrad 1 befestigt wird. Der Aufsatz 14 kann quasi als ein Stück ausgebildet sein und als Ganzes am Fahrzeugrad 1 in einem Befestigungsvorgang angebracht werden.

Statt der zusammenklappbaren Auffahrrampe 282 ist es auch möglich, das aufblasbare Kissen gemäß Figuren 82-84 zu verwenden. Es ist insbesondere möglich, die radial einwärts bewegbaren Spannmittel 20 mit schwenkbaren Befestigungsmitteln 290 zu kombinieren. Die schwenkbaren Befestigungsmittel 290 können beispielsweise in Umfangsrichtung jeweils neben den Spannmitteln 20 am Aufsatz 14 angeordnet sein.

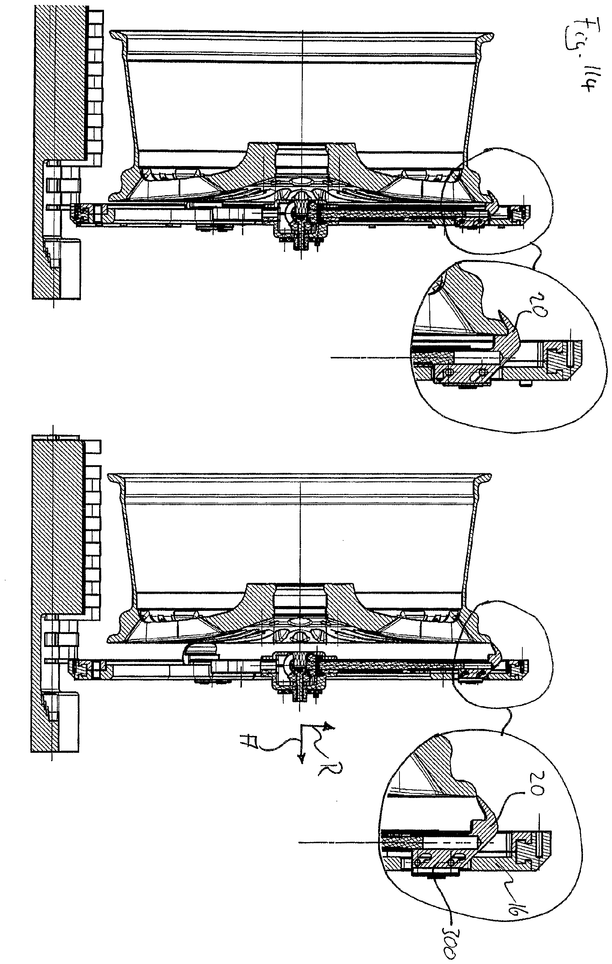

Figur 114 illustriert die Montage eines Aufsatzes, mit Spannmitteln 20 ähnlich den von beispielsweise Figur 5. Die Spannmittel 20 weisen außerdem eine Kulissenführung 300 auf. Diese Kulissenführung 300 ist mit dem Laufflächenabschnitt 16 gekoppelt. Durch die Kopplung der Kulissenführung 300 mit dem Laufflächenabschnitt 16 wird der Laufflächenabschnitt 16 bei radial einwärts gerichteter Bewegung der Spannmittel 20 (beispielsweise dem Übergang von der in Figur 114 rechts gezeigten Stellung, bei der die Spannmittel lediglich am Felgenhorn mit ihrer Spitze aufsitzen, in die das Felgenhorn vollständig hintergreifende Stellung links in Figur 114) ebenfalls in axialer Richtung zur Felge hin bewegt.

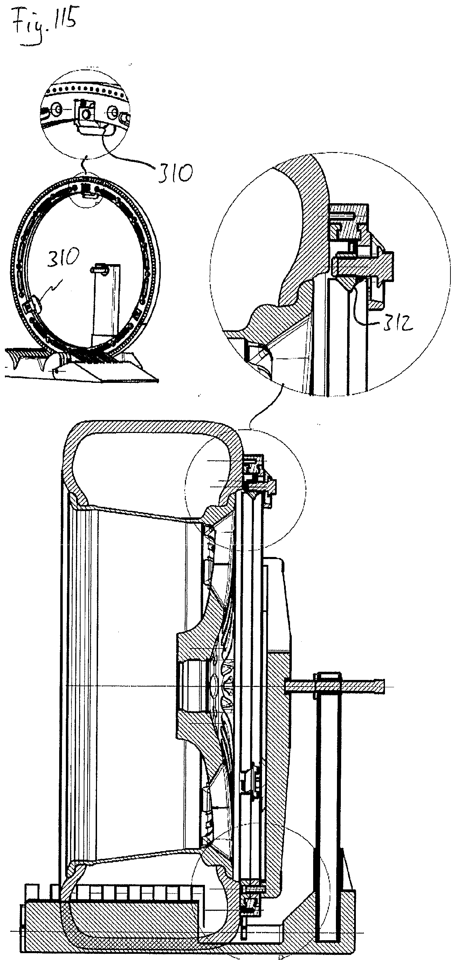

Der Aufsatz gemäß den Figuren 115 bis 117 weist Spannmittel in Form von radial einwärts gespannten Schiebern 310 auf. Die radial einwärts gespannten Schieber 310 weisen eine Kontaktierfläche 312 auf, die komplementär zur Innenkontur des Felgenhorns 10 ausgebildet ist. Um eine genau definierte Position des Aufsatzes 14 am Felgenhorn 10 zu gewährleisten, weist der Aufsatz 14 versetzt zu den federvorgespannten Schiebern 310 angeordnete Anlageabschnitte 38 auf. Die federvorgespannte Schieber 310 bewegen sich beim Andrücken an die Felge bzw. den Reifen 3 nach radial außen und drängen gleichzeitig den Reifen 3 in axialer Richtung A vom Felgenhorn 10 weg. Sobald die federvorgespannten Schieber 310 mit ihrer Spitze hinter das Felgenhorn 10 gelangen, kontaktieren und hintergreifen sie das Felgenhorn 10 von axial innen her mit ihrer der Felgenkontur angepassten Kontaktfläche 312. Das Felgenhorn 10 ist genau zwischen einer Anlagefläche 38 (die in den Figuren nicht extra gezeigt ist) und den federvorgespannten Schiebern 310 angeordnet. Anschließend kann der Laufflächenabschnitt 16 über die Befestigungsmittel 314 gegen die radial vorgespannten Schieber 310 verspannt werden, so dass die radial vorgespannten Schieber 310 in ihrer radialen Position festgelegt sind und der Laufflächenabschnitt 16 in axialer Richtung gegen den Reifen bzw. das Felgenhorn 10gepresst ist. Das Felgenhorn 10 ist dann zwischen dem Laufflächenabschnitt 16 bzw. dessen Anlagefläche 38 und den radial vorgespannten Schiebern 310 verspannt. Die Montage des entsprechenden Aufsatzes ist dann abgeschlossen.

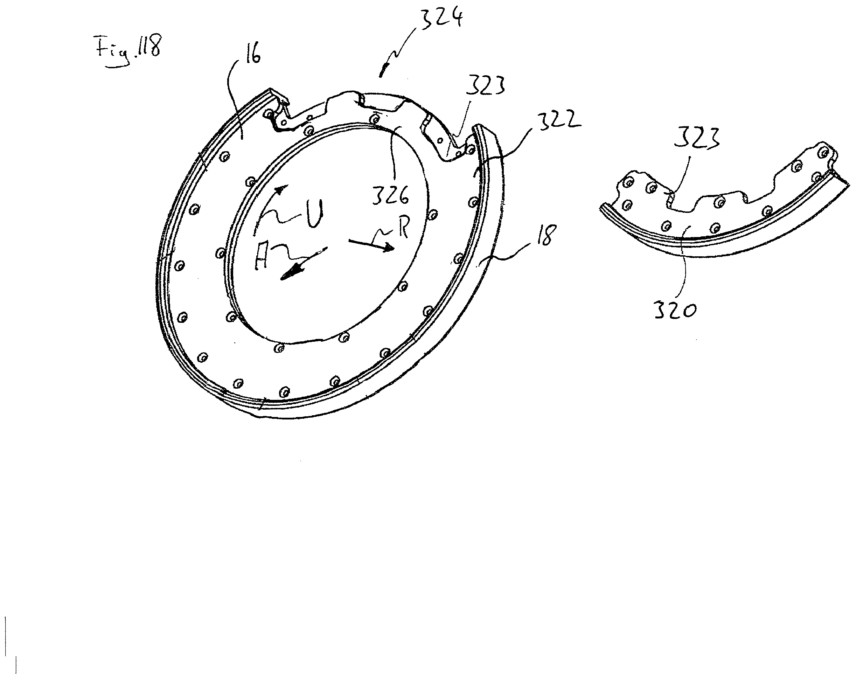

Der Laufflächenabschnitt 16 kann (wie bereits erwähnt) in Umfangsrichtung U durchgängig aufgebaut sein, wobei die Lauffläche 18 ein herausnehmbares umfängliches Segment 320 (abnehmbaren Teil) umfasst, was in Figur 118 illustriert ist. Es kann also vorgesehen sein, dass ein radial äußerer Teil 322 des Laufflächenabschnitts 16 eine umfängliche Unterbrechung 324 aufweist, während ein radial innenliegender Teil 326 des Laufflächenabschnitts 16 in Umfangsrichtung U geschlossen und damit der Laufflächenabschnitt 16 an sich durchgängig aufgebaut ist. Um eine feste und sichere Verbindung des herausnehmbaren umfänglichen Segments 320 mit dem übrigen Laufflächenabschnitt 16 zu ermöglichen, kann (wie in Figur 118 gezeigt) vorgesehen sein, dass beim Blick in axialer Richtung am herausnehmbaren umfänglichen Segments 320 und dem übrigen Laufflächenabschnitt 16 sich überlappende Bereiche 323 vorhanden sind, sodass beide Teile im verbunden Zustand in der orthogonal zur axialen Richtung A erstreckten Ebene flächig aneinander anliegen.

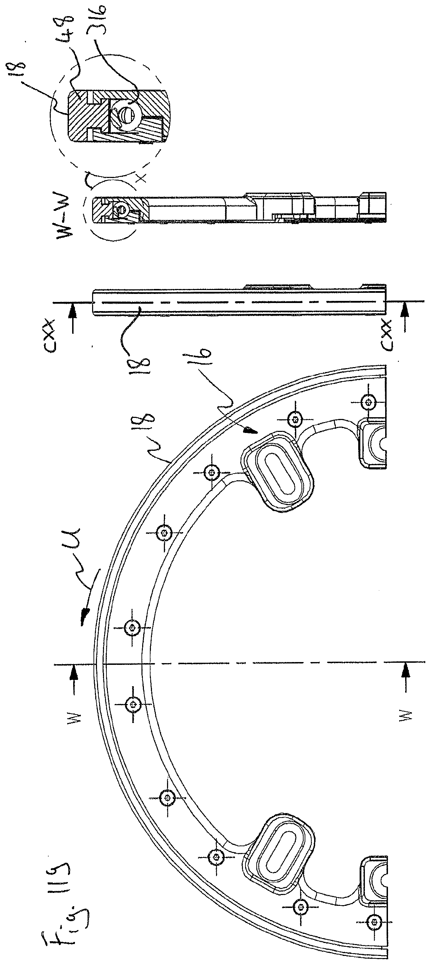

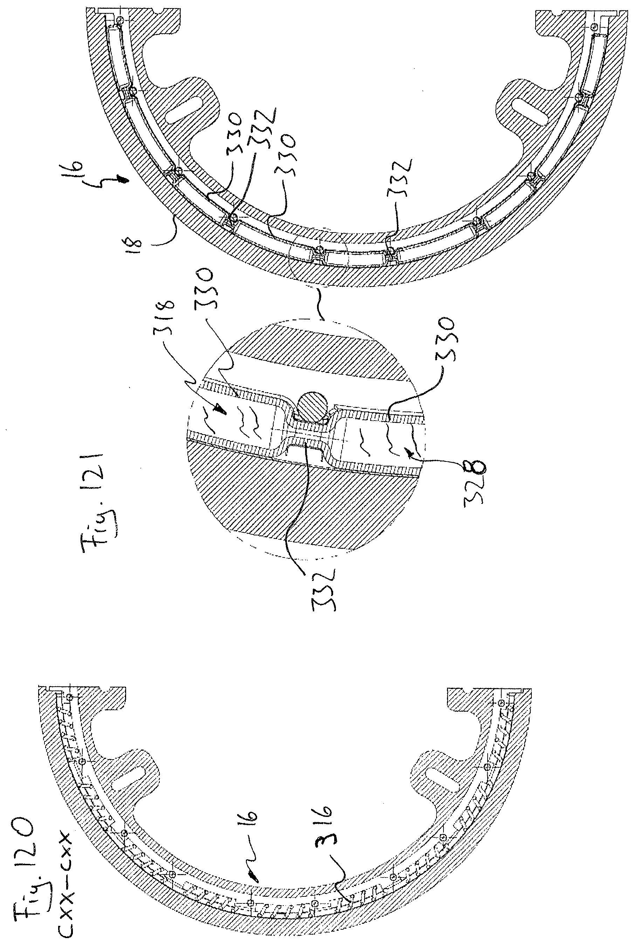

In den Figuren 119 und 120 ist ein Laufflächenabschnitt 16 gezeigt, bei dem die Dämpfungseinrichtung 87 mehrere in Umfangsrichtung U verteilt angeordnete Federelemente 236 umfasst. Die Federelemente 236 sind als in Umfangsrichtung U erstreckt angeordnete Spiralfedern 316 ausgebildet. Die Spiralfedern 316 liegen radial außen am Laufflächenkörper 48 an und radial innen an der metallischen Struktur des Laufflächenabschnitts 16. Wie in Figur 119 anschaulich dargestellt ist, sind die Spiralfedern 316 in axialer Richtung beidseitig durch die metallische Struktur des Laufflächenabschnitts 16 eingeschalt und in ihrer Position gehalten.

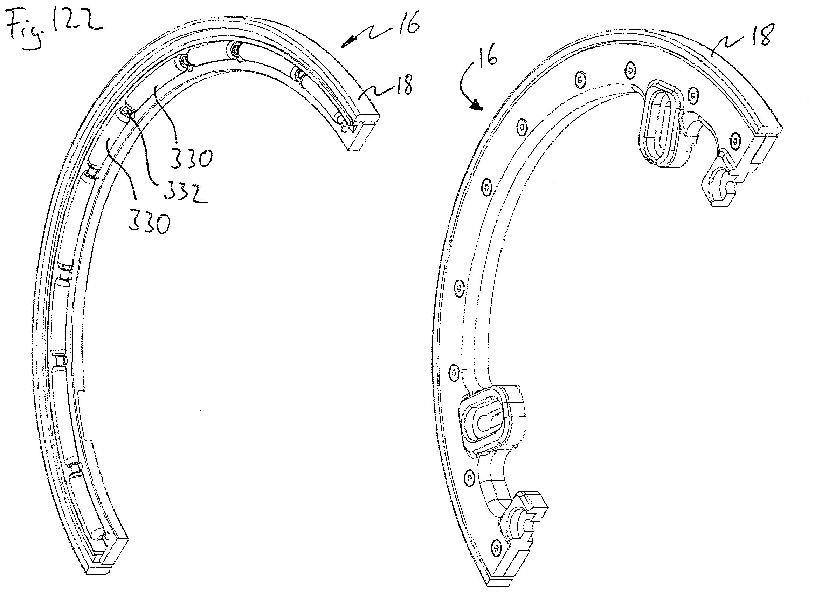

Figuren 121 und 122 illustrieren eine weitere Möglichkeit zur Ausbildung einer Dämpfungseinrichtung 87. Die Dämpfungseinrichtung 87 kann also auch eine Medienkammer 318 umfassen, die mit einer Flüssigkeit 328 (durch geschwungene Linien dargestellt), insbesondere einem hochviskosen Medium (bspw. Glycerin), gefüllt ist. Die Medienkammer 318 umfasst vorliegend Teilkammern 330, die jeweils miteinander fluidisch verbunden sind. Verbindungsabschnitte 332 der Teilkammern 330 miteinander weisen einen höheren Strömungswiderstand (Engstellen im Strömungsquerschnitt) auf als die Teilkammern 330. Dabei ist der Strömungswiderstand in Bezug auf eine in Umfangsrichtung U erfolgende Strömung der Flüssigkeit 328 gemeint. Wie in Figur 22 gezeigt, kann der Laufflächenabschnitt 16 zur Einschalung der Medienkammer 318 axial separate Segmente des Laufflächenabschnitts 16 umfassen, die miteinander verbindbar sind.

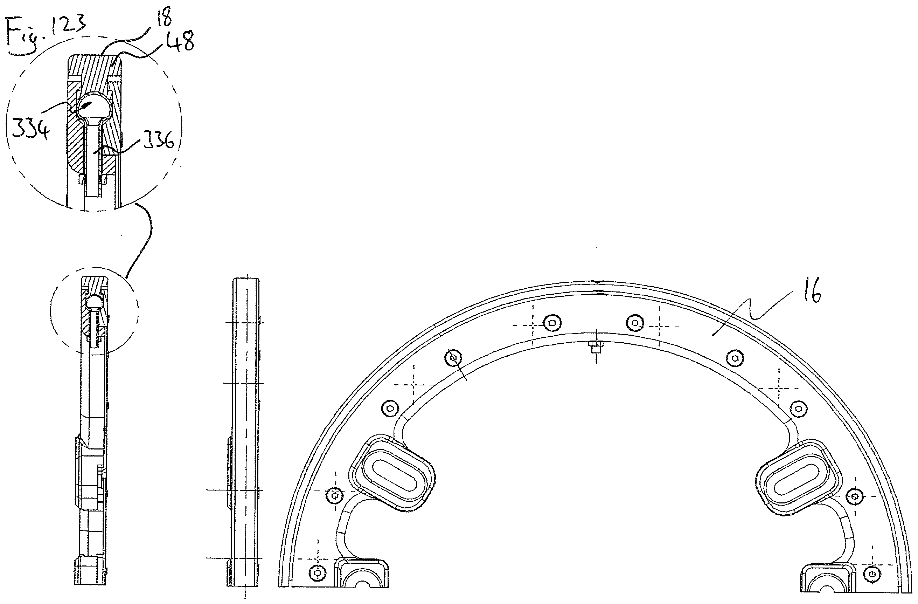

Figur 123 illustriert eine weitere Möglichkeit zur Ausbildung einer Dämpfungseinrichtung 87. Die Dämpfungseinrichtung 87 ist separat vom Laufflächenkörper 48 ausgebildet sein. Die Dämpfungseinrichtung 87 umfasst vorliegend eine Druckkammer 334, die radial innenliegend und separat vom Laufflächenkörper 48 ausgebildet ist. Die Druckkammer 334 weist einen Anschluss 336 zur Beaufschlagung mit Druckmedium auf.

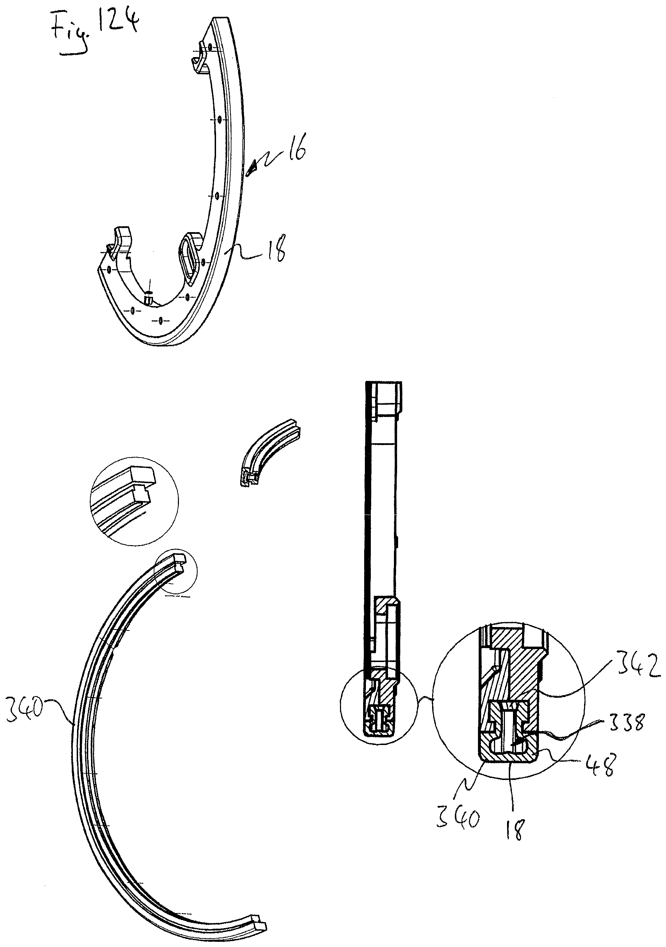

Figur 124 illustriert eine weitere Möglichkeit zur Ausbildung einer Dämpfungseinrichtung 87. Die Dämpfungseinrichtung ist mittels eines Laufflächenkörpers 48 ausgebildet ist, der eine Druckkammer 338 umfasst, die mit einem Druckmedium beaufschlagt (mit einem Medium, insbesondere ein Gas mit langen Molekülketten oder Stickstoff gefüllt und gasdicht abgeschlossen) oder beaufschlagbar ist. Die Druckkammer 338 ist dabei derart ausgebildet und angeordnet, dass die Lauffläche 18 durch das in der Druckkammer 338 befindliche Druckmedium bei dem Abrollvorgang der Lauffläche 18 über die Fahrbahn gedämpft ist. Vorzugsweise ist die Druckkammer 338 über ein Rückschlagventil mit Druckmedium beaufschlagbar. Der die Laufflächenkörper 48 ist zur Bildung der Druckkammer 338 (zweiteilig) mehrteilig ausgebildet. Ein Hauptkörper 340 ist durch eine Verschlusselement 342 derart verschlossen, dass die Druckkammer 338 zwischen Hauptkörper 340 und Verschlusselement 342 gebildet ist.

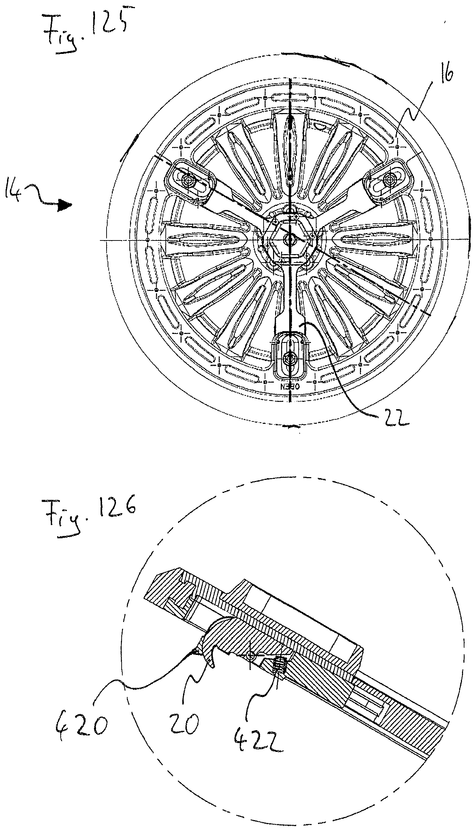

Figur 125 illustriert einen weiteren erfindungsgemäßen Aufsatz 14. Figur 126 zeigt eine Schnittdarstellung durch einen Bereich um ein Spannmittel und eine Scheuerschutzleistenschiebevorrichtung 420 des Aufsatzes 14 aus Figur 125.

Wie in Figur 126 gut erkennbar ist, ist das Spannmittel 20 über eine vorliegend als Spiralfeder 422 ausgeführte Federvorrichtung in eine axial einwärts geschwenkte Stellung vorgespannt. In radialer Richtung weiter auswärts erstreckt als das Spannmittel 20 ist die Scheuerschutzleistenschiebevorrichtung 420 angeordnet.

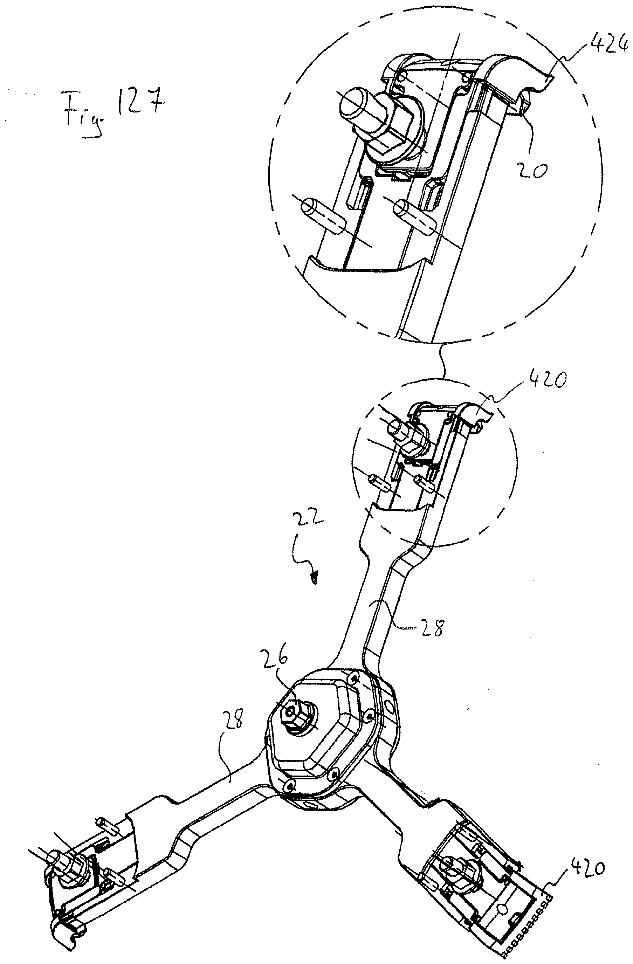

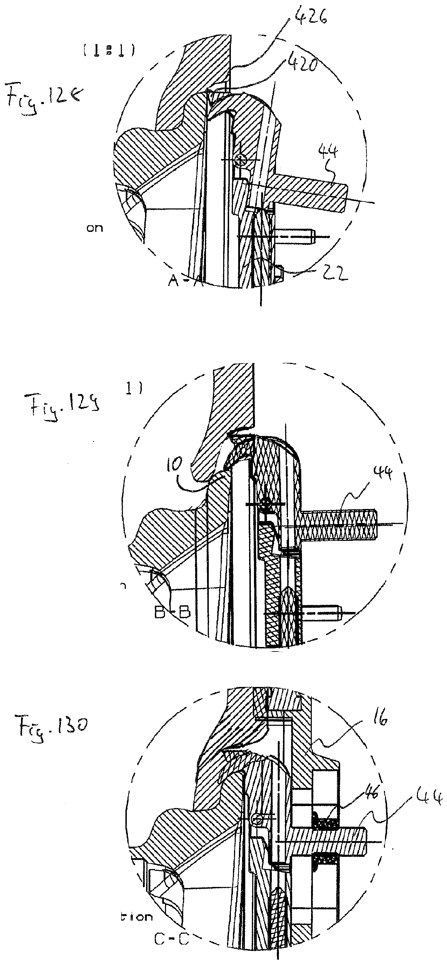

In Figur 127 ist der Montageabschnitt des Aufsatzes aus Figur 125 im Detail dargestellt. Wie dort gut zu erkennen ist, so ist jeweils an den einzelnen Spannmitteln 20 eine Scheuerschutzleistenschiebevorrichtung 420 angeordnet. Die Scheuerschutzleistenschiebevorrichtung 420 ist derart ausgebildet und angeordnet, dass sie an der Scheuerschutzleiste 426 (siehe Figur 128) des Reifens, an dem der Aufsatz 14 befestigt werden soll eingreifen kann. Hierzu weist sie einen in radialer Richtung R abstehenden Abschnitts 424 auf, der quasi die Scheuerschutzleiste von radial innen her erfassen kann und diese nach radial auswärts bewegen kann. Hierzu ist die Scheuerschutzleistenschiebevorrichtung 420 in radialer Richtung R gemeinsam mit den Spannmitteln 20 bewegbar. Der Bewegungsmechanismus ist hierzu ebenfalls über ein zentrales Gewinde 212 sowie eine Gewindestange, die in die Spannmittel 20 eingreift, realisiert, ähnlich wie dies bei den vorher beschriebenen Ausführungsformen ebenso realisiert ist.

In Figuren 128 bis 130 ist der Vorgang des Hintergreifens des Felgenhorns 10 durch die Spannmittel 20 mit dieser Ausführungsvariante illustriert.

In Figur 128 ist gezeigt, wie das Spannmittel 20 axial auswärts gegen seine Federvorspannung geschwenkt ist.

Die Scheuerschutzleistenschiebevorrichtung 420 kontaktiert die Scheuerschutzleiste 426 gerade noch nicht. Das Spannmittel 20 mit daran befindlicher Scheuerschutzleistenschiebevorrichtung 420 wird radial auswärts bewegt. Die Scheuerschutzleistenschiebevorrichtung 420 greift dann in die Scheuerschutzleiste 426 von radial innen her ein und schiebt damit den Reifen 3 axial auswärts und hebt ihn vom Felgenhorn 10 ab. Das Spannmittel 20 wird in die in Figur 129 gezeigte Stellung bewegt, wobei der Reifen durch den Griff der Scheuerschutzleistenschiebevorrichtung 420 an der Scheuerschutzleiste 426 vom Felgenhorn 10 leicht abgehoben wird. Hierdurch ist es möglich, dass das Spannmittel 20, wie in Figur 129 gezeigt, an das Felgenhorn 10 ansetzt . Durch leichten Druck in axialer Richtung A bewegt sich das Spannmittel 20 nun in Hintergriffstellung mit dem Felgenhorn 10, da der durch die Scheuerschutzleistenschiebevorrichtung 420 abgehobene Reifen der Bewegung des Spannmittels 20 nicht mehr entgegensteht.

Anschließend wird das Spannmittel 20 sowie die Scheuerschutzleistenschiebevorrichtung 420 radial einwärts bewegt (durch eine Bewegungsumkehr mittels der Werkzeugansatzstelle 26) und schließlich in die Position von Figur 130 radial einwärts bewegt. In dieser Position hintergreift das Spannmittel 20 formschlüssig das Felgenhorn 10 und liegt mit seinem komplementär zum Felgenhorn 10 ausgebildeten Abschnitt eng an diesem an. Durch Betätigung der Werkzeugansatzstelle 26 führen alle 3 Spannmittel 20 des Aufsatzes den eben beschriebenen Bewegungsablauf und abschließend bewegen sich hierdurch alle drei Spannmittel 20 des Aufsatzes 14 in die in Figur 130 gezeigte Konfiguration. Der Montageabschnitt 22 ist dann sicher am Felgenhorn 10 befestigt. Der Laufflächenabschnitt 16 kann dann wie in Figur 130 illustriert mittels der Befestigungseinrichtung 44 am Laufflächenabschnitt 16 bzw. den Spannmitteln 20 befestigt werden, wie bereits im Zusammenhang mit anderen Ausführungsformen beschrieben. Bei dem Aufsatz der Figuren 125 bis 130 ist der Montageabschnitt also derart ausgebildet, dass vorgesehen ist, dass die Spannmittel 20 zunächst radial auswärts bewegt werden. Mittels der Scheuerschutzleistenschiebevorrichtung 420 wird hierdurch der Reifen 3 bzw. dessen am Felgenhorn 10 anliegender Teil vom Felgenhorn 10 weg bewegt. Sind die Spannmittel 20 weit genug radial auswärts bewegt, so dass sie am Felgenhorn 10 ansetzen können (in Figur 129 gezeigte Position), so ist vorgesehen, dass die Bewegungsrichtung umgekehrt wird und die Spannmittel radial einwärts bewegt werden. Durch den Verlauf der des Hintergriffabschnitts der Spannmittel 20 gleiten diese bei radial einwärts gerichteter Bewegung in kompletten Hintergriff mit dem Felgenhorn 10 (Figur 130).

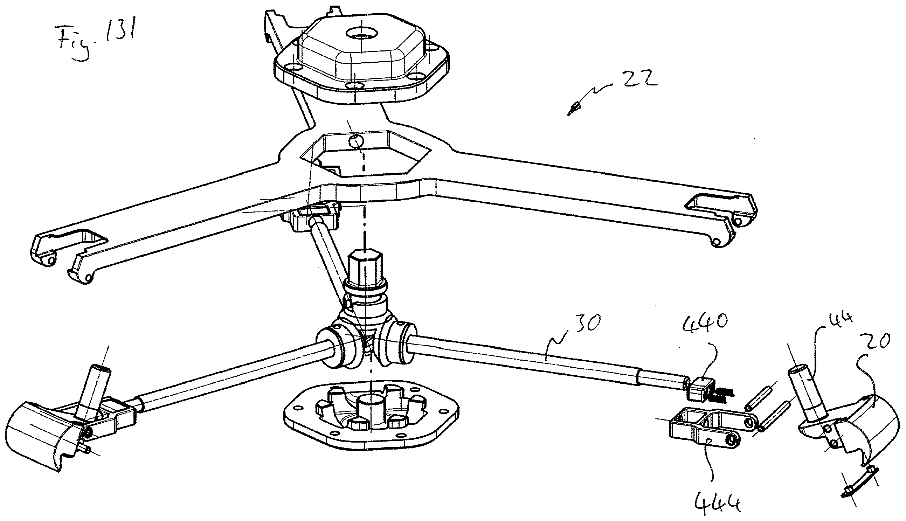

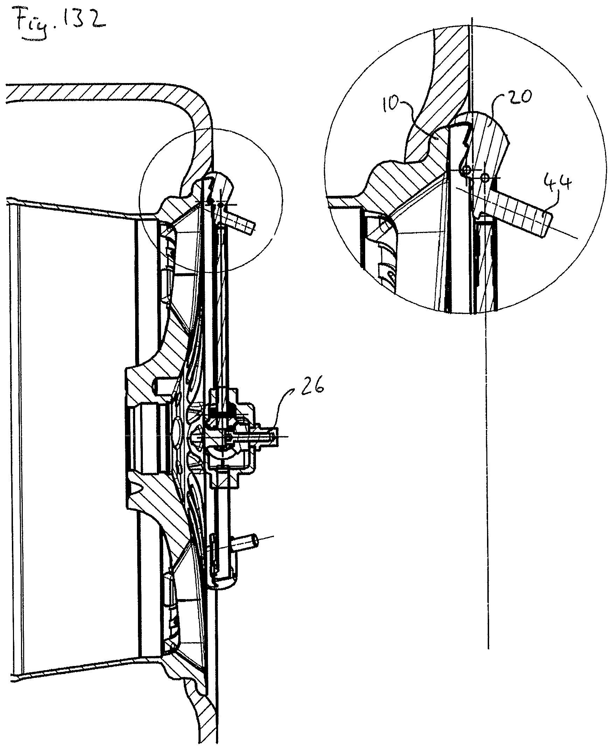

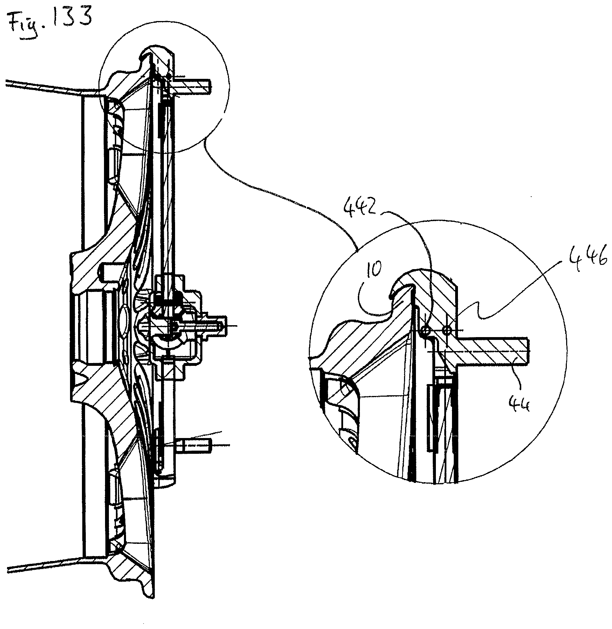

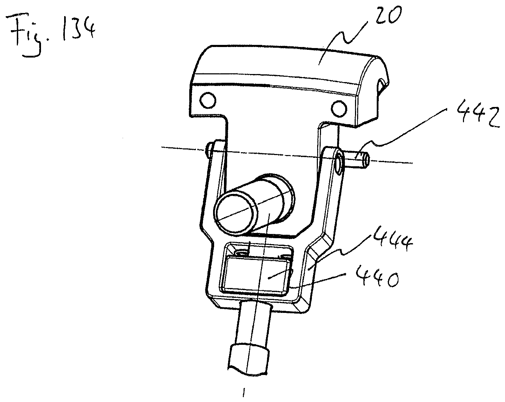

Die Figuren 131 bis 134 illustrieren einen weiteren erfindungsgemäßen Aufsatz 14. Der Aufsatz 14 aus den eben genannten Figuren weist ein schwenkbares Spannmittel 20 auf, wobei das schwenkbare Spannmittel 20 über eine nach radial auswärts gerichtete Druckbewegung eines Aktuierungselements 440 nach einwärts in eine Hintergriffstellung mit dem Felgenhorn 10 schwenkbar ist (Übergang von Figur 132 in die Stellung von Figur 133). Hierzu ist das Spannmittel 20 mit einer axial innenliegenden Schwenkachse schwenkbar gegenüber einem Grundkörper des Montageabschnitts 22 angelenkt. Die axial innenliegende Schwenkachse weist in Figur 133 das Bezugszeichen 442 auf. Eine axial außen liegende Verbindungsachse eines Aktuierungsrahmens 444 weist das Bezugszeichen 446 auf. Die Verbindungsachse 446 ist durch eine Zug- oder Druckbewegung des Aktuierungselements 444 gegenüber der Achse 442 schwenkbar. Hierdurch ist das Spannmittel 20 in axialer Richtung A in eine Hintergriffstellung mit dem Felgenhorn 10 schwenkbar bzw. aus dieser heraus bewegbar. Das Spannmittel 134 sowie die Achsen 442 sowie 446 sind in Figur 134 im Detail nochmals gezeigt. Das Aktuierungselement 444 ist innerhalb des Aktuierungsrahmens 444 federgelagert angeordnet. Von dem zentralen Getriebe 212 aus erstreckt sich jeweils eine Gewindestange 30 (bzw. Kopplungsmittel 30) zu den Spannmitteln 20. An den Gewindestangen 30 ist das jeweilige Aktuierungselement 440 des jeweiligen Spannmittels 20 derart angebracht, dass durch eine Rotationsbewegung der Gewindestange 30 das Aktuierungselement 440 radial einwärts oder auswärts bewegbar ist. Die jeweiligen Aktuierungselemente 440 sind im jeweiligen Aktuierungsrahmen 444 angeordnet, so dass sie jeweils bei einer radial einwärts oder auswärts gerichteten Bewegung einen Anschlag am Aktuierungsrahmen 444 finden. Damit kann durch Rotationsbewegung der jeweiligen Gewindestange 30 der Aktuierungsrahmen 444 radial einwärts oder auswärts bewegt werden. Der Aktuierungsrahmen 444 ist am jeweiligen Spannmittel an seiner zweiten Achse 446 schwenkbar angelenkt. Bei einer radial einwärts oder auswärts gerichteten Bewegung des Aktuierungsrahmens 444 verschwenkt dieser zum einen gegenüber dem Spannmittel und bewegt damit dessen zweite Achse 446 radial einwärts oder auswärts, wodurch das Spannmittel 20 insgesamt um die Achse 442 geschwenkt wird, so dass es in oder aus der Hintergriffstellung mit dem Felgenhorn 10 schwenkbar ist.

## Patentansprüche

1. Aufsatz (14) für ein Fahrzeugrad (1), das eine Felge (2) und einen auf der Felge (2) angeordneten Reifen (3) umfasst, wobei der Aufsatz (14) ausgebildet ist, um in einem Betriebszustand, in dem er am Fahrzeugrad (1) befestigt ist, einen Fahrbetrieb bei eingeschränkter Reifenfunktion zu ermöglichen, wobei der Aufsatz einen Stationärabschnitt (56) umfasst, der in dem Betriebszustand gegenüber der Felge unbeweglich befestigt ist, wobei der Aufsatz einen Laufflächenabschnitt (16) mit einer Lauffläche (18) zur Kontaktierung der Fahrbahn aufweist, und wobei der Aufsatz (14) wenigstens zwei Spannmittel (20) umfasst, wobei die Spannmittel (20) ausgebildet sind, um zur Befestigung des Aufsatzes am Fahrzeugrad einen Abschnitt, insbesondere ein Felgenhorn (10), der Felge (2) zu hintergreifen, wobei die Lauffläche (18) wenigstens ein Laufflächensegment (64, 66, 78) umfasst, das im Betriebszustand gegenüber dem Stationärabschnitt (56) in Umfangsrichtung (U) beweglich angeordnet ist, **dadurch gekennzeichnet, dass** ein Ringabschnitt des Laufflächenabschnitts (16) in Umfangsrichtung (U) gesehen wenigstens zwei Segmente (60, 62) aufweist, die voneinander lösbar und/oder gegenüber einander verschwenkbar oder verschiebbar sind.

2. Aufsatz (14) nach Anspruch 1, wobei der Aufsatz (14) einen Montageabschnitt (22) umfasst, wobei der Aufsatz (14) derart ausgebildet ist, dass der Montageabschnitt (22) zunächst in einer für den Betriebszustand vorgesehenen Position befestigt wird und anschließend der Laufflächenabschnitt (16), der die Lauffläche (18) umfasst, befestigt und in eine für den Betriebszustand vorgesehene Position gebracht wird, wobei der Montageabschnitt (22), wenn der Aufsatz (14) im Betriebszustand am Fahrzeugrad (1) befestigt ist, radial innenliegend von der Lauffläche (18) angeordnet ist, wobei wenigstens ein Teil des Laufflächenabschnitts (16) von dem Montageabschnitt (22) lösbar ausgebildet ist.

3. Aufsatz (14) nach Anspruch 1, wobei die Spannmittel (20) an dem Laufflächenabschnitt (16) angeordnet sind und der Aufsatz (14) eine Verspanneinheit (120) umfasst, die ausgebildet ist, um die Spannmittel (22) in Hintergriff mit dem Abschnitt, insbesondere dem Felgenhorn (10), der Felge (2) zu bringen, wobei die Verspanneinheit (120) von dem Laufflächenabschnitt (16) lösbar ist und im Betriebszustand von dem Aufsatz (14) entfernbar ist, ohne die Spannmittel (20) aus ihrer Hintergriffstellung zu lösen.

4. Aufsatz (14) nach dem vorigen Anspruch, wobei die Verspanneinheit (120) eine Abstützeinrichtung (124) umfasst, die ausgebildet und angeordnet ist, um die Verspanneinheit (120) in axialer Richtung (A) von Seiten der Felge (2) an der Felge (2) abzustützen.

5. Aufsatz (14) nach einem der beiden vorigen Ansprüche, wobei die Verspanneinheit (120) Kraftübertragungsmittel (128) zur Verbindung mit den Spannmitteln (20) umfasst.

6. Aufsatz (14) nach dem vorigen Anspruch, wobei die Kraftübertragungsmittel (128) derart mit den Spannmitteln (20) koppelbar sind, dass diese durch eine Verkürzung der radialen Erstreckung der Kraftübertragungsmittel (128) in die Hintergriffstellung mit der Felge (2) überführbar sind.

7. Aufsatz (14) nach einem der drei vorigen Ansprüche, wobei die Kraftübertragungsmittel (128) über einen formschlüssigen Hintergriff lösbar mit den Spannmitteln (20) gekoppelt, vorzugsweise lösbar formschlüssig mit den Spannmitteln (20) verhakt sind.

8. Aufsatz (14) nach einem der vorigen Ansprüche, wobei der Stationärabschnitt (56) einen Ringabschnitt (58) umfasst, und wobei der Aufsatz (14) mehrere in Umfangsrichtung (U) verteilt auf dem Ringabschnitt (58) angeordnete Laufflächensegmente (78) umfasst, die jeweils gegenüber dem Stationärabschnitt (56) in Umfangsrichtung (U) translatorisch bewegbar angeordnet sind, oder wobei der Laufflächenabschnitt (16) derart ausgebildet ist, dass die gesamte Lauffläche (18) gegenüber dem Ringabschnitt (58) um die axiale Richtung (A) rotierbar angeordnet ist.

9. Aufsatz (14) nach Anspruch 8, wobei die Laufflächensegmente (78) in Umfangsrichtung (U) federnd gelagert an dem Ringabschnitt (58) angeordnet sind, wobei die federnde Lagerung über elastische Elemente (86) ausgebildet ist, die zwischen den einzelnen Laufflächensegmenten (78) angeordnet sind und diese gegeneinander beweglich lagern und/oder wobei die federnde Lagerung über elastische Elemente (80, 82) ausgebildet ist, die die Laufflächensegmente (78) gegenüber dem Ringabschnitt (58) beweglich verspannen.

10. Aufsatz (14) nach einem der vorigen Ansprüche, wobei der gesamte Laufflächenabschnitt (16) in Umfangsrichtung (U) gesehen die wenigstens zwei Segmente (60, 62) aufweist.

11. Aufsatz (14) nach einem der vorigen Ansprüche, wobei wenigstens ein Wärmeleitelement (186), insbesondere ein Wärmeleitblech (188), insbesondere das Kupfer umfasst, insbesondere aus Kupfer besteht, in einen Kunststoff umfassenden Laufflächenkörper (48), der die Lauffläche (18) oder ein Laufflächensegment (78) bildet, erstreckt ist, insbesondere eingeformt ist, insbesondere wobei sich das Wärmeleitelement (186) von dem Laufflächenkörper (48) oder dem Laufflächensegment (78) aus nach radial einwärts erstreckt, insbesondere wobei das Wärmeleitelement (186) streifenförmig ausgebildet ist.

12. Aufsatz (14) nach dem vorigen Anspruch, wobei der Laufflächenabschnitt (16) zwei Elemente (190, 192) umfasst, die in axialer Richtung (A) gegeneinander verspannt sind und zwischen denen das Wärmeleitelement (186) angeordnet ist, insbesondere verspannt ist.

13. Aufsatz (14) nach einem der vorigen Ansprüche, wobei der Aufsatz (14) eine Verspannvorrichtung (156) umfasst, die ausgebildet ist, um zum einen die Spannmittel (20) in die Hintergriffstellung mit der Felge (2) zu bringen und zum anderen um eine Bewegung des Laufflächenabschnitts (16) in axialer Richtung (A) zur Felge (2) hin zu bewirken, wobei die Verspannvorrichtung (156) eine Betätigungseinrichtung umfasst über deren Betätigung beide Bewegungen bewirkt werden.

14. Aufsatz (14) nach dem vorigen Anspruch, wobei die Verspannvorrichtung (156) eine Werkzeugansatzstelle (232) umfasst, über die eine Kraft zur Bewirkung der Überführung der Spannmittel (20) in die Hintergriffstellung und der Bewegung des Laufflächenabschnitts (16) in die Verspannvorrichtung (156) einleitbar ist und/oder die Verspannvorrichtung (156) einen Antrieb umfasst, der die Kraft zur Bewirkung der Überführung der Spannmittel (20) in die Hintergriffstellung und der Bewegung des Laufflächenabschnitts (16) bereitstellt und/oder die Verspannvorrichtung (156) eine Anzugskraftbegrenzungseinrichtung (222) und/oder eine Andruckkraftbegrenzungseinrichtung (226) aufweist.

15. Aufsatz (14) nach dem vorigen Anspruch, wobei die Spannmittel (20) beim Überführen in die Hintergriffstellung, insbesondere rein, translatorisch radial einwärts bewegt werden, und die Verspannvorrichtung (156) ein Getriebe (212) zur Umwandlung einer, insbesondere um die axiale Richtung (A), rotierenden Antriebsbewegung (AB) eines Betätigungselements, vorzugsweise eines manuellen Werkzeugs oder einen Motors, in die translatorische Bewegung der Spannmittel (20) aufweist, insbesondere wobei das Getriebe (212) auch zur Bewirkung der Bewegung der Lauffläche (16) ausgebildet ist.

16. Aufsatz (14) nach einem der vorigen Ansprüche, wobei er eine Ausfahrhilfe (92) umfasst, die dem Ausfahren aus einer Rille, insbesondere einem Gleis, dient, wobei diese Ausfahrhilfe (92) einen in axialer Richtung (A) auskragenden Bereich (94) der Lauffläche (18) umfasst, insbesondere eine in axialer Richtung (A) auskragende Wellenstruktur (96) der Lauffläche (18).

17. Aufsatz (14) nach einem der vorigen Ansprüche, wobei der Laufflächenabschnitt (16) eine Dämpfungseinrichtung (87) zur Dämpfung der Lauffläche (18) in radialer Richtung (R) umfasst.

18. Aufsatz (14) nach dem vorigen Anspruch, wobei die Dämpfungseinrichtung (87) wenigstens ein Federelement (236) umfasst, wobei ein radial äußerer Bereich des Federelements (236) den Laufflächenkörper (48) nach radial außen hin stützt und ein radial innenliegender Bereich des Federelements (236) an einem metallischen Grundkörper des Laufflächenabschnitts (16) anliegt.

19. Aufsatz (14) nach einem der vorigen Ansprüche, wobei der Aufsatz (14) eine Druckerzeugungseinrichtung (102) umfasst, die ausgebildet und angeordnet ist, um durch eine Abrollbewegung des Aufsatzes (14) ein fluides Medium unter Druck zu setzen,
wobei die Druckerzeugungseinrichtung (102) optional wenigstens einen Hohlraum (104) umfasst, der derart radial innenliegend von der Lauffläche (18) angeordnet ist, dass ein Wandabschnitt (112) des Hohlraums (104) durch eine Abrollbewegung des Aufsatzes (14) derart beweglich ist, dass sich dessen Volumen verringert und das im Hohlraum (104) befindliche Medium dadurch verdichtet wird.

20. Aufsatz (14) nach einem der vorigen Ansprüche, wobei der Aufsatz (14) wenigstens ein in eine radial einwärts liegende Stellung vorgespanntes Spannmittel (20, 166) umfasst, wobei die Vorspannung des Spannmittels (20, 166) optional durch eine Verriegelungseinrichtung (167) verriegelt und freigebbar ist oder das Spannmittel (20) durch die Vorspannung einen Freigang aufweist.

21. Aufsatz (14) nach einem der vorigen Ansprüche,
wobei wenigstens ein, insbesondere mehrere, insbesondere jedes, Spannmittel (20) einen Befestigungsabschnitt (42) mit einer Befestigungseinrichtung (44) aufweist, über die der Laufflächenabschnitt (16) an dem Spannmittel (20) befestigbar und in axialer Richtung (A), vorzugsweise durch eine klemmende Befestigung, gegen ein Spiel gegenüber dem Spannmittel (20) sicherbar ist, und/oder wobei die Befestigungseinrichtung (44) derart ausgebildet ist, dass der Laufflächenabschnitt (16) sich bei Befestigung über die Befestigungseinrichtung (44) in der axialen Richtung (A) zur Felge (2) hin bewegt, insbesondere wobei die Befestigungseinrichtung (44) eine schraubbare Verbindung umfasst, bei deren Anziehen der Laufflächenabschnitt (16) sich in der axialen Richtung (A) zum Montageabschnitt (20) hin bewegt.

22. Aufsatz (14) nach einem der vorigen Ansprüche, wobei er einen Montageabschnitt (22) aufweist, der zwei relativ zueinander verschwenkbare Schenkel (174) aufweist, wobei an jedem der Schenkel (174) wenigstens ein Spannmittel angeordnet ist, wobei der Abstand der an den Schenkeln (174) angeordneten Spannmittel (20) durch verschwenken der Schenkel (174) veränderbar ist,
wobei der Montageabschnitt (22) optional eine Spannmittelanordnung umfasst, in der eines der Spannmittel gehalten ist, wobei die beiden Schenkel (174) sich von der Spannmittelanordnung weg erstrecken und jeweils gegenüber dieser schwenkbar angeordnet sind.

## Claims

1. Attachment (14) for a vehicle wheel (1), having a rim (2) and a tire (3) arranged on the rim (2), wherein the attachment (14) is configured to enable a driving operation with a restricted tire function in an operating state in which it is fastened on the vehicle wheel (1), wherein the attachment comprises a stationary section (56), which is fastened immovably with respect to the rim in the operating state, wherein the attachment has a tread section (16) with a tread (18) for contacting the road, and wherein the attachment (14) comprises at least two clamping means (20), wherein the clamping means (20) are configured to engage behind a section, in particular a rim flange (10) of the rim (2), to fasten the attachment on the vehicle wheel, wherein the tread (18) comprises at least one tread segment (64, 66, 78), which is arranged movably in the circumferential direction (U) with respect to the stationary section (56) in the operating state, **characterised in that** an annular section of the tread section (16) includes at least two segments (60, 62), seen in a circumferential direction (U), which are detachable from one another and/or pivotable or displaceable relative to one another.

2. Attachment (14) according to claim 1, wherein the attachment (14) comprises an assembly section ((22), wherein the attachment (14) is configured so that the assembly section (22) is first fastened in a position provided for the operating state and then the tread section (16), which comprises the tread (18), is fastened and brought into a position provided for the operating state, wherein the assembly section (22), when the attachment (14) is fastened on the vehicle wheel (1) in the operating state, is arranged lying radially inside of the tread (18), wherein at least a part of the tread section (16) is formed detachably from the assembly section (22).

3. Attachment (14) according to claim 1, wherein the clamping means (20) are arranged on the tread section (16) and the attachment (14) comprises a bracing unit (120) configured to bring the clamping means (20) into rear engagement with the section, in particular the rim flange(10), of the rim (2), wherein the bracing unit (120) is detachable from the tread section (16) and is configured to be removed from the attachment (14) in the operating state without releasing the clamping means (20) from their rear engagement position.

4. Attachment (14) according to the preceding claim, wherein the bracing unit (120) comprises a support device (124), which is configured and arranged to support the bracing unit (120) in axial direction (A) from the rim side on the rim (2).

5. Attachment (14) according to any one of the two preceding claims, wherein the bracing unit (120) comprises force transmission means (128) for connection to the clamping means (20).

6. Attachment (14) according to the preceding claim, wherein the force transmission means (128) are configured to be couplable to the clamping means (20) such that the latter are transferable into the rear engagement position with the rim (2) by way of a shortening of the radial extension of the force transmission means (128).

7. Attachment (14) according to any one of the three preceding claims, wherein the force transmission means (128) are coupled detachably to the clamping means (20) via a positive rear engagement, and are preferably hooked detachably in a positive-locking manner to the clamping means (20).

8. Attachment (14) according to any one of the preceding claims, wherein the stationary section (56) comprises an annular section (58), and wherein the attachment (14) comprises a number of tread segments (78) arranged distributed on the annular section (58) in a circumferential direction (U), which segments are each arranged to be movable translationally with respect to the stationary segment (56) in a circumferential direction (U), or wherein the tread section (16) is configured such that the entire tread (18) is arranged rotatably around the axial direction (A) with respect to the annular section (58).

9. Attachment (14) according to claim 8, wherein the tread segments (78) are arranged spring-mounted on the annular section (58) in a circumferential direction (U), wherein the spring mounting is formed by way of elastic elements (86), which are arranged between the individual tread segments (78) and to support the latter movably relative to one another and/or wherein the spring mounting is formed by way of elastic elements (80, 82), which brace the tread segments (78) movably with respect to the annular section (58).

10. Attachment (14) according to any one of the preceding claims, wherein the entire tread section (16) includes the at least two segments (60, 62), seen in a circumferential direction (U).

11. Attachment (14) according to any one of the preceding claims, wherein at least one heat conduction element (186), in particular a heat conduction plate (188), in particular which comprises copper, in particular consists of copper, is moulded into a tread body (48) comprising plastic, which body forms the tread (18) or a tread segment (78), in particular wherein the heat conduction element (186) extends from the tread body (48) or the tread segment (78) radially inwards, in particular wherein the heat conduction element (186) is formed strip-shaped.

12. Attachment (14) according to the preceding claim, wherein the tread section (16) comprises two elements (190, 192), which are braced against one another in an axial direction (A) and between which the heat conduction element (186) is arranged, in particular is braced.

13. Attachment (14) according to any one of the preceding claims, wherein the attachment (14) comprises a bracing mechanism (156), which is configured on the one hand to bring the clamping means (20) into the rear engagement position with the rim (2) and on the other hand to bring about a movement of the tread section (16) in an axial direction (A) towards the rim (2), wherein the bracing mechanism (156)comprises an actuating device, via the actuation of which both movements are brought about.

14. Attachment (14) according to the preceding claim, wherein the bracing mechanism (156) comprises a tool application point (232), via which a force can be introduced into the bracing mechanism (156) to bring about the transfer of the clamping means (20) into the rear engagement position and the movement of the tread section (16) and/or wherein the bracing mechanism (156) comprises a drive, which provides the force for bringing about the transfer of the clamping means (20) into the rear engagement position and the movement of the tread section (16) and/or wherein the bracing mechanism (156) includes a tightening force limiting device (222) and/or a pressure limiting device (226).

15. Attachment (14) according to the preceding claim, wherein the clamping means (20), on transfer into the rear engagement position, are moved radially inwards, in particular purely translationally, and the bracing mechanism (156) includes a transmission (212) for converting a rotating drive movement (AB), in particular about the axial direction (A), of an actuating element, preferably of a manual tool or a motor, into the translational movement of the clamping means (20), in particular wherein the transmission (212) is configured also to bring about the movement of the tread (16).

16. Attachment (14) according to any one of the preceding claims, comprising a drive-off aid (92), which serves to drive out of a groove, in particular a track, wherein said drive-off aid (92) comprises an area (94) of the tread (18) protruding in an axial direction (A), in particular a wave structure (96) of the tread (18) protruding in an axial direction (A).

17. Attachment (14) according to any one of the preceding claims, wherein the tread section (16) comprises a damping device (87) for damping the tread (18) in a radial direction (R).

18. Attachment (14) according to the preceding claim, wherein the damping device (87) comprises at least one spring element (236), wherein a radially outer area of the spring element (236) supports the tread body (48) radially outwards and a radially inner area of the spring element (236) rests on a metal base body of the tread section (16).

19. Attachment (14) according to any one of the preceding claims, wherein the attachment (14) comprises a pressure-generating device (102) configured and arranged to put a fluid medium under pressure by a rolling movement of the attachment (14), wherein the pressure-generating device (102) optionally comprises at least one cavity (104) arranged lying radially inside of the tread (18) such that a wall section (112) of the cavity (104) is movable due to a rolling movement of the attachment (14) in such a way that its volume is reduced and the medium located in the cavity (104) is compressed thereby.

20. Attachment (14) according to any one of the preceding claims, wherein the attachment (14) comprises at least one clamping means (20, 166) pretensioned into a position lying radially inwards, wherein the pretensioning of the clamping means (20, 166) is optionally lockable and releasable by a locking device (167) or wherein the clamping means (20) comprises a clearance due to the pretensioning.

21. Attachment (14) according to any one of the preceding claims, wherein at least one, in particular several, in particular each, clamping means (20) includes a fastening section (42) with a fastening device (44), via which the tread section (16) is configured to be fastened on the clamping means (20) and configured to be secured in an axial direction (A), preferably by a clamping fastening, against play with respect to the clamping means (20), and/or wherein the fastening device (44) is designed such that the tread section (16) moves upon fastening via the fastening device (44) in the axial direction (A) towards the rim (2), in particular wherein the fastening device (44) comprises a screwable connection, during tightening of which the tread section (16) moves in the axial direction (A) towards the assembly section (22).

22. Attachment (14) according to any one of the preceding claims, wherein it includes an assembly section (22) having two limbs (174) pivotable relative to one another, wherein at least one clamping means is arranged on each of the limbs (174), wherein the spacing of the clamping means (20) arranged on the limbs (174) is variable by pivoting of the limbs (174),
wherein the assembly section (22) optionally comprises a clamping device arrangement in which one of the clamping means is held, wherein the two limbs (174) extend away from the clamping device arrangement and are each arranged pivotably with respect to the latter.

## Revendications

1. Pièce rapportée (14) pour une roue de véhicule (1), qui comprend une jante (2) et un pneu (3) disposé sur la jante (2), la pièce rapportée (14) étant conçue pour, une fois en fonctionnement, lorsqu'elle est fixée à la roue de véhicule (1), permettre un roulage lorsque le fonctionnement du pneu est limité, la pièce rapportée comprend une section fixe (56), qui, une fois en fonctionnement, est fixée à demeure par rapport à la jante, la pièce rapportée présente une section de bande de roulement (16) avec une bande de roulement (18) pour entrer en contact avec la voie de circulation, et la pièce rapportée (14) comprenant au moins deux moyens de serrage (20), les moyens de serrage (20) étant conçus, pour fixer la pièce rapportée sur la roue de véhicule, pour venir bloquer par l'arrière une section, en particulier un rebord de jante (10) de la jante (2), la bande de roulement (18) comprenant au moins un segment de bande de roulement (64, 66, 78), qui est disposé mobile, une fois en fonctionnement, par rapport à la section fixe (56) dans la direction circonférentielle (U) **caractérisée en ce qu'**une section annulaire de la section de bande de roulement (16) lorsque observée dans la direction circonférentielle (U) comprend deux segments (60, 62 qui peuvent se détacher l'un par rapport à l'autre et/ou peuvent pivoter ou se déplacer l'un par rapport à l'autre.

2. Pièce rapportée (14) selon la revendication 1, la pièce rapportée comprend une section de montage (22), la pièce rapportée (14) étant conçue de manière à ce que la section de montage soit d'abord fixée dans une position prévue pour l'état de fonctionnement et ensuite la section de bande de roulement (16) qui comprend la bande de roulement (18) soit fixée, et est amenée dans une position prévue pour l'état de fonctionnement, la section de montage (22), lorsque la pièce rapportée (14) est fixée dans l'état de fonctionnement sur la roue de véhicule (1), est disposée radialement à l'intérieur de la bande de roulement (18), dans laquelle au moins une partie de la section de bande de roulement (16) est conçue amovible de la section de montage (22).

3. Pièce rapportée (14) selon la revendication 1, dans laquelle les moyens de serrage (20) sont disposés sur la section de bande de roulement (16) et la pièce rapportée (14) comprend une unité de serrage (120) qui est conçue pour amener les moyens de serrage (22) à bloquer par l'arrière la section, en particulier le rebord de jante (10), de la jante (2), dans laquelle l'unité de serrage (120) est amovible de la section de bande de roulement (16) et une fois en fonctionnement peut être retirée de la pièce rapportée (14) sans détacher les moyens de fixation (20) de leur position de blocage par l'arrière.

4. Pièce rapportée (14) selon la revendication précédente, dans laquelle l'unité de serrage (120) comprend une unité d'appui (124) qui est conçue et disposée pour supporter l'unité de serrage (120) dans la direction axiale (A) depuis les côtés de la jante (2) sur la jante (2).

5. Pièce rapportée (14) selon l'une quelconque des deux revendications précédentes, dans laquelle l'unité de serrage (120) comprend des moyens de transfert de force (128) pour la liaison aux moyens de serrage (20).

6. Pièce rapportée (14) selon la revendication précédente, dans laquelle les moyens de transfert de force (128) peuvent être accouplés aux moyens de serrage (20) de sorte que ceux-ci puissent être amenés par un raccourcissement de l'étendue radiale des moyens de transfert de force (128) dans une position de blocage par l'arrière avec la jante (2).

7. Pièce rapportée (14) selon l'une quelconque des revendications précédentes, dans laquelle les moyens de transfert de force (128) sont accouplés amovibles par un blocage arrière par complémentarité de forme aux moyens de serrage (20), de préférence sont accrochés amovible par complémentarité de forme aux moyens de serrage (20).

8. Pièce rapportée (14) selon l'une quelconque des revendications précédentes, dans laquelle la section fixe (56) comprend une section annulaire (58), et la pièce rapportée (14) comprend dans la direction circonférentielle (U) des segments de bande de roulement (78) répartis sur la section annulaire (58), qui respectivement sont disposés mobiles en translation par rapport à la section fixe (56) dans la direction circonférentielle (U), ou dans laquelle la section de bande de roulement (16) est conçue de telle sorte que toute la bande de roulement (18) soit disposée en rotation autour de la direction axiale (A) par rapport à la section annulaire (58).

9. Pièce rapportée (14) selon la revendication 8, dans laquelle les segments de bande de roulement (78) sont montés par ressorts sur la section annulaire (58) dans la direction circonférentielle (U), le montage par ressorts étant conçu par des éléments élastiques (86), qui sont disposés entre chacun des segments de bande de roulement (78) et ces derniers sont montés mobiles les uns par rapport aux autres et/ou le montage par ressorts étant conçu par des éléments élastiques (80, 82) qui serrent de manière mobile les segments de bande de roulement (78) par rapport à la section annulaire (58).

10. Pièce rapportée (14) selon l'une quelconque des revendications précédentes, dans laquelle toute la section de bande de roulement (16) comprend les au moins deux segments (60, 62) lorsque observée dans la direction circonférentielle (U).

11. Pièce rapportée (14) selon l'une quelconque des revendications précédentes, dans laquelle au moins un élément conducteur thermique (186) comprend en particulier une tôle conductrice thermique (188), en particulier le cuivre, constitué en particulier en cuivre, est façonné en particulier en un corps de bande de roulement (48) comprenant un plastique qui forme la bande de roulement (18) ou un segment de bande de roulement (78), en particulier dans laquelle l'élément conducteur thermique (186) s'étend du corps de bande de roulement (48) ou du segment de bande de roulement (78) radialement vers l'intérieur, en particulier l'élément conducteur thermique (186) se présente sous forme de bande.

12. Pièce rapportée (14)selon la revendication précédente, dans laquelle la section de bande de roulement (16) comprend deux éléments (190, 192) qui sont serrés l'un contre l'autre dans la direction axiale (A) et l'élément conducteur thermique (186) est disposé, notamment, serré entre eux.

13. Pièce rapportée (14) selon l'une quelconque des revendications précédentes, dans laquelle la pièce rapportée (14) comprend un dispositif de serrage (156) qui est conçu pour amener d'une part les moyens de serrage (20) dans la position de blocage par l'arrière avec la jante (2) et d'autre part pour provoquer un mouvement de la section de bande de roulement (16) dans la direction axiale (A) vers la jante (2), qui comprend un dispositif d'actionnement dont l'actionnement provoque les deux mouvements.

14. Pièce rapportée (14) selon la revendication précédente, dans laquelle le dispositif de serrage (156) comprend un point d'attache d'outil (232) par lequel une force est déclenchée pour amener les moyens de serrage (20) dans la position de blocage par l'arrière et le mouvement de la section de bande de roulement (16) dans le dispositif de serrage (156) et/ou le dispositif de serrage (156) comprend un entraînement qui produit la force de déclenchement pour amener les moyens de serrage (20) dans la position de blocage par l'arrière et le mouvement de la section de bande de roulement (16) et/ou le dispositif de serrage (156) comprend un dispositif de limitation de force de traction (222) et/ou un dispositif de limitation de force de pression (226).

15. Pièce rapportée (14) selon la revendication précédente, dans laquelle les moyens de serrage (20) sont déplacés, en particulier uniquement, par translation radialement vers l'intérieur lorsqu'ils sont amenés dans la position de blocage par l'arrière, et le dispositif de serrage (156) comprend une transmission (212) pour convertir un mouvement d'entraînement (AB) rotatif, en particulier autour de la direction axiale (A) d'un élément d'actionnement, de préférence d'un outil manuel ou d'un moteur, en un mouvement de translation des moyens de serrage (20), en particulier la transmission (121) étant également conçue pour provoquer le mouvement de la bande de roulement (16).

16. Pièce rapportée (14) selon l'une quelconque des revendications précédentes, la pièce rapportée comprenant une aide à l'extraction (92) qui sert extraire d'une rainure, en particulier d'une voie, dans laquelle cette aide à la sortie (92) comprend une zone faisant saillie dans la direction axiale (A) de la bande de roulement (18), en particulier une structure ondulée (96) de la bande de roulement (18) faisant saillie dans la direction axiale (A).

17. Pièce rapportée (14) selon l'une quelconque des revendications précédentes, dans laquelle la section de bande de roulement (16) comprend un dispositif d'amortissement (87) pour amortir la bande de roulement (18) dans la direction radiale (R).

18. Pièce rapportée (14) selon la revendication précédente, dans laquelle le dispositif d'amortissement (87) comprend au moins un élément à ressort (236), dans laquelle une zone radialement externe de l'élément à ressort (236) supporte le corps de bande de roulement (48) radialement vers l'extérieur et une zone se trouvant radialement à l'intérieur de l'élément à ressort (236) repose sur un corps de base métallique de la section de bande de roulement (16).

19. Pièce rapportée (14) selon l'une quelconque des revendications précédentes, dans laquelle comprend un dispositif de production de pression (102) qui est conçu et disposé pour mettre sous pression un fluide par un mouvement de déroulement de la pièce rapportée (14), le dispositif de production de pression (102) comprenant éventuellement au moins un espace creux (104) qui est disposé radialement à l'intérieur de la bande de roulement (18) de sorte qu'une section de paroi (112) de l'espace creux (104) puisse être mobile par un mouvement de déroulement de la pièce rapportée (14) de sorte que son volume se réduise et que le fluide se trouvant dans l'espace creux (104) soit ainsi comprimé.

20. Pièce rapportée (14) selon l'une quelconque des revendications précédentes, la pièce rapportée (14) comprend au moins un moyen de serrage (20, 166) précontraint dans une position allant radialement vers l'intérieur, dans laquelle la précontrainte du moyen de serrage (10, 166) est verrouillée et libérable éventuellement par le dispositif de verrouillage (167) ou le moyen de serrage (20) comprend un accès libre par la précontrainte.

21. Pièce rapportée (14) selon l'une quelconque des revendications précédentes, dans laquelle au moins un, en particulier plusieurs, en particulier chaque moyen de serrage (20), comprend une section de fixation (42) avec un dispositif de fixation (44) qui permet de fixer la section de bande de roulement (16) sur le moyen de serrage (20) et peut être fixée dans la direction axiale (A), de préférence par une fixation par serrage contre un jeu par rapport au moyen de serrage (20), et/ou dans laquelle le dispositif de fixation (44) est conçu de telle sorte que la section de bande de roulement (16) se déplace, une fois fixée, via le dispositif de fixation (44) dans la direction axiale (A) vers la jante (2), en particulier dans laquelle le dispositif de fixation (44) comprend une liaison vissée dont le serrage permet à la section de bande de roulement (16) de se déplacer dans la direction axiale (A) vers la section de montage (20).

22. Pièce rapportée (14) selon l'une quelconque des revendications précédentes, la pièce rapportée comprend une section de montage (22) qui comprend deux épaulements (174) pivotables l'un par rapport à l'autre, sur chacun des épaulements (174) étant disposé au moins un moyen de serrage, la distance des moyens de serrage disposés sur les épaulements (174) pouvant être modifiable par le pivotement des épaulements (174), dans laquelle la section de montage (22) comprend éventuellement un ensemble moyen de serrage dans lequel l'un des moyens de serrage est retenu, les deux épaulements (154) s'écartant de l'ensemble moyen de serrage et sont respectivement en pivotement par rapport à ce dernier.
